## Europäisches Patentamt

## European Patent Office

## Office européen des brevets

(19)

(11) **EP 1 689 162 A2**

(12) **EUROPÄISCHE PATENTANMELDUNG**

(43) Veröffentlichungstag:
**09.08.2006 Patentblatt 2006/32**

(51) Int Cl.:
***H04N 1/00*** *(2006.01)*

(21) Anmeldenummer: **06010938.6**

(22) Anmeldetag: **24.01.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **25.01.2000 DE 10003326**
 **15.03.2000 DE 10013390**
 **16.06.2000 DE 10029531**
 **16.06.2000 DE 10029584**
 **04.08.2000 DE 10039321**
 **23.08.2000 DE 10043305**
 **23.08.2000 DE 10043346**
 **27.10.2000 DE 10053868**

(62) Dokumentnummer(n) der früheren Anmeldung(en) nach Art. 76 EPÜ:
**01909684.1 / 1 252 756**

(71) Anmelder: **NewSight GmbH**
**07745 Jena (DE)**

(72) Erfinder:
• **Dörfel, Falk**
 **07549 Gera (DE)**

• **Holz, Andreas**
 **07749 Jena (DE)**
• **Klippstein, Markus**
 **07751 Jena-Münchenroda (DE)**
• **Relke, Ingo**
 **07747 Jena (DE)**
• **Scherzberg,Naujokat, Sven-Martin**
 **07774 Camburg (DE)**
• **Tzschoppe, Wolfang**
 **07751 Jena-Rothenstein (DE)**
• **Urtecho Valverde, Rudyard Isaac**
 **07749 Jena (DE)**
• **Grasnick, Armin**
 **07743 Jena (DE)**

(74) Vertreter: **Niestroy, Manfred**
**Patentanwälte**
**Geyer, Fehners & Partner**
**Sellierstrasse 1**
**07745 Jena (DE)**

Bemerkungen:
 Diese Anmeldung ist am 26 - 05 - 2006 als Teilanmeldung zu der unter INID-Kode 62 erwähnten Anmeldung eingereicht worden.

(54) **Anordnung zur räumlichen Darstellung**

(57) Die Erfindung betrifft eine Anordnung zur räumlichen Darstellung einer Szene oder eines Gegenstandes, bei der eine Vielzahl einzelner Bildelemente $\alpha_{ij}$ in einem Raster aus Spalten i und Zeilen j gleichzeitig sichtbar gemacht wird. Diese Anordnung umfaßt eine Einrichtung zur Wiedergabe eines Bildarrays aus einer Vielzahl von Bildelementen $\alpha_{ij}$, die in vorgegebener Zuordnung Informationen aus mehreren Ansichten $A_k$ (k=l...n) der Szene oder des Gegenstandes repräsentieren, wobei von den einzelnen Bildelementen Licht in unterschiedlichen Wellenlängenbereichen abgestrahlt wird. Die Anordnung umfaßt weiterhin eine in Blickrichtung eines Betrachters vor oder hinter der Bildwiedergabeeinrichtung angeordnete Filteranordnung (9) mit einem Filterarray (10) aus einer Vielzahl von Filterelementen, die Linearpolarisationsfilterelemente (11.2) sowie in bestimmten Wellenlängenbereichen durchlässige Wellenlängenfilterelemente $\beta_{pq}$ umfassen, mit einem Linearpolarisationsfilter (13) und, mit einem zwischen dem Filterarray (10) und dem Linearpolarisationsfilter (13) angeordneten ansteuerbaren optischen Medium (12), bevorzugt in Form von Flüssigkristallen, das in Abhängigkeit von seiner Ansteuerung eine Drehung der Polarisationsrichtung von hindurchtretendem, linearpolarisiertem Licht bewirkt.

Das optische Medium kann zwei Zustände mit verschiedenen Polarisationsrichtungen einnehmen. Im ersten Zustand kann ein Betrachter einen räumlichen Eindruck wahrnehmen, im zweiten Zustand weist die Filteranordnung (9) gegenüber der ersten Stellung eine erhöhte Transparenz auf.

EP 1 689 162 A2

Fig.14

**Beschreibung**

**Gebiet der Erfindung**

Die Erfindung bezieht sich auf ein Verfahren zur räumlichen Darstellung einer Szene/eines Gegenstandes, bei dem eine Vielzahl einzelner Bildelemente $\alpha_{ij}$ in einem Raster aus Spalten i und Zeilen j gleichzeitig sichtbar gemacht wird, wobei die Bildelemente $\alpha_{ij}$ Teilinformationen aus mehreren Ansichten $A_k$ (k=1...n) der Szene/des Gegenstandes wiedergeben und wobei benachbarte Bildelemente $\alpha_{ij}$ Licht verschiedener Wellenlängen $\lambda$ bzw. Wellenlängenbereiche $\Delta\lambda$ abstrahlen. Die Erfindung bezieht sich weiterhin auf Anordnungen zur Ausführung des Verfahrens.

**Stand der Technik**

Im Ergebnis der Bemühungen, Gegenstände, Landschaften, Einblicke in das Innere von Körpern und andere Dinge auf der Grundlage von Abbildungen für einen Betrachter räumlich wahrnehmbar darstellen zu können, ist im Verlaufe der Entwicklung eine Vielzahl von autostereoskopischen Verfahren entstanden, die man grob in Linsenrasterverfahren, Prismenrasterverfahren und Barriereverfahren unterscheiden kann.

Diesen Verfahren liegt das Prinzip zugrunde, mehrere verschiedene Perspektivansichten zwar gleichzeitig optisch wiederzugeben, durch geeignete Maßnahmen jedoch jedem Auge eines Betrachters nur eine oder auch mehrere dieser Perspektivansichten getrennt sichtbar zu machen, wodurch ein parallaktischer Effekt entsteht, der dem Betrachter eine räumliche Wahrnehmung erlaubt.

Bekanntermaßen treten bei diesen Verfahren bzw. bei der Benutzung von Anordnungen, die nach diesen Verfahren arbeiten, als unerwünschte Nebenerscheinung pseudoskopische Effekte auf, die zur Folge haben, daß der Betrachter ein bezüglich der räumlichen Tiefe umgekehrtes und damit unrealistisches Bild sieht. Auch entstehen in Abhängigkeit von der Ausgestaltung diesbezüglicher Anordnungen mehr oder weniger wahrnehmbar die allgemein als Moiré-Streifen bezeichneten Störungen. Die vorgenannten Erscheinungen lassen sich zwar verringern oder auch ausschließen, was in der Regel jedoch zusätzliche Maßnahmen erfordert, durch welche die Anordnungen verteuert oder hinsichtlich ihrer Benutzbarkeit nachteilig beeinträchtigt werden.

Es ist bekannt, zur optischen Wiedergabe der Perspektivansichten eines Gegenstandes zwecks autostereoskopischer Darstellung elektronisch ansteuerbare Displays zu verwenden, die bei Ansteuerung in der herkömmlichen Weise auch zur zweidimensionalen Darstellung von Ansichten geeignet sind. Diesbezüglich ist es für denkbare Anwendungsfälle wünschenswert, eine Umschaltung von der räumlichen autostereoskopischen in eine zweidimensionale Darstellung (und umgekehrt) derselben Szene bzw. desselben Gegenstandes vornehmen zu können. Nachteiligerweise verändert sich aber bei den bekannten Anordnungen dieser Art mit der Umschaltung die Bildqualität so, daß beispielsweise angezeigter Text in einer Betriebsart gut, in der anderen aber nur noch unzureichend lesbar ist. Dies tritt bei Anordnungen nach dem Barriereverfahren besonders dann auf, wenn die Barriere aus vertikal nebeneinander angeordneten, abwechselnd opaken und transparenten Streifen besteht. Moiré-Effekte treten hier außerdem noch auf und sorgen für ein unangenehmes Sehempfinden. Auch Linsenraster verringern durch die permanente optische Abbildung die Lesbarkeit von dargestelltem Text ganz wesentlich.

In EP 0791847 ist eine Anordnung beschrieben, bei der autostereoskopische Darstellungen unter Verwendung eines herkömmlichen RGB-LC-Displays in Verbindung mit schräg gestellten Lentikularen erzeugt werden, wobei vom Prinzip her Moire-Muster entstehen. Zur Reduzierung des Moire-Musters wird in dieser Veröffentlichung vorgeschlagen, die den Subpixeln zugeordneten Farbfilter in einer anderen Konfiguration anzuordnen. Nachteiligerweise ist zur Verwirklichung dieses Vorschlages ein verändernder Eingriff in bewährte Ausführungsformen und Fertigungsabläufe erforderlich, was in Anbetracht der industriellen Groß-Serienfertigung der üblichen RGB-LC-Displays mit zu hohem Aufwand verbunden wäre. Außerdem erstreckt sich die Wirkung der hier vorgeschlagenen Maßnahme nicht auch auf die Beseitigung der Nachteile im Falle von zweidimensionalen Darstellungen, so daß eine gleichbleibend hohe Bildgüte bei Umschaltung einer Darstellung von autostereoskopisch auf zweidimensional nicht gewährleistet ist. In der vorgenannten Schrift handelt es sich um eine Anordnung, bei der zur Erzeugung der autostereoskopischen Darstellung Linsen verwendet werden.

Auch in WO 97/02709 wird eine Änderung der Flächenstruktur eines Bildanzeigegerätes vorgeschlagen, um eine Verringerung des Moire-Effektes zu erzielen. Dabei soll die RGB-Pixel-Flächenstruktur so verändert werden, daß sich ein moireverminderter autostereoskopischer Effekt ergibt. Dabei wird das Barriereverfahren genutzt, indem transparente Schlitze, die von opaken Flächen umgeben sind, zur Anwendung kommen.

In US 5,936,774 werden als Grundlage der autostereoskopischen Darstellung strukturierte Lichtquellen, die u.a. auch hinsichtlich ihrer spektralen Eigenschaften strukturiert sein können, verwendet. Diese wirken mit linsenartigen optischen Bauelementen zusammen, die für jede Perspektivansicht eine Gruppe von in bestimmten Abständen erzeugten Lichtkonzentrationen auf vorgesehene Regionen von Lichtmodulatoren, zum Beispiel LC-Displays, abbilden. Auch bei diesen Anordnungen treten die bereits beschriebenen nachteiligen Effekte auf.

In JP 10333090 wird vorgeschlagen, zur Richtungsselektion des von den Perspektivansichten ausgehenden Lichtes eine farbige Beleuchtung und Farbfilter zu verwenden. Zusätzlich ist ein optisches Filter vorgesehen, das die Lichtmenge in vorgegebenen Wellenlängenbereichen verringern soll. Bei der hier beschriebenen Verfahrensweise handelt es sich um ein zweikanaliges Verfahren, bei dem lediglich zwei Perspektivansichten zugrunde liegen, von denen jeweils eine einem Auge des Betrachters zur Wahrnehmung angeboten wird. Die Breite eines Filterelementes bzw. die Breite eines Beleuchtungselementes entspricht der Offenlegung zufolge etwa der doppelten Breite eines Subpixels in einem LC-Display. Daraus folgt zwangsläufig, daß herkömmliche LC-Displays zur Erzeugung der strukturierten Beleuchtung nicht anwendbar sind, da bei diesen Displays eine RGBRGBRGB...-Farbstruktur der Subpixel vorgegeben ist. Außerdem führen die periodisch angeordneten und streifenförmig ausgebildeten Farbfilter auch hier zwangsläufig wieder zur Entstehung von Moire-Streifen. Weiterhin nachteilig ist der fest vorgegebene Abstand des Betrachters von der Bildebene, der sich mit den angegebenen Gleichungen bzw. Funktionen ergibt.

Die Offenlegungsschrift US 5,751,479 beschreibt ein autostereoskopisches Display, bei dem mit vertikal ausgedehnten streifenförmigen Rot-, Grün- und Blaufiltern für die ebenfalls streifenförmig ineinander verschachtelten Ansichten keilförmige Lichtausbreitungsrichtungen vorgegeben werden. Der Betrachter sieht dadurch mit jedem Auge ein aus vertikalen Streifen zusammengesetztes Bild. Die Anordnung vermittelt einem Betrachter, der seine Augen in vertikaler Richtung zur Bildoberfläche bewegt, stets die gleichen Ansichten, d.h. bei einer solchen Bewegung bleibt der wahrgenommene perspektivische Eindruck stets der gleiche.

Nachteilig bei dieser Anordnung ist, daß der Betrachter in einer Betrachtungsposition verharren muß. Fernerhin ist die Anzahl der möglichen darzustellenden Ansichten auf Grund der geometrischen Gegebenheiten auf maximal vier Ansichten beschränkt, wodurch auch die maximale Anzahl der Betrachter verhältnismäßig klein ist. Ein Großteil der Ausgestaltungsmöglichkeiten ist für lediglich nur einen Betrachter geeignet. Überdies treten schon bei geringster Dejustierung der Farbfilter gegen den Bildgeber starke Moire-Effekte auf.

Auch in JP 10186272 und JP 8194190 werden zur autostereoskopischen Darstellung Farb-LC-Displays in Verbindung mit farbigen Beleuchtungen bzw. Farbfiltern verwendet. Bei den hier vorgeschlagenen Anordnungen können der autostereoskopischen Darstellung mehrere Perspektivansichten zugrunde gelegt werden. Für die Filter sind ausschließlich die Primärfarben rot, grün und blau vorgesehen; die Beleuchtungsquellen und die vorgeschalteten Filter sind streng periodisch in der gleichen oder der entgegengesetzten Reihenfolge der Primärfarben auf der zugehörigen Farbmaske strukturiert. Dabei sind die Farbfilter streifenförmig ausgebildet, und die Breite der Filterelemente entspricht im wesentlichen dem Produkt aus der Breite eines Subpixels und der Anzahl der dargestellten Ansichten.

Hieraus folgt, daß die Breite eines Filterelementes mindestens doppelt so groß sein muß wie die eines Subpixels im LC-Display. Damit ist (ebenso wie bei der Anordnung nach JP 10333090) aufgrund der vorgegebenen RGBRGBRGB...-Subpixelstruktur die Verwendung kommerzieller LC-Displays für eine strukturierte Beleuchtung nicht möglich. Des weiteren werden in starkem Maße Moire-Streifen erzeugt, wenn beispielsweise acht Perspektivansichten der autostereoskopischen Darstellung einer Szene bzw. eines Gegenstandes zugrunde gelegt werden sollen. Dann nämlich hätte eine streifenförmige RGB-Sequenz eines Filters, unter Annahme einer Ausdehnung von $70\mu m$, wie derzeit für ein Subpixel üblich, auf dem LC-Display eine Breite von $3 \times 8 \times 70\mu m = 1,68mm$. Bei einer solchen Struktur entstehen Moiré-Streifen, wodurch die Darstellungsqualität gemindert wird.

In JP 8163605 ist wiederum eine Anordnung beschrieben, bei der zwei Perspektivansichten verwendet werden. Dabei sind die Pixel, auf denen die Ansichten dargestellt werden, jeweils eindeutig nur für eines der beiden Augen des Betrachters sichtbar. Zur Richtungsselektion des von den Pixeln ausgehenden Lichtes sind streifenförmige Farbfilter vor einem Display bzw. vor einem streifenförmigen RGB-Beleuchtungselement angeordnet. Auch hier treten die Nachteile auf, wie sie bereits weiter oben beschrieben sind.

Nach der Beschreibung in JP 8146347 korrespondiert zum Zwecke der Richtungsselektion eine separate Transparent-Opak-Barriere mit einem Farbfilter. Dabei sind die transparenten Bereiche der Barriere bzw. die transluzenten Bereiche des Farbfilters jeweils entweder schlitz- oder kreisförmig ausgebildet. Hier wie auch bei der Anordnung nach JP 8146346, die ein Zweikanalverfahren mit streifenförmigen, vertikalen Farbfiltern für die Richtungszuordnung der beiden Perspektivansichten verwendet, treten ebenfalls die beschriebenen Nachteile auf.

In EP-A-0 744 872 ist ein zweikanaliges Verfahren zur stereoskopischen Darstellung auf der Grundlage von zwei Perspektivansichten eines Gegenstandes oder einer Szene beschrieben. Dabei werden die Bildinformationen von beiden Perspektivansichten jeweils gesondert und ausschließlich für das rechte beziehungsweise das linke Auge nur eines einzigen Betrachters sichtbar gemacht. Sind mehr als ein Paar solcher Perspektivansichten verfügbar, die den Gegenstand bzw. die Szene aus unterschiedlichen Betrachtungspositionen darstellen, so werden diese stets paarweise zeitlich nacheinander zur Betrachtung angeboten, so daß mit dem Wechsel von Paar zu Paar die Betrachtung zwar stets stereoskopisch, jedoch aus verschiedenen korrespondierenden Betrachtungspositionen möglich ist. Dabei ist nach EP-A-0 744 872 eine Synchronisierung zwischen der Bildwiedergabe und der strukturierten Barriere, die zur Erzeugung von jeweils zwei stereoskopischen Ansichten ausgebildet ist, vorgesehen.

In EP-A-0 860 728 ist ein autostereoskopisches Display beschrieben, das ebenfalls zur Verwendung für zweikanalige Darstellungsverfahren geeignet ist. Auch hier werden gleichzeitig stets auch nur Bildinformationen aus zwei Perspektivansichten sichtbar gemacht, wovon die eine dem rechten und die andere dem linken Auge eines Betrachters zugeordnet ist. Die weiterhin dort im Detail beschriebene technische Lösung dient dazu, den Betrachter auf Sichtbereiche hinzuweisen, in denen eine pseudoskopische Wahrnehmung möglich ist.

**Beschreibung der Erfindung**

Von diesem Stand der Technik ausgehend liegt der Erfindung die Aufgabe zugrunde, mit wenigen, bevorzugt handelsüblichen optischen Baugruppen eine autostereoskopische Darstellung gleichzeitig für eine Vielzahl von Betrachtern bei verbesserter Wahrnehmbarkeit zu erreichen.

Erfindungsgemäß werden bei einem Verfahren der eingangs beschriebenen Art für das von den Bildelementen $\alpha_{ij}$ ausgestrahlte Licht Ausbreitungsrichtungen vorgegeben, die von der Wellenlänge dieses Lichtes abhängig sind, wobei sich die Ausbreitungsrichtungen innerhalb eines Betrachtungsraumes, in dem sich der/die Betrachter aufhalten, in einer Vielzahl von Schnittpunkten, die jeweils einer Betrachtungsposition entsprechen, kreuzen. Von jeder Betrachtungsposition aus nimmt ein Betrachter mit einem Auge überwiegend Bildelemente $\alpha_{ij}$ einer ersten Auswahl und mit dem anderen Auge überwiegend Bildelemente $\alpha_{ij}$ einer zweiten Auswahl aus den Ansichten $A_k$ (k=1...n) wahr.

Ein Bildelement $\alpha_{ij}$ sei in diesem Zusammenhang eine selbstleuchtende oder beleuchtete Fläche geringer Größe mit einem Flächeninhalt von etwa 10.000 $\mu m^2$ bis zu einigen $mm^2$, auf der ein minimaler Ausschnitt einer der Ansichten $A_k$ (k=1...n), im folgenden als Teilinformation einer solchen Ansicht $A_k$ (k=1...n) bezeichnet, an der Stelle i,j wiedergegeben werden kann. Vorteilhaft kann mit dem Indexpaar i,j auch die Position in der Ansicht $A_k$ bezeichnet sein, von der die Teilinformation stammt, die auf dem Bildelement $\alpha_{ij}$ wiedergegeben wird - sofern auch die Ansichten $A_k$ (k=1...n) in Raster aus Spalten i und Zeilen j gegliedert sind.

Unter einer Auswahl aus den Ansichten $A_k$ (k=1 ...n) sind die Ansichten $A_k$ zu verstehen, deren Bildelemente $\alpha_{ij}$ entweder überwiegend für das eine oder für das andere Auge sichtbar sein sollen. Beispielsweise können die Ausbreitungsrichtungen für Licht, das von Bildelementen $\alpha_{ij}$ kommt, auf denen Teilinformationen der (einer ersten Auswahl entsprechenden) Ansichten $A_k$ (k=1...4) dargestellt sind, so vorgegeben werden, daß dieses Licht bzw. diese Teilinformationen überwiegend das linke Auge eines sich im Betrachtungsraum aufhaltenden Betrachters erreichen, während die Ausbreitungsrichtungen für das Licht, das von Bildelementen $\alpha_{ij}$ kommt, auf denen Teilinformationen der übrigen (einer zweiten Auswahl entsprechenden) Ansichten $A_k$ (k=5...n) dargestellt sind, so vorgegeben werden, daß dieses Licht bzw. diese Teilinformationen überwiegend in das rechte Auge desselben Betrachters gelangen. In diesem Falle umfaßt demnach die erste, für das linke Auge vorgesehene Auswahl die Ansichten $A_1$, $A_2$, $A_3$ und $A_4$. Die zweite, für das linke Auge vorgesehene Auswahl würde hierbei die Ansichten $A_5$, $A_6$ ... $A_n$ umfassen.

Dabei seien ausdrücklich auch die Fälle in das erfindungsgemäße Verfahren eingeschlossen, in denen das von einem Bildelement $\alpha_{ij}$ kommende Licht nicht vollständig, sondern nur zum Teil in das betreffende Auge des Betrachters gelangt, was beispielhaft bei partieller Abdeckung eines Bildelement $\alpha_{ij}$ etwa durch Anordnungsteile, denkbar ist.

Die Bedingung, daß ein Auge "überwiegend" Bildelemente $a_{ij}$ bzw. auf diesen Bildelementen $a_{ij}$ wiedergegebene Teilinformationen wahrnimmt, ist auch dann erfüllt, wenn dieses Auge beispielsweise 80% der Bildelemente $a_{ij}$ sieht, die Teilinformationen der Ansicht $A_1$ wiedergeben, während das andere Auge zwar ebenfalls solche Bildelemente $a_{ij}$, die Teilinformationen der Ansicht $A_1$ wiedergeben, sehen kann, jedoch weniger als 80%.

Bevorzugt werden die Ausbreitungsrichtungen durch eine Vielzahl von Wellenlängenfiltern $\beta_{pq}$ vorgegeben, wobei jeweils ein Bildelement $\alpha_{ij}$ mit mehreren zugeordneten Wellenlängenfilterelementen $\beta_{pq}$ oder ein Wellenlängenfilterelement $\beta_{pq}$ mit mehreren zugeordneten Bildelementen $\alpha_{ij}$ derart korrespondiert, daß jeweils die Verbindungsgerade zwischen der Flächenmitte des sichtbaren Abschnittes eines Bildelementes $\alpha_{ij}$ und der Flächenmitte des sichtbaren Abschnittes eines Wellenlängenfilterelementes $\beta_{pq}$ einer Ausbreitungsrichtung entspricht.

Dabei ist es von Vorteil, wenn die Wellenlängenfilterelemente $\beta_{pq}$ in Arrays mit Spalten p und Zeilen q angeordnet und eines oder mehrere solcher Arrays dem Raster mit den Bildelementen $\alpha_{ij}$, bezogen auf die Blickrichtung eines Betrachters, in einem festen Abstand z vor- und/oder nachgeordnet sind.

Zwecks Vorgabe der Ausbreitungsrichtungen werden den Bildelementen $\alpha_{ij}$, die zugeordnete Teilinformationen der Ansichten $A_k$ (k=1 ...n) wiedergeben, genau definierte Positionen i,j auf dem Raster zugewiesen. Den Wellenlängenfiltern $\beta_{pq}$, die mit diesen Bildelementen $\alpha_{ij}$ korrespondieren sollen, werden definierte Positionen p,q auf dem Array zugewiesen. Die Ausbreitungsrichtungen ergeben sich dann aus den Positionen der Bildelemente $\alpha_{ij}$ auf dem Raster und den Positionen der korrespondierenden Wellenlängenfilterelemente $\beta_{pq}$ auf dem Array in Verbindung mit dem Abstand z zwischen Raster und Array.

Die Zuordnung von Teilinformationen der Ansichten $A_k$ (k=1 ...n) zu Bildelementen $\alpha_{ij}$ wie auch die Positionierung dieser Bildelemente $\alpha_{ij}$ auf dem Raster kann erfindungsgemäß nach folgender Funktion (F1) vorgenommen werden

$$(F1) \qquad k = i - c_{ij} \cdot j - n \cdot IntegerPart\left[\frac{i - c_{ij} \cdot j - 1}{n}\right].$$

Hierin sind bezeichnet mit

- i der Index eines Bildelementes $\alpha_{ij}$ in einer Zeile des Rasters,
- j der Index eines Bildelementes $\alpha_{ij}$ in einer Spalte des Rasters,
- k die fortlaufende Nummer der Ansicht $A_k$ (k=1 ...n), aus der die Teilinformation stammt, die auf einem bestimmten Bildelement $\alpha_{ij}$ wiedergegeben werden soll,
- n die Gesamtzahl der jeweils verwendeten Ansichten $A_k$ k(k= 1 ... n),
- $c_{ij}$ eine wählbare Koeffizientenmatrix zur Kombination bzw. Mischung der verschiedenen von den Ansichten $A_k$ (k=1 ...n) stammenden Teilinformation auf dem Raster und
- *IntegerPart* eine Funktion zur Erzeugung der größten ganzen Zahl, die das in eckige Klammern gesetzte Argument nicht übersteigt.

Mit anderen Worten: Die Indizes (i,j) bezeichnen die Positionen von Bildelementen $\alpha_{ij}$, für die anzugeben ist, aus welcher der Ansichten $A_k$ (k=1...n) die darzustellende Teilinformation bezogen werden soll. Dabei steht i für den horizontalen Index (mit Werten von 1 bis zur horizontalen Bildelementauflösung, das ist im Falle der Darstellung der Teilinformationen auf RGB-Subpixeln der dreifache Wert der Pixelauflösung) und j für den vertikalen Index (mit Werten von 1 bis zum Wert der vertikalen Bildelementauflösung).

Soll für eine beliebige, aber feste Anzahl n von Ansichten $A_k$ (k=1...n), die alle die gleiche Bildauflösung bzw. das gleiche Format besitzen, das auf dem Raster darzustellende, aus Teilinformationen der Ansichten $A_k$ (k=1...n) zu kombinierende Gesamtbild ermittelt werden, so ist für die Kombinationsvorschrift noch folgendes zu berücksichtigen:

Die Koeffizientenmatrix $c_{ij}$ kann als Einträge Werte besitzen, die reellen Zahlen entsprechen. Dabei sind für i und j natürliche Zahlen größer "Null" im oben genannten Wertebereich möglich.

Das auf dem Raster dargestellte, aus den verschiedenen Teilinformationen der Ansichten $A_k$ (k=1...n) kombinierte Gesamtbild wird bei Vorgabe dieser Parameter entsprechend der oben angegebenen Funktion erzeugt, indem alle möglichen Indexpaare i,j durchlaufen werden.

Als weitere Voraussetzung für die Erzeugung einer räumlichen Darstellung wird erfindungsgemäß bestimmt, in welcher Struktur die Wellenlängenfilterelemente $\beta_{pq}$, die im Zusammenwirken mit den Bildelementen $\alpha_{ij}$ die Ausbreitungsrichtungen vorgeben, innerhalb des Arrays mit Spalten p und Zeilen q zu positionieren sind.

Die Wellenlängenfilterelemente $\beta_{pq}$ weisen Transparenzwellenlängen- oder Transparenzwellenlängenbereiche $\lambda_b$ auf, die bevorzugt der Wellenlänge oder dem Wellenlängenbereich $\lambda_a$ des von den korrespondierenden Bildelementen $\alpha_{ij}$ abgestrahlten Lichtes entsprechen. Für besondere Ausgestaltungen der Erfindung, die weiter unten noch erläutert werden, können die Wellenlängenfilterelemente $\beta_{pq}$ beispielsweise auch Transparenzwellenlängen/-wellenlängenbereiche $\lambda_b$ aufweisen, die außerhalb des Spektrums des sichtbaren Lichtes liegen, so daß das sichtbare Licht durch diese Wellenlängenfilterelemente $\beta_{pq}$ abgeblockt wird.

Eine Transparenzwellenlänge/ ein Transparenzwellenlängenbereich $\lambda_b$ kann auch für eine Kombination aus verschiedenen Wellenlängenbereichen stehen (z.B. transparent für Blau und Rot, nicht für Grün). Der Index b kann demnach Werte von 1 bis zur Maximalzahl der festgelegten Transparenzwellenlängen/-wellenlängenbereiche $\lambda_b$ haben. Im Falle eines Wellenlängenfilter-Arrays, das an vorgegebenen, durch das Indexpaar p,q definierten Positionen Licht der Grundfarben R,G,B passieren lassen soll, während an anderen solcher Positionen das gesamte sichtbare Spektrum abgeblockt werden soll, ist $b_{max}$ =4. Dabei entsprechen beispielsweise die Transparenzwellenlängen/-wellenlängenbereiche $\lambda_1$, $\lambda_2$ und $\lambda_3$ rotem (R), grünem (G) oder blauem (B) Licht und die Transparenzwellenlänge/der Transparenzwellenlängenbereich $\lambda_4$ liegt vollständig außerhalb des Spektralbereiches des gesamten sichtbaren Lichtes. Eine solche Transparenzwellenlänge/ein solcher Transparenzwellenlängenbereich $\lambda_4$ ergibt dann einen opaken Filter (S).

Die Wellenlängenfilterelemente $\beta_{pq}$ auf dem Array können insofern als transluzente oder transparente Teile eines Maskenbildes angesehen werden. Die Position eines jeden Wellenlängenfilters $\beta_{pq}$ ist durch den Index p,q eindeutig festgelegt. Jedem Wellenlängenfilterelement $\beta_{pq}$ wird eine bestimmte Transparenzwellenlänge bzw. ein bestimmter Transparenzwellenlängenbereich $\lambda_t$ zugeordnet. Dabei erfolgt die Strukturierung der Wellenlängenfilterelemente $\beta_{pq}$ zu einem Maskenbild - analog zur Kombination der Teilinformationen der verschiedenen Ansichten $A_k$ (k=1...n) zu einem Gesamtbild - nach folgender Vorschrift (F2):

$$(F2) \qquad b = p - d_{pq} \cdot q - n_m \cdot IntegerPart \left[ \frac{p - d_{pq} \cdot q - 1}{n_m} \right],$$

mit

- p dem Index eines Wellenlängenfilters $\beta_{pq}$ in einer Zeile des Arrays,
- q dem Index eines Wellenlängenfilterelementes $\beta_{pq}$ in einer Spalte des Arrays,
- b einer ganzen Zahl, die für ein Wellenlängenfilterelement $\beta_{pq}$ an der Position p,q eine der vorgesehenen Transparenzwellenlängen/-wellenlängenbereiche $\lambda$ festlegt und Werte zwischen 1 und $b_{max}$ haben kann,
- $n_m$ einem ganzzahligen Wert größer "Null", der bevorzugt der Gesamtzahl n in dem Kombinationsbild dargestellten Ansichten $A_k$ entspricht,
- $d_{pq}$ einer wählbaren Maskenkoeffizientenmatrix zur Variation der Erzeugung eines Maskenbildes und
- *Integerpart* einer Funktion zur Erzeugung der größten ganzen Zahl, die das in eckige Klammern gesetzte Argument nicht übersteigt.

Zu bevorzugen sind Ausgestaltungen der Erfindung, bei denen $b_{max}$ und $n_m$ gleich groß sind.

Die wählbare Koeffizientenmatrix $d_{pq}$ kann als Einträge Werte besitzen, die reellen Zahlen entsprechen. Dabei sind für p und q, die (wie bereits dargestellt) Positionen innerhalb des Wellenlängenfilter-Arrays beschreiben, natürliche Zahlen größer "Null" möglich.

Der Erzeugung des kombinierten Gesamtbildes aus den Teilinformationen der Ansichten $A_k$ (k=1...n) und der Erzeugung des Maskenbildes liegen demzufolge gleichartige oder zumindest artverwandte Vorschriften zugrunde. Die Wellenlängenfilterelemente $\beta_{pq}$ als Elemente des Maskenbildes besitzen vorzugsweise etwa die gleiche Flächenausdehnung wie die Bildelemente $\alpha_{ij}$.

Der letztgenannte Sachverhalt ist besonders vorteilhaft im Zusammenhang mit der Verringerung von Moire-Effekten anwendbar. Sichtbare periodische Überlagerungen des Rasters aus Bildelementen $\alpha_{ij}$ zur Bildwiedergabe mit Arrays aus Wellenlängenfiltern $\beta_{pq}$ als Maskenbild können auf diese Weise definiert verringert werden, wodurch auch Moire-Effekte vermindert werden.

Auch allein die Tatsache, daß jedes Maskenbild definiert wellenlängenselektiv strukturiert ist, kann dazu ausgenutzt werden, Moire-Effekte durch geeignet strukturierte Maskenbilder wesentlich zu vermindern. Dies geschieht beispielsweise, wenn die Wellenlängenfilterelemente $\beta_{pq}$ für die Grundfarben R,G,B jeweils auf einem im wesentlichen opaken Hintergrundmuster in Form eines gleichschenkligen Dreiecks angeordnet werden. Dann nämlich ergibt sich für jede Grundfarbe R,G,B nicht hauptsächlich eine bevorzugte Richtung der Überlagerung mit direkt darunter bzw. darüber liegenden Bildelementen $\alpha_{ij}$ jeweils gleicher Grundfarbe in der Ebene des Arrays, sondern es ergeben sich viele verschiedene Richtungen, wodurch die Wahrnehmbarkeit des Moire deutlich gehemmt wird.

Es können für verschiedene b auch Transparenzwellenlängen/-wellenlängenbereiche $\lambda_b$ gleichen Inhalts vorgegeben werden: gilt beispielsweise $b_{max}$=8, können $\lambda_1$ bis $\lambda_3$ für R,G,B in dieser Reihenfolge und $\lambda_4$ bis $\lambda_8$ für Wellenlängen außerhalb des sichtbaren Lichts stehen, wobei dann $\lambda_1$ bis $\lambda_3$ die Farben R,G,B transmittieren und $\lambda_4$ bis $\lambda_8$ das sichtbare Spektrum abblocken. Dann liefert die Kombinationsvorschrift für die Parameter $d_{pq}$ =-1=const und $n_m$ =8 ein Maskenbild, das periodisch auf opakem Hintergrund schräge Streifen in den RGB-Farben erzeugt. Zwischen diesen farbigen Streifen bleiben jeweils fünf der Filterelemente $\beta_{pq}$ in jeder Zeile opak. Der Winkel der Schrägstellung der farbigen Streifen hängt dabei ab von den Abmaßen der Filterelemente $\beta_{pq}$.

In einer weiteren beispielhaften Ausgestaltung können wiederum mehrere der Transparenzwellenlängen/-wellenlängenbereiche $\lambda_b$ die gleichen Filterwirkungen haben: Seien $\lambda_1...\lambda_7$ Wellenlängenbereiche, die das gesamte sichtbare Spektrum abblocken, $\lambda_8$ ein für das sichtbare Spektrum transparenter Filterbereich und sei weiterhin $n_m$=8 sowie $d_{pq}$=-1=const, so ergibt sich nach der Vorschrift zur Erzeugung eines Maskenbildes ein im wesentlichen opakes Maskenbild, welches auf der Fläche gleichmäßig verteilte schräge transparente Streifen beinhaltet, die etwa ein Achtel der gesamten Fläche einnehmen.

Die Wellenlängenfilterelemente $\beta_{pq}$ und die Bildelemente $\alpha_{ij}$ sind einander also durch Wellenlängen bzw. Wellenlängenbereiche zugeordnet, d.h. ein Wellenlängenfilterelement $\beta_{pq}$ einer bestimmten Transparenzwellenlänge/-wellenlängenbereich $\lambda_b$ kann jeweils das Licht derjenigen Bildelemente $\alpha_{ij}$ passieren lassen, die Licht ausstrahlen, das dieser Transparenzwellenlänge entspricht bzw. innerhalb des Transparenzwellenlängenbereiches $\lambda_b$ liegt. Es kann aber auch, wie bereits dargestellt, vorgesehen sein, daß Wellenlängenfilterelemente $\beta_{pq}$ das von zugeordneten Bildelementen $\alpha_{ij}$ kommende Licht abblocken.

Der in Blickrichtung gemessene Abstand z zwischen dem Array aus Wellenlängenfiltern $\beta_{pq}$ und dem Raster aus Bildelementen $\alpha_{ij}$ ist ein Parameter, der unter Berücksichtigung der Breite der Bildelemente $\alpha_{ij}$, der Breite der

Wellenlängenfilterelemente $\beta_{pq}$ und der Größe des Betrachtungsraumes festzulegen ist, und zwar so, daß bei einer vorgegebenen Kombination der einzelnen Teilinformationen der Ansichten $A_k$ (k=1 ...n) auf dem Raster innerhalb des Betrachtungsraumes die dargestellte Szene/der Gegenstand dreidimensional wahrnehmbar ist.

Beispielhaft kann der Abstand z zwischen dem Array aus Wellenlängenfiltern $\beta_{pq}$ und dem Raster aus Bildelementen $\alpha_{ij}$, in Blickrichtung gemessen, nach folgender Gleichung (F3) festgelegt werden:

$$\text{(F3)} \qquad \frac{z}{s_p} = \frac{d_a}{p_d}$$

Hierin bedeutet:

- $s_p$ den mittleren horizontalen Abstand zwischen zwei Wellenlängenfiltern $\beta_{pq}$, wenn das Array mit den Wellenlängenfiltern $\beta_{pq}$ in Blickrichtung eines Betrachters hinter dem Raster aus Bildelementen $\alpha_{ij}$ angeordnet ist, oder den mittleren horizontalen Abstand zwischen zwei Bildelementen $\alpha_{ij}$ wenn das Raster aus Bildelementen $\alpha_{ij}$ in Blickrichtung eines Betrachters hinter dem Array mit den Wellenlängenfiltern $\beta_{pq}$ angeordnet ist,
- $p_d$ die mittlere Pupillendistanz bei einem Betrachter und
- $d_a$ einen wählbaren Betrachtungsabstand, der im wesentlichen dem mittleren aller im gesamten Betrachtungsraum möglichen Abstände zwischen dem Raster aus Bildelementen $\alpha_{ij}$ und einem Betrachter bzw. einer Betrachtungsposition entspricht.

In der Praxis sind auch andere Vorgehensweisen zur Ermittlung des Abstandes z möglich. Dabei gilt generell auch der Zusammenhang: Je größer z, desto größer bzw. entfernter ist der Betrachtungsraum ausgebildet.

Werden nun beispielsweise zur Erzeugung eines Maskenbildes mit $b_{max}$ =4 drei Transparenzwellenlängen/- wellenlängenbereiche $\lambda_1,\lambda_2,\lambda_3$ vorgegeben für R,G,B und ein weiterer Transparenzwellenlängenbereich $\lambda_4$, mit dem das sichtbare Licht komplett abgeblockt werden kann, so ergibt sich unter Verwendung der Koeffizientenmatrix $d_{pq}$, die man nach der Vorschrift (F4) erzeugen kann

$$\text{(F4)} \qquad d_{pq} = \frac{p-1-(p \bmod 3)}{q}\delta\big((p+q)\bmod 8\big) + (\frac{p-4}{q})\delta\big[\delta\big((p+q)\bmod 8\big)\big]$$

ein für die räumliche Darstellung eines Gegenstandes/einer Szene auf der Grundlage von n=8 Ansichten $A_k$ (k=1...n) gut geeignetes Maskenbild.

Hierbei sei $n_m$=8; "mod" bezeichnet die Restklasse in bezug auf einen Teiler. Die Funktion $\delta$ gibt für alle Argumente ungleich "Null" den Wert "Null"; für das Argument "Null" ergibt sich der Funktionswert 1, denn es gilt $\delta(0)=1$ und $\delta(x\neq0)=0$. Die Indizes p,q durchlaufen alle möglichen Werte, die innerhalb des Maskenbildes liegen; das sind bei der Darstellung auf einem Farb-LC-Display mit XGA-Auflösung z.B. für p Werte von 1 bis 1024*3 und für q Werte von 1 bis 768.

Breitet sich das von den einzelnen Bildelementen $\alpha_{ij}$ abgestrahlte Licht in einer Weise aus, die erfindungsgemäß vorgegeben ist, entstehen innerhalb eines Betrachtungsraumes, der sich vor dem Raster mit den Bildelementen $\alpha_{ij}$ befindet, eine Vielzahl von Betrachtungspositionen, von denen aus jeder Betrachter, der sich innerhalb dieses Betrachtungsraumes befindet, mit einem Auge überwiegend Bildelemente $\alpha_{ij}$ einer ersten Auswahl und mit dem anderen Auge überwiegend Bildelemente $\alpha_{ij}$ einer zweiten Auswahl aus den Ansichten $A_k$ (k=1...n) sieht, wodurch die Szene bzw. der Gegenstand durch den jeweiligen Betrachter räumlich wahrgenommen wird.

Die Vielzahl solcher Betrachtungspositionen ist dabei so groß und die Betrachtungspositionen liegen so dicht nebeneinander, daß Betrachter sich innerhalb des Betrachtungsraumes bewegen können, während sich ihre Augen quasi stets in einer solchen Betrachtungsposition befinden, denn die Betrachtungspositionen entsprechen jeweils Schnittpunkten der definiert vorgegebenen Ausbreitungsrichtungen und die für das Auge sichtbaren Lichtstrahlen haben einen zwar kleinen, jedoch vorhandenen Flächenquerschnitt.

Als Betrachtungsraum sei im Zusammenhang mit dieser Erfindung der Bereich zu verstehen, in dem sich einer oder mehrere Betrachter aufhalten bzw. bewegen und dabei, sofern sie in Richtung zum Raster blicken, die Szene bzw. den Gegenstand räumlich wahrnehmen können. Je nach der Struktur des Maskenbildes und verwendeter Anzahl n von Ansichten $A_k$ (k=1...n) sind so Blickwinkel auf das Raster von über 45° möglich, d.h. der Betrachtungsraum kann einen von der Mittelsenkrechten des Rasters ausgehenden Öffnungswinkel von über 45° haben.

Dieses neue Verfahren zur autostereoskopischen Darstellung unterscheidet sich gegenüber den aus dem Stand der Technik bekannten einschlägigen Verfahren wesentlich. Während bei den bekannten Verfahren Teilinformationen einer Ansicht ausschließlich nur für das eine oder das andere Auge des Betrachters sichtbar sein sollen, läßt dieses neue Verfahren absichtlich zu, daß Teilinformationen einer oder mehrerer Ansichten für beide Augen des Betrachters sichtbar sind.

Als Voraussetzung für die räumliche Wahrnehmung ist die Bedingung zu erfüllen, daß jeweils ein Auge mehr Teilinformationen derselben Ansicht sieht als das andere Auge. Allerdings wird bei Einhaltung der erfindungsgemäß vorgegebenen Ausbreitungsrichtungen erreicht, daß die Anzahl "falscher", weil eigentlich dem anderen Auge zuzuordnender Teilinformationen einen Grenzwert nicht überschreitet, von dem an die räumliche Wahrnehmung nicht mehr in ausreichender Qualität möglich ist. Dabei ist es vorteilhaft, jedoch nicht zwingend erforderlich, als Ansichten der Szene/des Gegenstandes Perspektivansichten zu verwenden. Auch der Einsatz von Orthogonalprojektionen als Ansichten führt zu ausgezeichneten Ergebnissen.

Soll etwa ein Gegenstand auf der Grundlage von beispielhaft acht Perspektivansichten $A_k$ (k=1...8) dreidimensional dargestellt werden, ist bei erfindungsgemäß vorgegebenen Ausbreitungsrichtungen von der Vielzahl der Betrachtungspositionen aus die räumliche Wahrnehmung auch dann in hoher Qualität gewährleistet, weil das rechte Auge des Betrachters zwar nicht ausschließlich, aber überwiegend Bildelemente $\alpha_{ij}$ mit Teilinformationen beispielhaft der Ansichten $A_1$ bis $A_4$ und das linke Auge des Betrachters zwar nicht ausschließlich, aber überwiegend Bildelemente $\alpha_{ij}$ mit Teilinformationen der Ansichten $A_5$ bis $A_8$ wahrnimmt, wobei für das linke Auge in begrenzter Anzahl auch Bildelemente $\alpha_{ij}$ oder Teile davon mit Teilinformationen der Ansichten $A_1$ bis $A_4$ und für das rechte Auge in begrenzter Anzahl auch Bildelemente $\alpha_{ij}$ oder Teile davon mit Teilinformationen der Ansichten $A_5$ bis $A_8$ sichtbar sind.

Die dabei für beide Augen sichtbaren "falschen" Bildelemente $\alpha_{ij}$ führen zwar prinzipiell zu einer geringen Verfälschung des dreidimensionalen Eindrucks, was jedoch innerhalb des Betrachtungsraumes nicht den in der Tiefe korrekten 3D-Eindruck zerstört.

Hieraus ergibt sich auch ein wesentlicher Vorteil des erfindungsgemäßen Verfahrens, der darin besteht, daß dessen Umsetzung und Nutzung mit Anordnungen möglich ist, die unter Verwendung weniger handelsüblicher Serienprodukte, wie beispielsweise Farb-LC-Displays sowohl für die Wiedergabe der Teilinformationen auf den Bildelementen $\alpha_{ij}$ als auch für die Erzeugung des Maskenbildes mit Wellenlängenfiltern $\beta_{pq}$, kostengünstig herstellbar sind. Wenn die Subpixel R,G,B eines Farb-LC-Displays als Bildelemente $\alpha_{ij}$ dienen und diese die Teilinformationen der Ansichten $A_k$ (k=1 ...n) wiedergeben, kann eine erstaunliche Farbtreue und Farbbrillanz erreicht werden.

Insbesondere gegenüber den im Stand der Technik bekannten Verfahren zur räumlichen Darstellung, welche auf abbildenden optischen Elementen wie z.B. Lentikularen beruhen, bietet der Einsatz von Wellenlängenfiltern eine Vielzahl von bedeutenden Vorteilen:

Die Filterelemente erzeugen keine optische Abbildung und damit auch keine Abbildungsfehler. Optische Abbildungen auf der Basis von einstufigen Linsensystemen dagegen sind stets mit Abbildungsfehlern verbunden. Asphärische Linsen von der Ausdehnung der Filterelemente im Filterarray sind gegenwärtig mit vertretbarem Aufwand nicht herstellbar.

Weiterhin sind beim Einsatz von beispielsweise Lentikularschirmen Lichtreflexe von Umgebungslichtpunkten stets über die ganze Breite der Lentikularoberfläche wahrnehmbar, was durch die Form dieser Oberfläche begründet ist. Im Gegensatz hierzu werden beim erfindungsgemäßen Verfahren punktförmige Umgebungslichtquellen auch nur punktförmig als Störlichtreflex reflektiert; derlei Effekte können überdies noch durch den Einsatz von reflexmindernden Schichten auf dem Trägermaterial des Filterarrays oder auf dem Filterarray selbst minimiert werden.

Bei den Lentikularverfahren bilden die Lentikulare für den Betrachter die Bildelemente ab; genauer gesagt füllt dabei ein Bildelement für den Betrachter zumeist die ganze Breite eines Lentikulars aus, wodurch eine "gröbere" wahrgenommene Größe der Bildelemente resultiert. Demgegenüber bleibt beim erfindungsgemäßen Verfahren jedes für jeden Betrachter sichtbare Bildelement ohne optische Abbildung und somit unvergrößert wahrnehmbar.

Das erfindungsgemäße Verfahren bietet weiterhin den Vorteil, daß je nach Auflösung des zur Bildwiedergabe verwendeten Rasters die Möglichkeit besteht, der dreidimensionalen Darstellung quasi beliebig viele, jedoch wenigstens zwei Ansichten einer Szene bzw. eines Gegenstandes zugrunde zu legen.

Außerdem ist es möglich, die Lesbarkeit von dargestelltem Text - verglichen mit bekannten Schwarz-Weiß-Barriereverfahren - wesentlich zu verbessern. Werden nämlich in einer Anordnung, die im Rahmen dieser Erfindung liegt, wellenlängenabhängige Maskenbildstrukturen ganz ohne opake Flächen verwendet und gewöhnlicher Text untergelegt, so ist - im Gegensatz zu einer Schwarz-Weiß-Barriere für vier Ansichten, bei der im Mittel nur ein Teil, nämlich ein Viertel der dargestellten Textfläche sichtbar ist - der Text unter jedem Wellenlängenfilterelement $\beta_{pq}$ sichtbar. Dies erleichtert die Textlesbarkeit ganz wesentlich.

Darüber hinaus kann in diesem Falle für ein dreidimensional dargestelltes Bild (z.B. bei Verwendung von Bandpaßfiltern mit einer Transmission von 100%) bezogen auf die mittlere Flächenleuchtdichte um etwa ein Drittel heller sein als das gleiche, jedoch mit einer Schwarz-Weiß-Barriere erzeugte dreidimensionale Bild.

Ein besonderer Vorteil des erfindungsgemäßen Verfahrens bzw. der Anordnungen zur Ausübung dieses Verfahrens besteht darin, daß Wellenlängenfilter-Arrays fertigungstechnisch verhältnismäßig einfach herstellbar sind. Sie können beispielsweise auf Glas oder ein anderes Trägermaterial aufgedruckt bzw. eingeprägt, als Folie gedruckt oder durch einen Belichtungsvorgang generiert werden. In einer besonderen Ausgestaltung ist auch eine Ausführung als holografisches optisches Element denkbar.

Zu dem Vorteil günstiger und vielseitiger Möglichkeiten der Herstellung kommen weiterhin vorteilhafte optische Eigenschaften der Wellenlängenfilter-Arrays im Hinblick auf die Justage: So erzeugt beispielsweise eine geringfügige Verdrehung des Filterarrays in Betrachtungsrichtung nicht notwendigerweise starke und unangenehme Moire-Effekte, was den Montageaufwand wesentlich reduziert.

Bei Einsatz von durchsichtigen Trägermaterialen für die Wellenlängenfilter-Arrays treten Strahlversätze (Parallelverstätze) der Lichtausbreitungsrichtungen auf, die den räumlichen Eindruck lediglich vernachlässigbar beeinflussen. Weiterhin wirkt es sich auf die Qualität der räumlichen Wahrnehmung nur unwesentlich aus, wenn die Wellenlängenfilterelemente $\beta_{pq}$ nicht als Idealfilter (100%-Kantenfilter) ausgebildet sind. Daraus folgt, daß gegenwärtig verfügbare Filterfarben auch mit nicht idealen Kennlinien für die Herstellung des Wellenlängenfilter-Arrays geeignet sind.

Die Anwendung des erfindungsgemäßen Verfahrens ist nicht nur auf das Licht im sichtbaren Spektralbereich beschränkt, sondern es können mit einem entsprechend modifizierten Wellenlängenfilter-Array auch Anteile des nicht sichtbaren elektromagnetischen Spektrums zurückgehalten oder durchgelassen werden und auf diese Weise, wenn sich dabei an der Stelle des Betrachters eine für diese Spektralbereiche ausgelegte stereoskopische Kamera befindet, dreidimensionale Aufnahmen gewonnen und nach Frequenzwandlung zwecks visueller Auswertung sichtbar gemacht werden. Damit ergeben sich allein schon für den medizinischen Bereich zahlreiche Anwendungsmöglichkeiten, wenn nämlich beispielhaft eine Strahlendosis mit vorgegebener Wellenlänge in eine bestimmte räumliche Tiefe eines Körpers eingebracht werden soll.

Jedes Wellenlängenfilterelement $\beta_{pq}$ kann fest vorgegebene Transparenzwellenlängen/-wellenlängenbereiche $\lambda_b$ aufweisen, die der Wellenlänge des von den zugeordneten bzw. korrespondierenden Bildelementen $\alpha_{ij}$ kommenden Lichtes beinhaltet. Alternativ hierzu können allerdings auch Wellenlängenfilterelemente $\beta_{pq}$ vorgesehen sein, deren Transparenzwellenlänge/-wellenlängenbereich $\lambda_b$ in Abhängigkeit von einer Ansteuerung veränderbar ist.

Dabei ist bei entsprechender Programmierung einer Ansteuerschaltung auch eine Veränderung der Filterwirkung der Wellenlängenfilterelemente $\beta_{pq}$ während des Betriebes möglich, was vorteilhaft dazu genutzt werden kann, die autosteroskopische Wahrnehmbarkeit eines dargestellten Gegenstandes dem individuellen Eindruck eines Betrachters angleichen zu können. Dies geschieht, indem das Maskenbild verändert wird. So kann z.B. ein Wellenlängenfilterelement $\beta_{pq}$ je nach Ansteuerung eine bestimmte Grundfarbe, beispielsweise R, optimal oder gar nicht oder in einer helligkeitsabhängigen Zwischenstufe transmittieren.

Auch können auf diese Weise ausgewählte, zu einem vorgegebenen Bereich des Arrays gehörende Wellenlängenfilterelemente $\beta_{pq}$ möglichst vollständig transparent geschaltet werden, wodurch dieser Bereich eine zweidimensionale Darstellung der Szene bzw. des Gegenstandes erzeugt, während die übrigen, nach wie vor wellenlängengefilterten Bereiche weiterhin eine dreidimensionale Darstellung wiedergeben. Selbstverständlich ist es auf diese Weise auch möglich, die gesamte Szene/den gesamten Gegenstand durch entsprechende Ansteuerung aller Wellenlängenfilterelemente $\beta_{pq}$ wahlweise zweidimensional oder dreidimensional darzustellen.

Letzteres kann beispielsweise erreicht werden, wenn als Wellenlängenfilter-Array ein transparentes Farb-LC-Display genutzt wird, das ebenso wie das zur Bildwiedergabe vorgesehene Farb-LC-Display über separat ansteuerbare (zur Unterscheidung mit einem Apostroph versehene) Subpixel R',G',B' verfügt, und diesem eine über die gesamte Fläche des Displays sich ausdehnende flächige Beleuchtung zugeordnet wird. Bei eingeschalteter Beleuchtung gehen dann von jedem Subpixel R',G',B' Strahlungen der entsprechenden Grundwellenlänge bzw. entsprechender Wellenlängen-/Wellenlängenbereiche aus.

Wird nun beispielhaft einem zur Wiedergabe der Bildelemente $\alpha_{ij}$ vorgesehenen Farb-LC-Display mit Subpixeln R,G,B ein als Wellenlängenfilter-Array dienendes Farb-LC-Display mit Subpixeln R',G',B' vorgeordnet, so läßt sich erreichen, daß die von einem Subpixel R kommende Strahlung stets nur durch Subpixel R' des vorgeordneten Farb-LC-Displays hindurchtreten kann. Wird dabei dem Subpixel R die Teilinformation einer der Ansichten $A_k$ (k=1 ...n) zugeordnet, sind mit den Geraden durch die Flächenmitten der Subpixel R' und des Subpixels R die Ausbreitungsrichtungen für die Information dieses Bildelementes $\alpha_{ij}$ vorgegeben. Das trifft im übertragenen Sinne auch für die Subpixel G und G' bzw. B und B' zu.

Auf diese Weise sind durch Zuordnung von Teilinformationen der verschiedenen Ansichten $A_k$ (k=1...n) zu Subpixeln R,G,B des bildgebenden Farb-LC-Displays die jeweils gewünschten Ausbreitungsrichtungen der Bildinformationen festlegbar. So kann mit einem einfachen Aufbau, wie er nachfolgend anhand eines Ausführungsbeispiels näher erläutert wird, erreicht werden, was beabsichtigt war, nämlich die wellenlängenabhängige Zuordnung der Bildelemente $\alpha_{ij}$ einer der Ansichten $A_k$ (k=1 ...n) überwiegend zu dem einen oder dem anderen Auge eines Betrachters.

Insofern bezieht sich die Erfindung auch auf eine Anordnung zur räumlichen Darstellung einer Szene/eines Gegenstandes, bei der zur Wiedergabe der Bildelemente $\alpha_{ij}$ ein Farb-LC-Display mit separat ansteuerbaren Subpixeln R,G,B vorgesehen und mit einer Ansteuerschaltung gekoppelt ist, die auf den Subpixeln R,G,B Bildelemente der Ansichten $A_k$ (k=1...n) generiert, bei der weiterhin mindestens ein Array aus einer Vielzahl von Wellenlängenfiltern $\beta_{pq}$ vorhanden ist, das, bezogen auf die Blickrichtung eines Betrachters, dem Farb-LC-Display in einem vorgegebenen Abstand z vor- und/oder nachgeordnet ist, wobei jeweils mehrere der Wellenlängenfilterelemente $\beta_{pq}$ mit einem der Subpixel R,G,B derart korrespondieren, daß diese Wellenlängenfilterelemente $\beta_{pq}$ für das von dem korrespondierenden Subpixel R,G,B ausgehende Licht transparent sind und wobei die Ausbreitungsrichtungen des von diesem Subpixel R, G,B ausgehenden Lichtes durch die Positionen dieser Wellenlängenfilterelemente $\beta_{pq}$ bestimmt sind.

Der Abstand der Subpixel R,G,B auf dem Farb-LC-Display zueinander, der Abstand der Wellenlängenfilterelemente $\beta_{pq}$ innerhalb des Arrays zueinander und der Abstand z zwischen dem Array aus Wellenlängenfilterelementen $\beta_{pq}$ und dem Farb-LC-Display in der Blickrichtung eines Betrachters gemessen sind dabei so aufeinander abgestimmt, daß sich das von den Subpixeln R,G,B ausgehende Licht durch die korrespondierenden Wellenlängenfilterelemente $\beta_{pq}$ derart in den bestimmten Richtungen ausbreitet, daß sich wie oben beschrieben eine dreidimensional wahrnehmbare Darstellung ergibt.

Bevorzugt ist als Wellenlängenfilter-Array ein Farb-LC-Display vorgesehen und dieses mit einer Ansteuerschaltung gekoppelt, die die Subpixel R' ,G' ,B' in Abhängigkeit von den Parametern $d_{pq}$, $n_m$ und $\lambda_b$ ansteuert, wobei jeweils die einem Wellenlängenfilterelement $\beta_{pq}$ zugeordnete Wellenlänge $\lambda_b$ der Grundfarbe eines Subpixels R' ,G' ,B' bzw. eines korrespondierenden Subpixels R,G,B entspricht. Als zusätzlicher Wellenlängenbereich $\lambda_b$ kann neben R,G,B ein für das sichtbare Licht komplett opaker Wellenlängenbereich $\lambda_b$ vorgesehen sein, der im weiteren mit S bezeichnet wird.

Es sei ausdrücklich darauf hingewiesen, daß die Erfindung Anordnungen einschließt, bei denen das Wellenlängenfilter-Array in bezug auf die Blickrichtung eines Betrachters dem zur Wiedergabe der Bildelemente dienenden Farb-LC-Display nach- oder auch vorgeordnet ist und auch Anordnungen denkbar sind, bei denen dem Farb-LC-Display zur Wiedergabe der Bildelemente sowohl ein Wellenlängenfilter-Array vorals auch ein Wellenlängenfilter-Array nachgeordnet ist.

Die Wellenlängenfilterelemente $\beta_{pq}$ können bezüglich ihres Transparenzverhaltens auch zeitlich unveränderlich ausgelegt sein. Entscheidend und erfindungswesentlich ist, daß die Subpixel R,G,B zur Wiedergabe der Bildelemente $\alpha_{ij}$ mit Wellenlängenfiltern $\beta_{pq}$ bzw. Subpixeln R' ,G' ,B' so korrespondieren, daß sich eine Vielzahl von Ausbreitungsrichtungen entsprechend dem oben genannten Verfahren ergibt.

Für besondere Anwendungsfälle kann es weiterhin von Vorteil sein, wenn in einem oder beiden Rastern, d.h. im bilddarstellenden Raster (i,j) und/oder auf dem Wellenlängenfilter-Array (p,q), die jeweiligen Elemente auch mit paarweise verschiedenen Abmessungen ausgebildet werden. Beispielsweise kann ein bestimmtes Wellenlängenfilterelement $\beta_{pq}$ am Rand breiter sein als ein Wellenlängenfilterelement $\beta_{pq}$ in der Mitte des Arrays.

Überdies kann - für den Fall, daß das Wellenlängenfilter-Array in Betrachtungsrichtung vor dem bildgebenden Raster aus Bildelementen $\alpha_{ij}$ angeordnet ist - dieses in Breite (und ggf. Höhe) korrigiert werden mit einem Korrekturfaktor f, der wie folgt gebildet wird:

$$f = \frac{d_a}{z + d_a}$$

mit $d_a$ und z wie in F3 definiert. Sofern das Wellenlängenfilter-Array in Betrachtungsrichtung hinter dem bildgebenden Raster aus Bildelementen $\alpha_{ij}$ angeordnet ist, wird der Korrekturfaktor f' verwendet, der nach f'=1 /f gebildet wird.

In einer weiteren bevorzugten Ausgestaltung ist vorgesehen, daß entweder dem Farb-LC-Display zur Darstellung der Bildelemente $\alpha_{ij}$ oder einem als Wellenlängenfilter-Array dienenden Farb-LC-Display eine flächige Beleuchtungsquelle beigestellt ist, die im wesentlichen weißes Licht abstrahlt und deren flächige Ausdehnung etwa der Ausdehnung des jeweiligen Farb-LC-Displays entspricht. Dabei sind Farb-LC-Display und flächige Beleuchtungsquelle, so miteinander verbunden bzw. zueinander positioniert, daß das von der Beleuchtungsquelle ausgehende Licht durch die Subpixel R,G,B bzw. R',G',B' des Displays hindurch abgestrahlt und dabei entsprechend der Grundwellenlängen R,G, B gefiltert wird.

Mit dieser Anordnung wird vorteilhaft erreicht, daß von jedem der Subpixel R,G,B Licht mit im wesentlichen gleicher Intensität in Richtung auf die zugeordneten Subpixel R',G',B' bzw. umgekehrt abgestrahlt wird.

In einer weiteren besonderen Ausgestaltung ist die flächige Beleuchtungsquelle bezüglich ihrer Lichtintensität veränderbar, wodurch es möglich ist, während der räumlichen Darstellung eines Gegenstandes die Intensität zu variieren und somit dem Betrachter individuell anzupassen, um so die räumliche Wahrnehmbarkeit zu optimieren.

In konkreter Ausgestaltung der Erfindung kann die Baueinheit, bestehend aus Beleuchtungsquelle und dem ersten in Betrachtungsrichtung davorliegenden Array (d.h. LC-Display oder Filterarray) durch ein elektrolumineszentes Display, eine Elektronenstrahlröhre, ein Plasma-Display, ein laserstrahlbeleuchtetes Display, ein LED-Display, ein Feldemissionsdisplay oder auch ein polymer-basiertes Anzeigegerät gebildet sein. Beispielsweise kann hierbei ein Plasma-Display vom Typ Pioneer PDP-501 MX oder Philips SFTV1.5-E ; Model: 42PW9982/12 zum Einsatz kommen. Auch Großdisplays für Stadionanzeigen, Rückprojektionsdisplays oder ähnliches sind denkbar.

Unter Umständen ist es weiterhin vorteilhaft, wenn der bisher beschriebenen erfindungsgemäßen Anordnung in Blickrichtung eines Betrachters eine vergrößernde oder verkleinernde Linse, bevorzugt eine Fresnellinse vorgeordnet ist. Dadurch wird erreicht, daß für den Betrachter eine reelle oder virtuelle Abbildung der Anordnung zur räumlichen Darstellung entsteht.

Ein ganz spezieller Anwendungsfall der vorbeschriebenen Erfindung besteht in der Möglichkeit, auf ein- und demselben Bildschirm (z.B. eines Fernsehgerätes) gleichzeitig unterschiedliche Bildinhalte (z.B. Fernsehprogramme) wiederzugeben und jedem dieser Bildinhalte eine gesonderte Ausbreitungsrichtung zuzuordnen, aus der mit Blick auf den Bildschirm die Betrachtung nur dieses Bildinhaltes weitestgehend unbeeinflußt von den anderen Bildinhalten möglich ist.

Beispielsweise wird ein erster Bildinhalt in den ersten vier Ansichten $A_1$ bis $A_4$ wiedergegeben, wobei es sich um vier benachbarte Perspektivansichten handeln kann. Ein zweiter Bildinhalt ist dann in weiteren vier Ansichten $A_5$ bis $A_8$ enthalten. Wird ein entsprechend erzeugtes Kombinationsbild mit der erfindungsgemäßen Anordnung dargestellt, so ist von einem Betrachtungsort aus der erste und von einem zweiten Betrachtungsort aus zweite Bildinhalt räumlich wahrnehmbar. Selbstverständlich können in einem Sonderfall einerseits die Ansichten $A_1$ bis $A_4$ und andererseits die Ansichten $A_5$ bis $A_8$ jeweils untereinander identisch sein, so daß die beiden Bildinhalte zwar aus verschiedenen Richtungen, jedoch jeweils zweidimensional wahrnehmbar sind.

Aus dem Stand der Technik ist es bekannt, die Signale mehrerer, zumindest aber zweier Fernsehsender in der Schaltungsanordnung ein- und desselben Gerätes zu demodulieren, beispielsweise unter Verwendung entsprechender Satellitenreceiver. Aus diesen beiden Fernsehsignalen können die o.g. beiden unterschiedlichen Bildinhalte gewonnen werden, so daß je nach Betrachtungsposition der eine oder der andere Bildinhalt ganzflächig auf dem Bildschirm betrachtet werden kann. Somit ist es möglich, daß mehrere Personen gleichzeitig auf einem Fernsehgerät verschiedene Fernsehprogramme sehen. Die jeweils zugehörigen Töne können z.B. über Kopfhörer wahrgenommen oder über separate Boxen zu den Betrachtungsorten hin abgestrahlt werden.

Die Erfindung bezieht sich auch weiterhin noch auf eine Anordnungen zur wahlweise räumlichen oder zweidimensionalen Darstellung einer Szene/eines Gegenstandes, wobei diese mit Mitteln zur Veränderung der Transmissionseigenschaften der Wellenlängenfilterelemente $\beta_{pq}$ ausgestattet ist. Dabei können die Wellenlängenfilterelemente $\beta_{pq}$ wahlweise zum Zwecke einer 3D-Darstellung gemäß oben beschriebener Vorschrift zur Erzeugung eines Maskenbildes für eine vorgegebene Transparenzwellenlänge/-wellenlängenbereich $\lambda_b$ transmittieren oder aber, zu Zwecken einer 2D-Darstellung, so transparent wie möglich, d.h. für das sichtbare Licht möglichst durchlässig, gesteuert werden.

Im konkreten Falle der Verwendung eines Farb-LC-Display als Wellenlängenfilter-Array bedeutet dies, daß auf dem als 2D-Anzeige zu verwendenden Bildabschnitt alle RGB-Subpixel optimal transparent gesteuert werden, wobei ein quasi-weißer Beleuchtungsabschnitt entsteht, der für einen unbeeinträchtigten 2D-Eindruck sorgt.

Vorteilhaft ist im vorgenannten Fall die Ansteuerschaltung so ausgebildet, daß wahlweise entweder nur eine Auswahl der Wellenlängenfilterelemente $\beta_{pq}$ oder die Gesamtheit der Wellenlängenfilterelemente $\beta_{pq}$ hinsichtlich ihrer Transmissionseigenschaften umschaltbar sind, wodurch wahlweise die gesamte Darstellung der Szene/des Gegenstandes von der räumlichen auf die zweidimensionale Darstellung oder lediglich ausgewählte Anzeigebereiche von der räumlichen auf die zweidimensionale Darstellung verändert werden können.

Diese Veränderbarkeit von einer räumlichen auf eine zweidimensionale Darstellung und umgekehrt ist vorteilhaft mit einer Ausgestaltung der erfindungsgemäßen Anordnung erzielbar, welche umfaßt

- eine Bildwiedergabeeinrichtung aus einer Vielzahl von Bildelementen $\alpha_{ij}$, die in vorgegebener Zuordnung Informationen aus mehreren Ansichten der Szene/des Gegenstandes repräsentieren, wobei von den einzelnen Bildelementen $\alpha_{ij}$ Licht in unterschiedlichen Wellenlängenbereichen abgestrahlt wird,
- eine in Blickrichtung eines Betrachters vor oder hinter der Bildwiedergabeeinrichtung angeordnete Filteranordnung mit einem Filterarray aus einer Vielzahl von Filterelementen, die sowohl Linearpolarisationsfilterelemente als auch in bestimmten Wellenlängenbereichen durchlässige Wellenlängenfilterelemente $\beta_{pq}$ umfassen, mit einem Linearpolarisationsfilter und mit einem zwischen dem Filterarray und dem Linearpolarisationsfilter angeordneten ansteuerbaren optischen Medium, das in Abhängigkeit von seiner Ansteuerung eine Drehung der Polarisationsrichtung von hindurchtretendem linearpolarisiertem Licht bewirkt,
- wobei die Filterelemente derart angeordnet sind, daß
- in einem ersten Zustand des optischen Mediums, in dem die durch das optische Medium bewirkte Polarisationsrichtung und die Polarisationsrichtung des nachfolgenden Filters, d.h. der Linearpolarisationsfilterelemente des Filterarrays oder des Linearpolarisationsfilters, einander kreuzen, für das von der Bildwiedergabeeinrichtung abgestrahlte Licht definierte Ausbreitungsrichtungen vorgeben sind, so daß an einer Vielzahl von ersten Beobachtungsorten überwiegend Informationen einer ersten Auswahl bzw. einer ersten Gruppe von Ansichten und an einer Vielzahl von zweiten Beobachtungsorten, von denen sich jeder etwa in Augenabstand von einem zugeordneten ersten Beobachtungsort befindet, überwiegend Informationen einer zweiten Auswahl bzw. einer zweiten Gruppe von Ansichten wahrnehmbar sind, wobei eine Vielzahl von Gruppen von Ansichten möglich ist, und
- in einem zweiten Zustand des optischen Mediums, in dem die durch das optische Medium bewirkte Polarisationsrichtung und die Polarisationsrichtung des nachfolgenden Filters, d.h. der Linearpolarisationsfilterelemente des Filterarrays oder des Linearpolarisationsfilters, im wesentlichen parallel zueinander verlaufen, die Filteranordnung gegenüber dem ersten Zustand eine erhöhte Transparenz aufweist.

Zum Umschalten zwischen dem 3D-Betrieb und dem 2D-Betrieb ist lediglich das optische Medium so zu betätigen, daß eine Drehung der Polarisationsrichtung bewirkt wird.

Zur Vorgabe der definierten Ausbreitungsrichtungen in der dreidimensionalen Betriebsart (3D-Betrieb) nimmt das optische Medium infolge einer vorgegebenen Ansteuerung zu dem in Richtung des Lichtdurchtritts nachfolgenden Filter, der je nach Anordnung entweder durch die Linearpolarisationsfilterelemente des Filterarrays oder durch den Linearpolarisationsfilter gebildet wird, einen solchen Zustand ein, daß aufgrund der einander schneidenden Polarisationsrichtungen eine weitestgehende Auslöschung für die Bereiche der Linearpolarisationselemente erfolgt. Dadurch kann eine starke Strukturierung des durch die Filteranordnung hindurchtretenden Lichtes bewirkt werden.

Diese Strukturierung läßt sich durch eine Betätigung des optischen Mediums aufheben, indem dieses in einen Zustand gebracht wird, in dem die von dem optischen Medium bewirkte Polarisationsrichtung im wesentlichen parallel zu dem nachfolgenden Filter verläuft, d. h. keine oder allenfalls eine geringfügige Schwächung der Lichtintensität durch die Filteranordnung auftritt. Die in der dreidimensionalen Betriebsart in Zusammenwirkung mit dem optischen Medium und dem Linearpolarisationsfilter opaken Linearpolarisationselemente werden somit in der zweidimensionalen Betriebsart durchscheinend. Durch eine geeignete Anordnung dieser Linearpolarisationselemente wird ein weitgehend homogener Lichtdurchsatz durch die Filteranordnung erzielt. Hierdurch können von der Bildwiedergabeeinrichtung erzeugte Bilder in der Auflösung ihrer Wiedergabe wahrgenommen werden.

Vorzugsweise umfaßt das ansteuerbare optische Medium zur Drehung der Polarisationsrichtung Flüssigkristalle, woraus eine besonders einfache und kostengünstige Lösung resultiert. Beispielsweise können hierfür an sich bekannte LC-Panels, jedoch ohne Polarisationsfilter, verwendet werden. Weiterhin sind drehbare Linearpolarisationsfilter oder auch piezoelektrische Elemente verwendbar. Als optische Medien zur Polarisationsdrehung können auch solche eingesetzt werden, die auf dem Pockels-Effekt, dem Kerr-Effekt oder dem Faraday-Effekt beruhen.

Eine besonders günstig herstellbare Struktur des Filterarrays ergibt sich, wenn alle Linearpolarisationsfilterelemente die gleiche Polarisationsrichtung aufweisen. Zudem bleibt dann der Aufbau des optischen Mediums einfach und der Aufwand beim Umschalten gering.

Die Struktur des Wellenlängenfilter-Arrays und/oder des optischen Mediums kann auch so gewählt werden, daß eine Umschaltung prinzipiell nur auf bestimmten Teilen der Anordnung durchgeführt wird. Dies kann von Vorteil sein, wenn etwa ein bestimmter Bildanteil stets zweidimensional oder stets dreidimensional wahrgenommen werden soll.

Die Filteranordnung ist vorteilhaft in Blickrichtung eines Betrachters vor der Bildwiedergabeeinrichtung angeordnet. Der Bildwiedergabeeinrichtung ist gegebenenfalls eine flächige Beleuchtungsquelle nachgeordnet, die weißes Licht ausstrahlt. Der Betrachter sieht somit durch die Filteranordnung das von der Bildwiedergabeeinrichtung, beispielsweise einem Farb-LC-Display abgestrahlte bzw. das durch dieses hindurchstrahlende Licht. Genauso ist es jedoch möglich, die Filteranordnung zwischen der Beleuchtungsquelle und der Bildwiedergabeeinrichtung bzw. dem Farb-LC-Display anzuordnen. Dabei können das Farb-LC-Display und die Filteranordnung vorteilhaft zu einer Baueinheit zusammengefaßt werden. Der Abstand z zwischen diesen liegt dabei in der Größenordnung von 1 mm bis 10 mm und wird in Abhängigkeit der verwendeten Raster für die Bildelemente und die Filterelemente, dem mittleren Pupillenabstand eines normierten Betrachters und einem gewünschten Betrachtungsabstand bestimmt.

Auch mit der nachfolgend beschriebenen weiteren Ausgestaltung der erfindungsgemäßen Anordnung ist vorteilhaft die Veränderbarkeit von einer räumlichen auf eine zweidimensionale Darstellung und umgekehrt erzielbar. Diese Ausgestaltung umfaßt

-    eine Bildwiedergabeeinrichtung aus einer Vielzahl von Bildelementen $\alpha_{ij}$, die in vorgegebener Zuordnung Informationen aus mehreren Ansichten der Szene/des Gegenstandes repräsentieren, wobei von den einzelnen Bildelementen $\alpha_{ij}$ Licht in unterschiedlichen Wellenlängenbereichen abgestrahlt wird, eine in Blickrichtung eines Betrachters auf die Bildwiedergabeeinrichtung angeordnete Filteranordnung mit einem Filterarray, das eine Vielzahl von in bestimmten Wellenlängenbereichen durchlässigen Wellenlängenfilterelementen $\beta_{pq}$ umfaßt, und mit einer in Blickrichtung hinter der Bildwiedergabeeinrichtung und vor dem Filterarray angeordneten Streuscheibe, die zwischen einer transparenten Stellung und einer streuenden Stellung umschaltbar ist,

-    wobei die Wellenlängenfilterelemente $\beta_{pq}$ derart angeordnet sind, daß in der transparenten Stellung der Streuscheibe für das von der Bildwiedergabeeinrichtung abgestrahlte Licht definierte Ausbreitungsrichtungen vorgegeben sind, so daß an einem ersten Beobachtungsort überwiegend Informationen einer ersten Gruppe von Ansichten und an einem zweiten Beobachtungsort in Augenabstand von dem ersten Beobachtungsort überwiegend Informationen einer zweiten Gruppe von Ansichten wahrnehmbar sind, wobei eine Vielzahl derartiger Orte mit verschiedenen solcher Gruppen existiert, und in der streuenden Stellung der Streuscheibe die Strukturierung des durch das Filterarray hindurchtretenden Lichtes gegenüber der ersten Stellung wesentlich vermindert wird.

Zum Umschalten zwischen dem 3D-Betrieb und dem 2D-Betrieb ist lediglich die Streuscheibe zu betätigen. Die Vorgabe der definierten Ausbreitungsrichtungen in der dreidimensionalen Betriebsart erfolgt in dem transparenten Zustand der Streuscheibe über das Filterarray. Dadurch kann die oben erwähnte starke Strukturierung des durch die Filteranordnung hindurchtretenden Lichtes bewirkt werden. Diese Strukturierung des Lichtes läßt sich wieder durch eine Betätigung eines optischen Mediums, d.h. hier durch die Streuscheibe aufheben, indem diese streuend transluzent geschaltet wird. Dadurch wird ein weitgehend homogener Lichtdurchsatz durch die Filteranordnung erzielt, so daß von der Bildwiedergabeeinrichtung erzeugte Bilder in der Auflösung ihrer Wiedergabe wahrnehmbar sind. Derartige Streuscheiben, die elektronisch angesteuert werden, sind an sich bekannt und bedürfen daher für den Fachmann keiner weiteren Erläuterung.

Auch hierbei kann die Struktur des Wellenlängenfilter-Arrays bzw. die Struktur der Streuscheibe so gewählt werden, daß eine Umschaltung prinzipiell nur auf bestimmten Teilen der Anordnung durchgeführt wird. Dies kann von Vorteil sein, wenn etwa ein bestimmter Bildanteil stets zweidimensional oder stets dreidimensional wahrgenommen werden soll.

Vorteilhaft ist das Wellenlängenfilter-Array als passiver, d.h. ohne jegliche elektrische Energie auskommender Filter ausgebildet. Das Wellenlängenfilter-Array kann beispielsweise als dünnwandige Platte oder Folie hergestellt werden, in welche die gewünschte Struktur aus Wellenlängenfilterelementen $\beta_{pq}$ dauerhaft eingeprägt ist. Die Verwendung derartiger Filterarrays erlaubt eine erhebliche Kosteneinsparung gegenüber Farb-LC-Displays. Zudem werden aus der Verwendung von zwei gleichartigen Farb-LC-Displays resultierende Moireeffekte vermieden. Vorzugsweise werden Filterarrays eingesetzt, deren einzelne Wellenlängenfilterelemente $\beta_{pq}$ jeweils einen vieleckigen, bevorzugt einen rechteckigen Umriß aufweisen.

In dieser wie auch in anderen Ausgestaltungen der Erfindung bestehen die Wellenlängenfilter-Arrays bevorzugt ausschließlich aus Wellenlängenfilterelementen $\beta_{pq}$, die in einem der drei Farbbereiche rot, grün oder blau oder im gesamten Spektrum des sichtbaren Lichts transparent oder opak sind. Damit kann gegenüber bekannten Schwarz-Weiß-Barrieren aufgrund der in der Summe größeren Lichtdurchlässigkeit die Lesbarkeit von dargestelltem Text erheblich verbessert werden. Dies kann auch mit Wellenlängenfilter-Arrays erreicht werden, die ausschließlich aus Wellenlängenfilterelementen $\beta_{pq}$ bestehen, die in je zwei der Farbbereiche rot, grün oder blau oder im gesamten Spektrum des sichtbaren Lichtes transparent oder opak sind. Überdies können einige der Wellenlängenfilterelemente $\beta_{pq}$ auch als kombinierte Wellenlängen- und Linearpolarisationsfilter oder aber als reine Linearpolarisationsfilter ausgebildet sein.

Die gegebenenfalls zwischen den Wellenlängenfilterelementen $\beta_{pq}$ vorgesehenen Linearpolarisationselemente des Filterarrays wirken je nach Ansteuerung des optischen Mediums als opake oder transparente Filterelemente.

Der vorstehend erläuterte positive Aspekt der apparativen Vereinfachung läßt sich jedoch auch mit einem Filterarray erzielen, bei dem ausschließlich solche Filterelemente vorgesehen sind, die im gesamten Spektrum des sichtbaren Lichtes entweder opak oder transparent sind.

Vorteilhaft ist auch hier als Bildwiedergabeeinrichtung ein Farb-LC-Display mit separat ansteuerbaren Subpixeln vorgesehen, wobei jeweils ein Subpixel einem Bildelement $\alpha_{ij}$ entspricht. Im 3D-Betrieb wird durch die Filteranordnung eine selektive Wahrnehmung dieser Bildelemente $\alpha_{ij}$ an der Bildwiedergabeeinrichtung bewirkt.

Von jeder Betrachtungsposition aus nimmt ein Betrachter mit einem Auge überwiegend Bildelemente ($\alpha_{ij}$ einer ersten Auswahl und mit dem anderen Auge überwiegend Bildelemente $\alpha_{ij}$ einer zweiten Auswahl aus den Ansichten $A_k$ (k=1 ...n) wahr, sofern die Zuordnung von Teilinformationen der Ansichten $A_k$ (k=1 ...n) zu Bildelementen $\alpha_{ij}$ wie auch die Positionierung dieser Bildelemente $\alpha_{ij}$ auf dem Raster wie bereits beschrieben nach der Funktion (F1) vorgenommen wird und die Strukturierung der Wellenlängenfilterelemente $\beta_{pq}$ zu einem Maskenbild - analog zur Kombination der Teilinformationen der verschiedenen Ansichten $A_k$ (k=1...n) zu einem Gesamtbild - auch hier nach der Vorschrift (F2) erfolgt.

Bezüglich der Veränderbarkeit von einer der räumlichen auf eine zweidimensionale Darstellung und umgekehrt kann die erfindungsgemäße Anordnung in einer weiteren Ausgestaltung neben einer bereits beschriebenen Bildwiedergabeeinrichtung umfassen

- eine Filteranordnung mit mindestens zwei parallel hintereinanderliegend angeordneten statischen Filterarrays, die bezogen auf die Blickrichtung eines Betrachters der Bildwiedergabeeinrichtung in einem vorgegebenen Abstand z vor- oder nachgeordnet ist, wobei die Filterarrays jeweils eine Vielzahl von in bestimmten Wellenlängenbereichen und/oder bestimmten Polarisationsrichtungen lichtdurchlässigen Filterelementen $\beta_{pq}$ aufweisen,
- eine Einrichtung zur Verschiebung mindestens eines der Filterarrays senkrecht zur Blickrichtung von einer ersten Stellung relativ zum zweiten Filterarray in eine zweite Stellung relativ zum zweiten Filterarray,
- wobei die einzelnen Filterelemente $\beta_{pq}$ auf den Filterarrays derart angeordnet sind, daß in der ersten Stellung die Filteranordnung für das von der Bildwiedergabeeinrichtung abgestrahlte Licht Ausbreitungsrichtungen derart vorgibt, daß an einem ersten Beobachtungsort überwiegend Informationen einer ersten Gruppe von Ansichten und an einem zweiten Beobachtungsort in Augenabstand von dem ersten Beobachtungsort überwiegend Informationen einer zweiten Gruppen von Ansichten wahrnehmbar sind und wobei eine Vielzahl derartiger Orte mit verschiedenen Gruppen existiert, und in der zweiten Stellung die Filteranordnung gegenüber der ersten Stellung eine erhöhte Transparenz aufweist.

Die Filterelemente $\beta_{pq}$ können auch hier sowohl als passive Filterelemente und/oder als passive Linearpolarisationsfilterelemente ausgebildet sein. Bevorzugt sind die Filterelemente als passive Filterelemente ausgebildet.

Zum Umschalten zwischen dem 3D-Betrieb und dem 2D-Betrieb ist lediglich die Verschiebungseinrichtung zu betätigen, mit der die vorzugsweise zwei Filterarrays gegeneinander verschoben werden. Außerdem entfällt durch die Verwendung von zwei statischen Filterarrays der gesamte Aufwand für die Ansteuerung der einzelnen Filterelemente $\beta_{pq}$. Hierdurch ergibt sich eine erhebliche Vereinfachung des Ansteuerungsaufwandes der Anordnung.

Als mechanische Verschiebungseinrichtung wird bevorzugt eine Piezostelleinrichtung verwendet, die einen sehr genauen Versatz der Filterarrays um die sehr kleinen Längenabstände der einzelnen Filterelemente $\beta_{pq}$ erlaubt, so daß bei dem Umschalten zwischen den beiden Stellungen der Filteranordnung die Filterarrays mit ihrer Rasterung jeweils genau zueinander ausrichtbar sind. Mit der Piezostelleinrichtung kann ein Parallelversatz der Filterarrays in der Größenordnung von 100 $\mu$m präzise eingehalten werden. In einer alternativen Ausführungsvariante wird anstelle einer Piezostelleinrichtung ein Schrittmotor eingesetzt.

Die Filterarrays können auch hier als passive, d.h. ohne jegliche elektrische Energie auskommende Filter ausgebildet und in Form dünnwandiger Platten oder Folien hergestellt sein, in welche die gewünschte Struktur der Filterelemente $\beta_{pq}$ dauerhaft eingeprägt ist.

Der vorstehend erläuterte Effekt der apparativen Vereinfachung läßt sich jedoch auch mit einer Filteranordnung erzielen, die eine Vielzahl von Filterarrays umfaßt, die jeweils ausschließlich aus im gesamten Spektrum des sichtbaren Lichtes opaken oder transparenten Filterelementen $\beta_{pq}$ bestehen.

In einer vorteilhaften Ausgestaltung der Erfindung ist als Bildwiedergabeeinrichtung ein Farb-LC-Display mit separat ansteuerbaren Subpixeln vorgesehen, wobei jeweils ein Subpixel einem Bildelement entspricht.

Im 3D-Betrieb wird durch die Filteranordnung eine selektive Wahrnehmung der Bildelemente $\alpha_{ij}$ an der Bildwiedergabeeinrichtung wie oben bereits beschrieben bewirkt, wobei einem Bildelement $\alpha_{ij}$ auch hier eine selbstleuchtende oder beleuchtete Fläche mit einem Flächeninhalt von etwa 10.000 $\mu$m$^2$ bis zu einigen mm$^2$ entspricht, auf der ein geringer Ausschnitt einer der Ansichten $A_k$ (k=1...n) an der Stelle i,j wiedergegeben werden kann.

Für einige Anwendungsfälle ist bei autostereoskopischen Displays eine Betriebsart wünschenswert, bei der lediglich ausgewählte Ausschnitte der dargestellten Szene bzw. des Gegenstandes dreidimensional wahrgenommen werden können, während der übrige Teil zweidimensional wahrnehmbar ist. Oftmals ist es darüber hinaus auch noch erwünscht, die jeweils zwei- oder dreidimensional wiedergegebenen Abschnitte innerhalb der Gesamtdarstellung örtlich variieren zu können.

Ausgehend davon sieht eine weitere Ausgestaltung der Erfindung Mittel zur Umschaltung zwischen mehreren unterschiedlichen Betriebsarten vor, bei denen das Beleuchtungslicht entweder zwecks zweidimensionaler Darstellung ausschließlich nur durch die Bildelemente der Bildwiedergabeeinrichtung, nicht jedoch durch Filterelemente des Wellenlängenfilter-Arrays hindurch zum Betrachter gelangt oder aber zwecks dreidimensionaler Darstellung durch mindestens einen Teil der Filterelemente des Wellenlängenfilter-Arrays und nachfolgend durch einen zugeordneten Teil der Bildelemente $\alpha_{ij}$ hindurch zum Betrachter gelangt.

Mit dieser Anordnung kann die Szene bzw. der Gegenstand für den Betrachter wahlweise so dargestellt werden, daß entweder eine insgesamt zweidimensionale oder eine insgesamt dreidimensionale Wahrnehmung möglich ist. Abweichend davon ist es weiterhin aber auch möglich, lediglich einen oder mehrere Bildausschnitte dreidimensional, den Rest des Bildes zweidimensional darzustellen, nämlich wenn eine Betriebsart gewählt ist, bei der nur in Teilbereichen, die den dreidimensional dargestellten Bildausschnitten entsprechend, das Beleuchtungslicht sowohl durch die Filterelemente des Wellenlängenfilter-Arrays als nachfolgend auch noch durch die zugeordneten Bildelemente der Bildwiedergabeeinrichtung zum Betrachter gelangt.

Als Mittel zur Umschaltung zwischen den unterschiedlichen Betriebsarten sind beispielsweise in Blickrichtung des Betrachters zwischen der Bildwiedergabeeinrichtung und dem Wellenlängenfilter-Array eine erste Planbeleuchtungsquelle und hinter dem Wellenlängenfilter-Array eine zweite Planbeleuchtungsquelle vorgesehen und beide Planbeleuchtungsquellen sind mit separat ansteuerbaren Ein-/Ausschaltern gekoppelt.

Damit läßt sich in einfacher Weise je nach Ansteuerung der Ein-/Ausschalter erreichen, daß in einer ersten Betriebsart zwecks zweidimensionaler Darstellung lediglich die erste Planbeleuchtungsquelle eingeschaltet ist und Beleuchtungslicht nur durch die Bildwiedergabeeinrichtung, nicht jedoch durch das Wellenlängenfilter-Array hindurch zum Betrachter gelangt und in einer zweiten Betriebsart zwecks dreidimensionaler Darstellung lediglich die zweite Planbeleuchtungsquelle eingeschaltet ist und Beleuchtungslicht stets durch das Wellenlängenfilter-Array und die Bildwiedergabeeinrichtung hindurch zum Betrachter gelangt.

Die Szene bzw. der Gegenstand ist dabei für den Betrachter bei Vorwahl der ersten Betriebsart insgesamt zweidimensional, bei Vorwahl der zweiten Betriebsart insgesamt dreidimensional wahrnehmbar.

In einer weiteren diesbezüglichen Ausgestaltung ist dem Wellenlängenfilter-Array ein Raster aus einer Vielzahl einzeln ansteuerbarer Shutterelemente zugeordnet, wobei je nach Anzahl der angesteuerten Shutterelemente der Weg des von der zweiten Planbeleuchtungsquelle erzeugten Beleuchtungslichtes durch eine größere oder kleinere Anzahl von Filterelementen hindurch unterbrochen oder freigegeben ist.

Damit und in Verbindung mit den oben genannten Ein-/Ausschaltern lassen sich drei Betriebsarten realisieren. So läßt sich erreichen, daß in einer ersten Betriebsart, in welcher lediglich die erste Planbeleuchtungsquelle eingeschaltet ist und Beleuchtungslicht nur durch die Bildwiedergabeeinrichtung, nicht jedoch durch das Wellenlängenfilter-Array hindurch zum Betrachter gelangt, das gesamte Bild zweidimensional wahrnehmbar ist.

In einer zweiten Betriebsart ist wiederum lediglich die zweite Planbeleuchtungsquelle eingeschaltet und das Beleuchtungslicht gelangt stets durch das Wellenlängenfilter-Array und die Bildwiedergabeeinrichtung hindurch zum Betrachter, wodurch das gesamte Bild dreidimensional wahrgenommen werden kann, sofern die Shutterelemente geöffnet sind.

In einer weiteren dritten Betriebsart sind beide Planbeleuchtungsquellen eingeschaltet und eine vorgegebene Anzahl von Shutterelementen ist so angesteuert, daß das Beleuchtungslicht in Bereichen der angesteuerten ("geöffneten") Shutterelemente sowohl durch die Filterelemente als auch durch die zugeordneten Bildelemente hindurch und demzufolge mit vorgegebener Ausbreitungsrichtung zum Betrachter gelangt, während das Beleuchtungslicht in Bereichen der nicht angesteuerten ("ungeöffneten") Shutterelemente nur durch die Bildwiedergabeeinrichtung hindurch, nicht jedoch durch zugeordnete Filterelemente hindurch und demzufolge nicht mit vorgegebener Ausbreitungsrichtung zum Betrachter gelangt. Dadurch ist die Szene/der Gegenstand mit Blick auf die Bereiche der nicht angesteuerten Shutterelemente zweidimensional, dagegen mit Blick auf die Bereiche der angesteuerten Shutterelemente dreidimensional wahrnehmbar. Hierbei kann in besonderer Ausgestaltung vorgesehen sein, eine oder beide Planbeleuchtungsquellen an Dimmer zu koppeln, wodurch die jeweils abgegebene Helligkeit regelbar ist und so eingestellt werden kann, daß die Helligkeit der ersten Planbeleuchtungsquelle, bevorzugt etwa um den Faktor drei, geringer ist als die Helligkeit der zweiten Planbeleuchtungsquelle.

Hierbei besteht die erste Planbeleuchtungsquelle bevorzugt aus einem plattenförmigen Lichtleiter, der von zwei einander gegenüberliegenden Großflächen, von denen eine erste zur Bildwiedergabeeinrichtung, die zweite zum Wellenlängenfilter-Array weist, sowie von umlaufenden Schmalflächen begrenzt ist. Dieser Lichtleiter wird von mindestens einer Lichtquelle gespeist, deren Strahlung durch eine oder mehrere der Schmalflächen hindurch in den Lichtleiter eingekoppelt wird. Innerhalb des Lichtleiters wird die Strahlung teils infolge Totalreflexion an den beiden Großflächen hin- und herreflektiert und teils als Nutzlicht über die erste Großfläche abgestrahlt. Auf diese Weise lassen sich großflächige Planbeleuchtungsquellen für großflächige Bildwiedergabeeinrichtungen herstellen.

Bei einer in dieser Weise ausgeführten Planbeleuchtungsquelle kann vorteilhafterweise die zweite Großfläche des Lichtleiters mit einer die Totalreflexion störenden Beschichtung versehen sein, deren Störvermögen über die Ausdehnung der zweiten Großfläche hinweg zwischen zwei Grenzwerten inhomogen ist, wobei die Grenzwerte von der Dichte d der Beschichtung abhängig sind und die Dichte d eine Maß ist für den mittleren Abstand der Partikel pro Flächeneinheit.

Damit kann mit wenig aufwendigen technischen Mitteln auf einfache Art und Weise die Lichtdichteverteilung beeinflußt und über die abstrahlende Großfläche hinweg eine gewünschte Lichtdichteverteilung erzeugt werden. Die hier zugrunde liegende Funktionsweise läßt sich wie folgt erklären:

Bei jeder Reflexion an der ersten Großfläche innerhalb des Lichtleiters wird nur ein Anteil der Strahlung infolge Totalreflexion wieder in den Lichtleiter hineinreflektiert, während ein übriger Anteil kontinuierlich als Nutzlicht durch die erste Großfläche austritt. Mit der erfindungsgemäß auf die gegenüberliegende zweite Großfläche aufgebrachten Beschichtung wird die Totalreflexion gestört, indem das Reflexionsverhalten durch Beeinflussung des Ausfallwinkels an der zweiten Großfläche so geändert wird, daß mehr Licht unter einem Winkel auf die abstrahlende Großfläche trifft, bei dem die Totalreflexion dort nicht mehr stattfinden kann und dadurch eine größere Lichtmenge als Nutzlicht nach außen gelangt.

Bei dem Lichtleiter handelt es sich um einen transparenten Körper, der beispielsweise aus Glas oder PMMA und damit aus einem dichteren Medium besteht als die umgebene Luft. Es ist bekannt, daß dort, wo die Mantelfläche eines Lichtleiters mit benachbarten Stoffen oder Gegenständen in engen Kontakt kommt, die Totalreflexion gestört wird und dabei Streustrahlungen die Folge sind. Dies ist in der Lichtleitertechnik grundsätzlich unerwünscht. Die vorliegende Ausgestaltung der Erfindung jedoch nutzt diesen Effekt, um die Totalreflexion an der zweiten Großfläche des plattenförmigen Lichtleiters definiert zu stören, und zwar so, daß das Störvermögen in unterschiedlichen Bereichen der Großfläche auch unterschiedlich ausgeprägt ist, wie im folgenden gezeigt wird.

Das differenzierte Störvermögen in unterschiedlichen Bereichen der zweiten Großfläche kann beispielhaft so vorgegeben sein, daß mit wachsendem Abstand x von einer Schmalfläche, in die das Licht eingekoppelt wird, das Störvermögen der Beschichtung zunehmend stärker ausgebildet ist. Dabei kann das Störvermögen progressiv in parallel zu dieser Schmalfläche ausgerichteten streifenförmigen Flächenabschnitten zunehmend ausgebildet sein.

So kann vorgesehen sein, daß in einem ersten Flächenabschnitt nahe der Schmalfläche eine Beschichtung aufgebracht ist, bei welcher der mittlere Abstand der Partikel pro Flächeneinheit groß und damit die Störung der Totalreflexion verhältnismäßig gering ist. Im nächsten parallel hierzu ausgerichteten Flächenabschnitt, der beispielsweise im Abstand $x_1$ von der Schmalfläche beginnt, ist der mittlere Abstand der Partikel pro Flächeneinheit kleiner als im ersten Flächenabschnitt und damit die Störung der Totalreflexion stärker ausgeprägt. In einem dritten Flächenabschnitt, beginnend im Abstand $x_2$ von der betreffenden Schmalfläche, ist der mittlere Abstand der Partikel pro Flächeneinheit wiederum geringer, d. h. es sind mehr Partikel pro Flächeneinheit vorhanden, was zur Folge hat, daß die Totalreflexion in diesem Bereich noch stärker gestört wird. Das setzt sich in dieser Weise über die gesamte zweite Großfläche fort, wobei der am weitesten von der betreffenden Schmalfläche entfernte Flächenabschnitt die größte Dichte an Partikeln pro Flächeneinheit aufweist und damit auch das Störvermögen dort am ausgeprägtesten ist.

Damit ist zwar nahe der Schmalfläche, in die das Licht eingestrahlt wird, die Totalreflexion am wenigsten gestört, jedoch wird aufgrund der dort noch vorhandenen größeren Lichtintensität ein ausreichend großer Anteil des Lichtes durch die abstrahlende Großfläche ausgekoppelt. Mit zunehmender Entfernung von der Schmalfläche und mit zunehmender Dichte der Partikel in der Beschichtung wird die Totalreflexion jedoch progressiv zunehmend stärker gestört, so daß in jedem der Bereiche der abstrahlenden Großfläche, die diesen Flächenabschnitten gegenüberliegen, trotz der dort bereits geringeren Lichtintensität effektiv ein etwa ebenso großer Anteil an Licht ausgekoppelt wird, wie nahe der Schmalfläche.

Auf diese Weise kann eine nahezu homogen leuchtende Großfläche erzielt werden, die mindestens die dreifache meßbare Leuchtdichte pro Flächeneinheit aufweist, als dies bei vergleichbaren Planbeleuchtungsquellen aus dem Stand der Technik der Fall ist. Dies macht sich insbesondere bei sehr großflächigen Lichtleitern bemerkbar, was für Großbilddarstellungen von Vorteil ist.

Eine noch weitere Steigerung der Helligkeit ist mit einer weiteren Ausgestaltungsvariante möglich, bei der das Störvermögen der Beschichtung mit wachsenden Abständen $x_1$ und $x_2$, ausgehend von zwei Schmalflächen, in die jeweils Licht eingekoppelt wird, zunehmend stärker ausgebildet ist. Dabei kann es sich um zwei Schmalflächen handeln, die sich am Lichtleiter parallel gegenüberliegen. Auch in diesem Falle kann die Beschichtung so ausgebildet sein, daß das Störvermögen progressiv in parallel zueinander und zu den Schmalflächen ausgerichteten streifenförmigen Abschnitten zunimmt, und zwar bis zu einem Maximum, das etwa in Mitte der Längsausdehnung der zweiten Großfläche liegt.

Bevorzugt ist als Beschichtung ein Lack außen auf die zweite Großfläche aufgebracht. Hierdurch ergeben sich einfache Möglichkeiten für das Aufbringen der Beschichtung, die sich technologisch bereits bewährt haben und die eine für viele Anwendungszwecke ausreichende Beschichtung ergeben. Dabei ist die örtliche Lackdichte ein Äquivalent für das Störvermögen an diesem Ort. Die Lackdichte kann nach der Funktion $d = f(x)$ definiert sein, wobei x das Maß für den Abstand von der Schmalfläche ist, in die das Licht eingekoppelt wird, während d einem Dichtewert entspricht. Dabei gilt beispielsweise $d = 1$ für einen vollständig lackierten Bereich und $d = 0$ für einen unlackierten Bereich der zweiten Großfläche.

In vorteilhafter Ausgestaltung kann als Dichtefunktion

$$d = f(x) = a_3 \cdot x^3 + a_2 \cdot x^2 + a_1 \cdot x + a_0$$

vorgegeben sein, wobei die Parameter $a_0$, $a_1$, $a_2$ und $a_3$ wählbar sind. Beispielsweise haben sich die Parameter $a_0 = 0$, $a_1 = 4$, $a_2 = -4$ und $a_3 = 0$ bewährt.

Dabei beschränkt sich diese Ausgestaltung der Erfindung nicht zwangsläufig nur auf Polynome dritten Grades; in einzelnen Anwendungsfällen kann es durchaus auch sinnvoll sein, eine Dichtefunktion in Form eines Polynoms höheren als des dritten Grades anzustreben.

Es ist eine weitere Ausgestaltung derart denkbar, bei der die Dichte d nicht nur in Abhängigkeit von dem Abstand x von der Schmalfläche vorgegeben ist, in die das Licht eingekoppelt wird, sondern auch in Abhängigkeit von der senkrecht dazu verlaufenden Koordinate y. Dann ist beispielsweise die Lackdichte nach der Funktion $d = f(x,y)$ definiert, wobei x wie schon vorbeschrieben ein Maß für den Abstand von der Schmalfläche ist, in die das Licht eingekoppelt wird, y jedoch ein Maß für eine Position senkrecht zu diesem Abstand. Damit kann für jeden Ort x, y auf der zweiten Großfläche die Dichte der Beschichtung vorgegeben werden und Einfluß genommen werden auf die Lichtmenge, die in einem gegenüberliegenden Bereich durch die abstrahlende Großfläche austritt.

Die Dichtefunktion $d = f(x,y)$ kann vor allem dann von Interesse sein, wenn ein ganz bestimmtes Leuchtdichteprofil über die abstrahlende Großfläche hinweg erzeugt werden soll. So läßt sich mit der Funktion $d = 1$ für [$0,4 < x < 0,6$ und $0,4 < y < 0,6$], sonst $d = 0$, ein besonders heller Fleck etwa in der Mitte der abstrahlenden Großfläche erzielen, wenn die Werte x bzw. y auch hier normiert sind, d. h. wenn beispielsweise gilt $x_{min} = y_{min} = 0$, $x_{max} = y_{max} = 1$. Auf diese Weise können sehr hohe Leuchtdichten in diesem mittleren Fleck erreicht werden.

Das Aufbringen des Lackes außen auf die zweite Großfläche kann durch ein übliches Druckverfahren, z. B. durch Siebdruck, erfolgen, indem ein der Dichtefunktion entsprechendes Bild erzeugt werden, das die gesamte zweite Großfläche einschließt, wobei auch hier wieder d = 1 für eine vollständig lackierte Flächeneinheit und d = 0 eine nicht mit Lack versehene Flächeneinheit gilt. Der Erzeugung dieses Bildes kann gegebenenfalls eine Gradationskurve zugrunde gelegt werden.

In einer abgewandelten Ausführung kann die gesamte zweite Großfläche von außen homogen lackiert, d.h. mit einer Beschichtung gleichmäßiger Dichte versehen sein. Dann wird besonders viel Licht durch die abstrahlende Großfläche ausgekoppelt, wobei allerdings Inhomogenitäten auftreten, da nahe der einstrahlenden Lichtquelle die Intensität größer ist.

In einer weiteren diesbezüglichen Ausgestaltung ist vorgesehen, daß die Beschichtung aus einer Vielzahl von Partikeln mit höherem und Partikeln mit geringerem Störvermögen gebildet ist, die in vorgegebenen Mengenverhältnissen zueinander stehen, wobei in Flächenbereichen, in denen die Totalreflexion stärker gestört werden soll, die Partikel mit höherem Störvermögen und in Flächenbereichen, in denen die Totalreflexion weniger stark gestört werden soll, die Partikel mit geringerem Störvermögen überwiegen. Sehr vorteilhaft lassen sich als Partikel mit höherem Störvermögen matte Silberteilchen und als Partikel mit geringem Störvermögen glänzende Silberteilchen verwenden.

Weiterhin kann vorgesehen sein, daß von der Beschichtung Teilbereiche ausgespart sind und die zweite Großfläche in diesen Teilbereichen eine möglichst hohe Lichtdurchlässigkeit aufweist. In besonderen Fällen können diese Teilbereiche in regelmäßigen, frei wählbaren Mustern angeordnet sein.

In einer Weiterentwicklung wird eine Anordnung bevorzugt, bei der in Blickrichtung eines Betrachters zuerst eine transluzente Bildwiedergabeeinrichtung (z.B. ein Farb-LC-Display), danach ein Wellenlängenfilter-Array und danach eine Lichtquelle angeordnet ist. Hierbei ist das Wellenlängenfilter-Array auf seiner der Bildwiedergabeeinrichtung zugewandten Seite mit spiegelnden oder streuenden Oberflächenelementen versehen und es ist mindestens eine Lichtquelle vorhanden, deren Strahlung in der ersten Betriebsart nur auf die dem Betrachter abgewandte Seite des Wellenlängenfilter-Arrays gerichtet ist, in der zweiten Betriebsart nur auf die Seite des Wellenlängenfilter-Arrays mit den spiegelnden oder streuenden Oberflächenelementen gerichtet ist und in der dritten Betriebsart lediglich auf ausgewählte Bereiche der vom Betrachter abgewandten Seite des Wellenlängenfilter-Arrays gerichtet ist.

Auch hier wird in der ersten Betriebsart eine dreidimensionale Darstellung erzeugt, da das Beleuchtungslicht sowohl durch das Wellenlängenfilter-Array als auch durch die Bildwiedergabeeinrichtung zum Betrachter gelangt. Ist dabei auf dem bilddarstellenden Raster der Bildwiedergabeeinrichtung ein Kombinationsbild aus mehreren Perspektivansichten der Szene/des Gegenstandes dargestellt, entsteht für den Betrachter der dreidimensionale Eindruck aus den bereits ausgeführten Gründen, nämlich weil für jedes Auge des Betrachters, beeinflußt durch die Positionen der Filterelemente relativ zu den Positionen zugeordneter Bildelemente bzw. durch die damit festgelegten Ausbreitungsrichtungen des Lichtes nur zugeordnete Bildinformationen aus den Perspektivansichten sichtbar sind.

In der zweiten Betriebsart dagegen tritt das Beleuchtungslicht nicht durch die Filterelemente und nachfolgend durch die Bildelemente hindurch, sondern trifft auf die dem Betrachter zugewandte Seite des Wellenlängenfilter-Arrays, dort auf die spiegelnden oder streuenden Oberflächenelemente und wird infolgedessen von dieser Seite des Wellenlängenfilter-Arrays in Richtung auf die Bildwiedergabeeinrichtung reflektiert bzw. gestreut, tritt dort durch die transluzenten Bildelemente hindurch und erreicht beide Augen des Betrachters. Damit tritt eine Richtungsselektion bzw. eine Zuordnung von Bildinformationen zu dem rechten oder linken Auge des Betrachters nicht ein, was zur Folge hat, daß die Darstellung der Szene/des Gegenstandes vom Betrachter nicht dreidimensional, sondern zweidimensional wahrgenommen wird.

Auf diese Weise ist es mit verhältnismäßig einfachen Mitteln möglich, eine ganzflächig zweidimensionale Darstellung oder eine ganzflächig dreidimensionale Darstellung der Szene/des Gegenstandes zu erzeugen.

Wird nun analog zu der bereits weiter oben beschrieben Ausgestaltung ein Raster aus einzeln ansteuerbaren Shutterelementen angeordnet, wobei die Shutterelemente zumindest etwa der Größe eines Filterelementes bzw. eines Bildelementes entsprechen, so wird auch hier erreicht, daß das auf die Oberflächenelemente gerichtete Beleuchtungslicht durch Ansteuerung vorgegebener Shutterelemente ausschnittsweise abgeblockt werden kann.

Bei dieser Ausgestaltung nimmt in einer dritten Betriebsart, bei der in einem Bereich der Bildfläche eine Anzahl von Shutterelementen nicht angesteuert ("ungeöffnet") sind, ein Betrachter einen diesem Flächenbereich entsprechenden Bildausschnitt zweidimensional wahr.

Dagegen tritt das Licht durch die übrigen angesteuerten ("geöffneten") Shutterelemente, danach durch das Wellenlängenfilter-Array und auch durch die Bildwiedergabeeinrichtung hindurch, wobei der Betrachter die diesen Flächenabschnitten entsprechenden Bildausschnitte dreidimensional wahrnimmt.

Auf diese Weise ist es mit verhältnismäßig einfachen Mitteln auch hier möglich, gleichzeitig eine bildausschnittsweise zweidimensionale bzw. dreidimensionale Darstellung der Szene/des Gegenstandes zu erzeugen.

Das Beleuchtungslicht kann von zwei voneinander unabhängigen Lichtquellen ausgehen, wobei die Strahlung von einer der ersten beiden Lichtquellen ausschließlich auf die dem Betrachter abgewandte Seite und die Strahlung der zweiten Lichtquelle lediglich auf die dem Betrachter zugewandte und mit Oberflächenelementen versehene Seite des Wellenlängenfilter-Arrays gerichtet ist.

Um das Beleuchtungslicht in der angegebenen Weise auf das Wellenlängenfilter-Array bzw. auf die Bildwiedergabeeinrichtung richten zu können, kann jeder der beiden Lichtquellen ein ansteuerbarer Ein-/Ausschalter zugeordnet sein. Die Ansteuerung der Ein-/Ausschalter bzw. der Shutterelemente, die Teile eines LC-Shutters sein können, kann mittels PC und entsprechender Software, welche die Schaltzustände für die gewünschten Betriebsarten vorgibt, vorgenommen werden.

Denkbar ist es auch, anstelle der beiden getrennt schaltbaren Lichtquellen nur eine Lichtquelle vorzusehen und schwenkbar gelagerte Reflektoren anzuordnen, durch die in einer ersten Schwenkposition die von dieser Lichtquelle ausgehende Strahlung nur auf die vom Betrachter abgewandte Seite des Wellenlängenfilter-Arrays, in einer zweiten Schwenkposition nur auf die Seite des Wellenlängenfilter-Arrays mit den spiegelnden oder streuenden Oberflächenelementen und in einer dritten Schwenkposition die von dieser Lichtquelle ausgehende Strahlung sowohl auf die vom Betrachter abgewandte Seite des Wellenlängenfilter-Arrays als auch auf die Seite des Wellenlängenfilter-Arrays mit den spiegelnden oder streuenden Oberflächenelementen gerichtet ist. Damit und in Verbindung mit ansteuerbaren Shuttern, die im Strahlengang zwischen der Lichtquelle und den Reflektoren positioniert sind, lassen sich die genannten drei Betriebsarten realisieren.

Bevorzugt ist das Wellenlängenfilter-Array als statisches Filter ausgeführt und die reflektierenden bzw. streuenden Oberflächenelemente sind ausschließlich auf den opaken Flächenbereichen des statischen Filters positioniert.

Um einen vereinfachten Aufbau insbesondere für großformatige Bildschirme, beispielsweise für Plasmabildschirme mit 50 Zoll Bilddiagonale, zu ermöglichen, kann die Erfindung derart ausgestaltet sein, daß die Filterarrays aus Neutralfiltern zur wellenlängenunabhängigen Schwächung der Lichtintensität bestehen, wobei für jedes Filter ein bestimmter Transmissionsgrad vorgegeben ist. Bevorzugt kommen die Transmissionsgrade 0%, 25%, 50%, 75% und 100% zum Einsatz, womit auch hier gegenüber bekannten Schwarz-Weiß-Barrieren aufgrund der in der Summe größeren Lichtdurchlässigkeit die Lesbarkeit von dargestelltem Text erheblich verbessert werden.

Überdies können einige der Filterelemente auch als kombinierte Neutral- und Wellenlängenfilterelemente, d.h. mit wellenlängenabhängigen Transmissionsgraden, ausgebildet sein. Konkret bedeutet dies, daß die entsprechenden Filter mit derartigen Transmissionseigenschaften nur Licht bestimmter Transparenzwellenlängenbereiche passieren lassen und dessen Intensität gleichzeitig auch abschwächen.

In diesem Zusammenhang soll davon ausgegangen werden, daß der Begriff "Transmissionseigenschaften" alle möglichen Eigenschaften der hier verwendeten Filter einschließt. Jedes der Filter weist demnach eine ganz bestimmte Transmissionseigenschaft $\lambda_b$ auf. Diese kann, wie vorstehend erläutert, insbesondere eine wellenlängenunabhängige Schwächung der Lichtintensität mit einem bestimmten Transmissionsgrad oder eine wellenlängenabhängige (optimale) Transparenz oder eine Kombination aus beidem, d.h. eine wellenlängenabhängige Schwächung der Lichtintensität mit einem bestimmten wellenlängenabhängigen Transmissionsgrad, sein.

Optional ist es auch hier möglich Wellenlängenfilterelemente $\beta_{pq}$ zu verwenden, die für Licht bestimmter Wellenlängenbereiche durchlässig sind. Vorzugsweise sind diese Wellenlängenfilterelemente $\beta_{pq}$ in einem der drei Farbbereiche rot, grün oder blau transparent. Es können beispielsweise auch Wellenlängenfilterelemente $\beta_{pq}$ verwendet werden, die in jeweils zwei von den Farbbereichen rot, grün oder blau transparent sind. Die optional eingesetzten Wellenlängenfilterelemente $\beta_{pq}$ weisen Transparenzwellenlängen- oder Transparenzwellenlängenbereiche auf, die bevorzugt dem Wellenlängen- oder Wellenlängenbereich $\lambda$ des von den korrespondierenden Bildelementen $\alpha_{ij}$ abgestrahlten Lichtes entsprechen.

Um für den Aufbau der erfindungsgemäßen Anordnung nicht teure elektrisch leitfähige und zugleich optisch durchsichtige Scheiben verwenden zu müssen, wie sie in Plasma-Bildschirmen genutzt werden, ist ein sich vor einem Flachbildschirm befindendes Filterarray vorgesehen, bei dem mindestens jedes zehnte Filterelement elektrisch leitfähig ausgebildet ist. Damit wird schon eine hinreichende Gesamtleitfähigkeit erreicht.

Zur Erzeugung der Filterstruktur kann beispielsweise eine druckfähige und zugleich elektrisch leitfähige Farbe verwendet werden (z.B. SPI Conductive Carbon Paint; Hersteller: Structure Probe, Inc., USA). Weiterhin kommen für die Ausbildung opaker Filterelemente auf dem Filterarray insbesondere Metallpartikel in Frage, die auf eine haftende Oberfläche aufgebracht werden. Es ist auch möglich, das Material, das die Filterstruktur bildet, zusammen mit einem Trägermaterial als eine fotografische Folie oder Platte auszubilden, die entsprechende elektrisch leitende Eigenschaften besitzt.

Das Trägermaterial für das Filterarray kann ein transparenter Kunststoff (z.B. PMMA), Glas oder eine transparente Folie sein. Das Trägermaterial befindet sich entweder an nur einer Seite des Materials oder auf beiden Seiten des Materials, das die Filterstruktur bildet. So ergibt sich quasi ein Sandwich aus einer ersten Schicht des Trägermaterials, Filterarray und einer zweiten Schicht des Trägermaterials. Vorzugsweise wird das Trägermaterial mit dem Filterarray in den Rahmen des Flachbildschirmes eingepaßt.

Vorteilhaft können alle auf dem Filterarray vorhandenen elektrisch leitfähigen Filterelemente elektrisch leitend miteinander verbunden sein. Weiterhin kann vorgesehen sein, daß alle elektrisch leitfähigen Filterelemente mit mindestens einer Elektrode verbunden sind, über die das Filterarray in einen elektrischen Stromkreis einbezogen werden kann.

Ein erstes Verfahren zur Herstellung eines Filterarrays, bei dem mindestens jedes zehnte Filterelement elektrisch leitfähig ist, umfaßt beispielsweise folgende Verfahrensschritte: Vorbereiten einer Siebdruckmaske unter Verwendung einer elektrisch leitfähigen Farbe, wobei mindestens jedes zehnte nicht transparent vorgegebene Filterelement mittels dieser leitfähigen Farbe hergestellt wird; Siebdrucken der Filterstruktur auf ein durchsichtiges Trägermaterial, z.B. PMMA oder Glas und, sofern erforderlich, Wiederholung der vorgenannten Verfahrensschritte.

Ein zweites Verfahren zur Herstellung eines Filterarrays, bei dem mindestens jedes zehnte Filterelement elektrisch leitfähig ist, umfaßt beispielsweise folgende Verfahrensschritte: Vorbereiten einer Druckmaske unter Verwendung metallischer Partikel, z.B. Silberpartikel, wobei mindestens jedes zehnte nicht transparent vorgegebene Filterelement mittels besagter Partikel gebildet wird; Beschichten eines durchsichtigen Trägermateriales, z.B. PMMA oder Glas, mit einem durchsichtigen Klebstoff (z.B. Acrifix 192 Kleber, Hersteller: Röhm GmbH, Darmstadt, Deutschland); Aufdrucken der Filterstruktur auf das Trägermaterial und, soweit erforderlich, Belichtung, z.B. UV-Belichtung, zwecks zur Aushärtung des Klebstoffs.

Weitere Verfahren zur Ausbildung eines Filterarrays mit den genannten Eigenschaften sind denkbar. Entscheidend ist dabei, daß das Material zur Bildung mindestens jedes zehnten Filterelementes elektrisch leitfähig ist. Vorzugsweise sind alle nichttransparenten Filterelemente elektrisch leitfähig ausgebildet.

Im Rahmen der Erfindung liegt es weiterhin, eine zusätzliche Ausstattung vorzusehen mit: einer Einrichtung zur Detektion der Augenposition eines aus einer Gruppe ausgewählten Betrachters, einer Einrichtung zur Verschiebung des Filterarrays senkrecht zur Blickrichtung dieses Betrachters und einer Recheneinrichtung, welche die Verschiebeeinrichtung in Abhängigkeit von der ermittelten Augenposition des Betrachters betätigt. Damit wird erreicht, daß der betreffende Betrachter aufgrund der permanent auf seine Augenposition abgestimmten Position des Filterarrays fast ausschließlich die mittleren der Ansichten $A_k$ (k=1 ...n) sieht.

Zur Detektion der Augenposition eines ausgewählten Betrachters (sogenanntes "Tracking") können verschiedenartige Einrichtungen zum Einsatz kommen, wie sie unter anderem in WO 96/18925 beschrieben sind. In einer einfachen Ausführung genügt eine schwenkbare Kamera mit einer Recheneinrichtung; die Recheneinrichtung wertet das von der Kamera gelieferte Signal aus, indem z.B. die Augen als wei-βe Flächen mit dunklen Punkten, die den Pupillen entsprechen, gesucht werden. Es ist auch möglich, den ausgewählten Betrachter vorzugsweise zwischen den Augen mit einem speziell gefärbten Punkt oder einem anderen, technisch erkennbaren Merkmal zu markieren. Der ausgewählte Betrachter kann bei größeren Bildschirmen (z.B. Plasma-Displays mit 50 Zoll Bildschirmdiagonale) in einfacher Weise dadurch kenntlich gemacht werden, daß er sich in einem bestimmten Betrachtungsbereich, beispielsweise dem verfügbaren Tracking-Volumen der Tracking-Einrichtung, aufhält.

Zur Verschiebung des Filterarrays ist beispielsweise eine Einrichtung vorgesehen, die mindestens eine Schiene und mindestens einen Linearmotor, der vorzugsweise als Schrittmotor ausgebildet ist, umfaßt. Die Verschiebung des Filterarrays geschieht vorzugsweise in horizontaler Richtung - bezogen auf die (gewöhnliche) Blickrichtung eines Betrachters; eine vertikale Verschiebung ist jedoch ebenso vorstellbar. Es ist aber auch möglich, die Verschiebung mit Hilfe von Piezo-Stellern vorzunehmen.

In einer besonderen Ausgestaltung ist vorgesehen, dem ausgewählten Betrachter vorab ein Testbild darzubieten, um das System zu kalibrieren. Dies kann in bezug auf die Körpergröße des Betrachters sinnvoll sein, da an vertikal verschiedenen, jedoch horizontal vor dem Bildschirm gleichen Betrachtungspositionen unterschiedliche Ansichten dargeboten werden.

## Kurze Beschreibung der Zeichnungen

Die Erfindung soll nachfolgend anhand von Ausführungsbeispielen näher erläutert werden. In den zugehörigen Zeichnungen zeigen:

| | |
|---|---|
| Fig.1 | eine Ausgestaltungsvariante, bei der in Blickrichtung eines Betrachters zunächst ein erstes Farb-LC-Display als bilddarstellendes Raster und in einem vorgegebenen Abstand z dahinter ein zweites Farb-LC-Display als Wellenlängenfilter-Array anordnet ist, |
| Fig.2 | ein Beispiel für ein Maskenbild, erzeugt mit den als Wellenlängenfilter $\beta_{pq}$ genutzten Subpixeln R'G'B' des zweiten Farb-LC-Displays, stark vergrößert und nicht maßstabgerecht dargestellt, |
| Fig.3 | ein Beispiel für ein Gesamtbild aus den Teilinformationen der Ansichten $A_k$ (k=1...n), erzeugt mit den als Bildelemente $\alpha_{ij}$ genutzten Subpixeln RGB des ersten Farb-LC-Displays, stark vergrößert und nicht maßstabgerecht dargestellt, |
| Fig.4 | die Struktur eines Maskenbildes nach Fig.2, das ausschließlich aus roten Subpixeln R' gebildet ist, |
| Fig.5 | die Positionen der Teilinformationen aus den Ansichten $A_k$ (k=1...8), die im Gesamtbild nach Fig.3 durch rote Subpixel R wiedergegeben werden, |
| Fig.6 | die sichtbaren Teilinformationen bzw. Teile davon für ein Auge eines Betrachters beim Blick aus einer der Betrachtungsposition durch das Maskenbild aus Fig.4 hindurch, |
| Fig.7 | die sichtbaren Teilinformationen bzw. Teile davon für das andere Auge des Betrachters beim Blick aus einer der Betrachtungsposition durch das Maskenbild aus Fig.4 hindurch, |

Fig.8            eine von der Ausgestaltungsvariante nach Fig.1 abweichende Ausgestaltung, bei der anstelle des zweiten Farb-LC-Displays ein Array aus Wellenlängenfilterelementen $\beta_{pq}$ fest vorgegebenen Transparenzwellenlängen bzw. Transparenzwellenlängenbereichen $\lambda_b$ vorgesehen ist,

Fig.9            einen Schnitt durch eine in Fig.8 dargestellte Anordnung mit den Gegebenheiten nach Fig.2 und Fig.3,

Fig.10           eine weitere von der Ausgestaltungsvariante nach Fig.1 abweichende Ausgestaltung, bei der in Blickrichtung des Betrachters zunächst ein Array aus Wellenlängenfilterelementen $\beta_{pq}$ fest vorgegebenen Transparenzwellenlängen/-wellenlängenbereichen $\lambda_b$ und im Abstand z dahinter das bildgebende Farb-LC-Display positioniert sind,

Fig.11           ein Beispiel zum Zustandekommen des Moiré-Effektes,

Fig.12           ein Beispiel der Maskenbildstruktur einer aus dem Stand der Technik bekannten Schwarz-Weiß-Barriere,

Fig.13           ein Beispiel einer RGB-Maskenbildstruktur,

Fig.14           ein erstes Ausführungsbeispiel der erfindungsgemäßen Anordnung mit Mitteln zur 3D-2D-Umschaltung, umfassend eine Filteranordnung, die aus einem Filterarray, einem optischem Medium zur Drehung der Polarisationsrichtung und einem Linearpolarisationsfilter besteht,

Fig.15           ein zweites Ausführungsbeispiel der erfindungsgemäßen Anordnung mit Mitteln zur 3D-2D-Umschaltung, umfassend eine in Blickrichtung eines Betrachters vor einer Bildwiedergabeeinrichtung liegende Filteranordnung, die aus einem Linearpolarisationsfilter, einem optischen Medium zur Drehung der Polarisationsrichtung und einem Filterarray besteht,

Fig.16           ein Beispiel für die Struktur eines Filterarrays mit Linearpolarisationselementen und Wellenlängenfilterelementen $\beta_{pq}$ in stark vergrößerter und nicht maßstabgerechter Darstellung.

Fig.17           ein drittes Ausführungsbeispiel der erfindungsgemäßen Anordnung mit Mitteln zur 3D-2D-Umschaltung, umfassend eine in Blickrichtung eines Betrachters hinter einer Bildwiedergabeeinrichtung liegende Filteranordnung mit Streuscheibe,

Fig.18           ein Grundelement aus einem ersten Wellenlängenfilter-Array,

Fig.19           ein Grundelement aus einem zweiten Wellenlängenfilter-Array,

Fig.20           ein aus einer Vielzahl von Grundelementen nach Fig.18 zusammengesetztes erstes Wellenlängenfilter-Array,

Fig.21           ein aus einer Vielzahl von Grundelementen nach Fig.19 zusammengesetztes zweites Wellenlängenfilter-Array

Fig.22           ein durch Überlagerung der in den Fig.20 und Fig.21 dargestellten Wellenlängenfilter-Arrays erzeugtes summarisches Wellenlängenfilter-Array,

Fig.23           ein weiteres summarisches Wellenlängenfilter-Array, das sich aus dem summarischen Wellenlängenfilter-Array nach Fig.22 nach Verschiebung der beiden überlagerten Wellenlängenfilter-Arrays aus Fig.20 und Fig.21 um drei Rasterpositionen ergibt,

Fig.24           ein Beispiel für ein Wellenlängenfilter-Array, das ausschließlich opake und transparente Wellenlängenfilterelemente $\beta_{pq}$ enthält,

Fig.25           eine Filteranordnung, die durch eine versetzte Überlagerung von sieben Wellenlängenfilter-Arrays nach Fig.24 entsteht,

Fig.26           ein Ausführungsbeispiel der erfindungsgemäßen Anordnung mit Mitteln zur wahlweise ganzflächig zweidimensionalen oder ganzflächig dreidimensionalen Darstellung, umfassend eine Bildwiedergabeeinrichtung, ein Wellenlängenfilter-Array und Planbeleuchtungsquellen,

Fig.27           ein Ausführungsbeispiel der erfindungsgemäßen Anordnung mit Mitteln zur wahlweise ganzflächig zweidimensionalen, ganzflächig dreidimensionalen oder bildausschnittsweise zwei- bzw. dreidimensionalen Darstellung,

Fig.28           die Ausgestaltung einer der Planbeleuchtungsquellen in Fig.27 als flächiger Lichtleiter mit einer Lichtquelle,

Fig.29           ein Beispiel für eine mögliche Strukturierung der Dichte d der Beschichtung bei der Planbeleuchtungsquelle nach Fig.28 in stark vergrößerter Darstellung,

Fig.30           ein Beispiel für die Ausstattung der Planbeleuchtungsquelle nach Fig.28 mit einer weiteren Lichtquelle zur Einkopplung von Licht in den Lichtleiter,

Fig.31           ein Beispiel für eine mögliche Strukturierung der Dichte d der Beschichtung in der Planbeleuchtungsquelle nach Fig.30 in stark vergrößerter Darstellung,

Fig.32 bis Fig.34   Beispiele für unterschiedliche Dichteverteilungen bei Ausführung der Planbeleuchtungsquelle gemäß Fig.28 und Beschichtung nach Fig.29,

Fig.35           ein Beispiel für die Dichteverteilung bei Ausführung der Planbeleuchtungsquelle gemäß Fig.30 und Beschichtung nach Fig.31,

Fig.36 die erfindungsgemäße Anordnung nach Fig.27 mit integrierter Planbeleuchtungsquelle in der Ausgestaltung nach Fig.28, jedoch ohne Beschichtung,

Fig.37 ein Beispiel für die Ausstattung der Beleuchtungsvorrichtung mit streuenden oder spiegelnden Oberflächenelementen,

Fig.38 ein weiteres Beispiel für die Ausstattung der Beleuchtungsvorrichtung mit streuenden oder spiegelnden Oberflächenelementen, einer flächigen Lichtquelle und zusätzlichen Reflektoren,

Fig.39 ein Beispiel für die Struktur der Filterelemente $\beta_{pq}$ in stark vergrößerter und nicht maßstabgerechter Darstellung bei ausschließlicher Verwendung von Neutralfiltern,

Fig.40 ein weiteres Beispiel für die Struktur der Wellenlängenfilterelemente $\beta_{pq}$ in stark vergrößerter und nicht maßstabgerechter Darstellung bei Verwendung von Neutralfilter- und Wellenlängenfilterelementen,

Fig.41 ein weiteres Beispiel für ein Gesamtbild aus den Teilinformationen der Ansichten $A_k$ (k=1...n; n=40), erzeugt mit den als Bildelementen $\alpha_{ij}$ genutzten Subpixeln RGB des Farb-LC-Displays, stark vergrößert und nicht maßstabgerecht dargestellt,

Fig.42 ein weiteres Beispiel für die Struktur der Filterelemente $\beta_{pq}$ in stark vergrößerter und nicht maßstabgerechter Darstellung bei ausschließlicher Verwendung von Neutralfiltern, gut geeignet zur räumlichen Darstellung eines Kombinationsbildes nach Fig.41 ,

Fig.43 ein weiteres Ausführungsbeispiel für ein Kombinationsbild, das sich unter Berücksichtigung von n=40 Ansichten ergibt,

Fig.44 den Ausschnitt eines Filterarrays zum Ausführungsbeispiel nach Fig.43, wobei ein Filterelement etwa ein Fünftel der Breite eines Bildelementes aufweist,

Fig.45 die beispielsweise für ein Betrachterauge überwiegend sichtbare Auswahl aus den Ansichten $A_k$ (k=1..n) beim Ausführungsbeispiel nach Fig.43 und Fig.44,

Fig.46 ein Ausführungsbeispiel für ein Filterarray mit Transparent-Opak-Filtern und farbigen Wellenlängenfilterelementen $\beta_{pq}$, bei dem die Wellenlängenfilterelemente $\beta_{pq}$ etwa ein Fünftel der Breite der zugeordneten Bildelemente $\alpha_{ij}$ haben; passend zu einem Kombinationsbild nach Fig.43,

Fig.47 ein weiteres Beispiel eines Kombinationsbildes,

Fig.48 ein weiteres Beispiel für ein Wellenlängenfilter-Array, das gut geeignet ist für eine räumliche Darstellung mit einem Kombinationsbild nach Fig.47,

Fig.49a-c verschiedene Beispiele zur Illustration möglicher Ausführungen von Filterelementen $\beta_{pq}$,

Fig.50 ein Ausführungsbeispiel für eine erfindungsgemäße Anordnung mit einem in Blickrichtung eines Betrachters vor einer Bildwiedergabeeinrichtung liegenden Wellenlängenfilter-Array, das durch eine Verschiebeeinrichtung seitlich bewegt werden kann,

Fig.51 eine schematische Darstellung des Aufbaus einer autostereoskopischen Bildwiedergabeeinrichtung zur Verwendung in einer erfindungsgemäßen Anordnung,

Fig.52 ein Beispiel für eine bei n=40 mögliche Struktur des Wellenlängenfilter-Arrays bei Verwendung von ausschließlich opaken und transparenten Wellenlängenfilterelementen $\beta_{pq}$, gut geeignet zur räumlichen Darstellung eines Kombinationsbildes nach Fig.41.

## Ausführliche Beschreibung der Zeichnungen

Ausführungsbeispiel zur Erläuterung des erfindungsgemäßen Grundprinzips der 3D-Darstellung:

Das Ausführungsbeispiel, das nachfolgend zunächst zur Erläuterung des Grundprinzips der Erfindung dient, sieht sowohl für die Wiedergabe der Kombination von Teilinformationen der Ansichten $A_k$ (k=1...n) auf Bildelementen $\alpha_{ij}$ als auch zur Erzeugung des Maskenbildes mittels Wellenlängenfilterelementen $\beta_{pq}$ jeweils ein derzeit handelsüblich verfügbares Farb-LC-Display vor, wie beispielsweise *Sanyo LMU-TK 12A.* Auf diese Weise läßt sich die erfindungsgemäße Anordnung einfach und kostengünstig realisieren. Das schließt jedoch nicht aus, daß für die Bildwiedergabe als auch für die Wellenlängenfilterung jede andere denkbare Ausführung möglich ist, sofern die Grundbedingungen der Erfindung erfüllt sind.

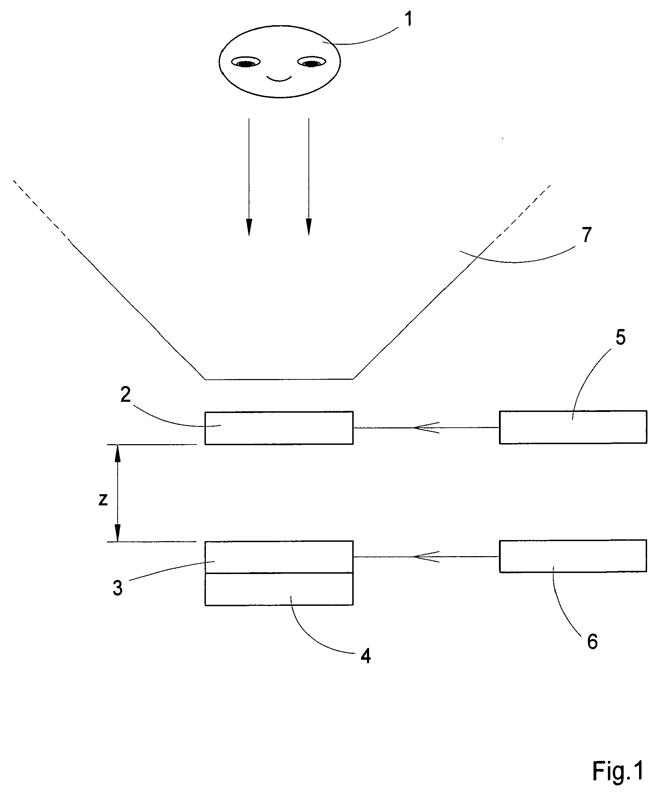

Von den verschiedenen Möglichkeiten, die hinsichtlich der Anordnung von bilddarstellendem Raster aus Bildelementen $\alpha_{ij}$, Array aus Wellenlängenfilterelementen $\beta_{pq}$ und flächiger Beleuchtungsquelle möglich sind, ist in Fig.1 eine Variante dargestellt, bei der in Blickrichtung B eines Betrachters 1 zunächst ein Farb-LC-Display 2 als bilddarstellendes Raster und in einem vorgegebenen Abstand z dahinter ein Farb-LC-Display 3 als Wellenlängenfilter-Array angeordnet sind. Das Farb-LC-Display 3 ist mit einer flächigen Beleuchtungsquelle 4 zu einer Baueinheit verbunden.

Außerdem sind das bildwiedergebende Farb-LC-Display 2 mit einer Ansteuerschaltung 5 und das als wellenlängenselektierende Farb-LC-Display 3 mit einer Ansteuerschaltung 6 verknüpft. Jedes der beiden Farb-LC-Displays 2,3 verfügt über separat ansteuerbare Subpixel der Grundfarben rot (R), grün (G) und blau (B). Zur besseren Unterscheidbarkeit werden nachfolgend die Subpixel des Farb-LC-Displays 2 mit R,G,B bezeichnet, die Subpixel des Farb-LC-Displays 3 mit R', G', B', die den jeweiligen Transparenzwellenlängen/-wellenlängenbereichen $\lambda_b$ entsprechen.

Die Ansteuerschaltung 5 ist so ausgebildet, daß wie oben beschrieben auf den einzelnen Subpixeln R,G,B Teilinformationen der Ansichten $A_k$ (k=1 ...n) generiert werden können.

Die Ansteuerschaltung 6 ist so ausgelegt, daß die einzelnen Subpixel R' ,G' ,B' für die jeweilige Grundwellenlänge rot, grün und blau mit einer Transparenz zwischen 0% und 100% geschaltet werden können. Dabei würde die Transparenz mit 0% einem opaken Wellenlängenfilterelement $\beta_{pq}$ entsprechen.

Der Abstand z zwischen dem Farb-LC-Display 2 und dem Farb-LC-Display 3 beträgt in diesem Falle 3,8mm, wobei die Subpixel R' ,G' ,B' des Farb-LC-Displays 3 mit den Subpixeln R,G,B des Farb-LC-Displays 2 so korrespondieren, daß sich die damit festgelegten Ausbreitungsrichtungen des von den Subpixeln R' ,G' ,B' austretenden und durch die Subpixel R,G,B hindurchtretenden Lichtes innerhalb eines Betrachtungsraumes 7, in dem sich ein oder mehrere Beobachter 1 befinden, in einer Vielzahl von Schnittpunkten treffen. Diese Schnittpunkte der Ausbreitungsrichtungen entsprechen Beobachtungspositionen, von denen aus mit einem Augenpaar die Szene/der Gegenstand räumlich wahrgenommen werden kann.

Dabei wurde der Abstand z für die beispielhafte Ausgestaltungsvariante nach Fig.1 ermittelt aus

$$(F3) \qquad \frac{z}{s_p} \simeq \frac{d_a}{p_d}$$

Für $s_p$ wurde der mittlere horizontale Abstand der Subpixel R',G',B'auf dem in Blickrichtung nachgeordneten Farb-LC-Display 3 mit 100$\mu$m angenommen. Für die mittlere Pupillendistanz $p_d$ wurde 65mm gesetzt. Als mittlerer Betrachtungsabstand $d_a$ wurde 2,5m gewählt. Daraus ergibt sich der auszuführende Abstand z mit 3,8 mm.

Vorteilhaft ist das Array mit den Wellenlängenfilterelementen $\beta_{pq}$, sofern dies dem Raster aus Bildelementen $\alpha_{ij}$ in Blickrichtung des Betrachters vorgeordnet ist, möglichst dünn ausgeführt. Umgekehrt, sofern das Raster aus Bildelementen $\alpha_{ij}$ vorgeordnet ist, sollte dieses möglichst dünn ausgeführt sein. Daher ist in Fig.1, Fig.8 und Fig.10 der Abstand z zwischen den einander zugekehrten Flächen des Arrays bzw. des Rasters eingetragen und beinhaltet nicht noch zusätzlich die Dicke der jeweils vorgeordneten Baugruppe. Als solche möglichst dünnen Baugruppen kommen beispielsweise bedruckte Folien oder dünne Farb-LC-Displays in Frage.

Die Ausbreitungsrichtungen sind jeweils durch die Flächenmitten der sichtbaren Abschnitte der betreffenden Subpixel R',G',B' und R, G, B vorgegeben, wobei sich die Strahlengänge nicht nur in einer Ebene, sondern vielfach räumlich verteilt ausbreiten.

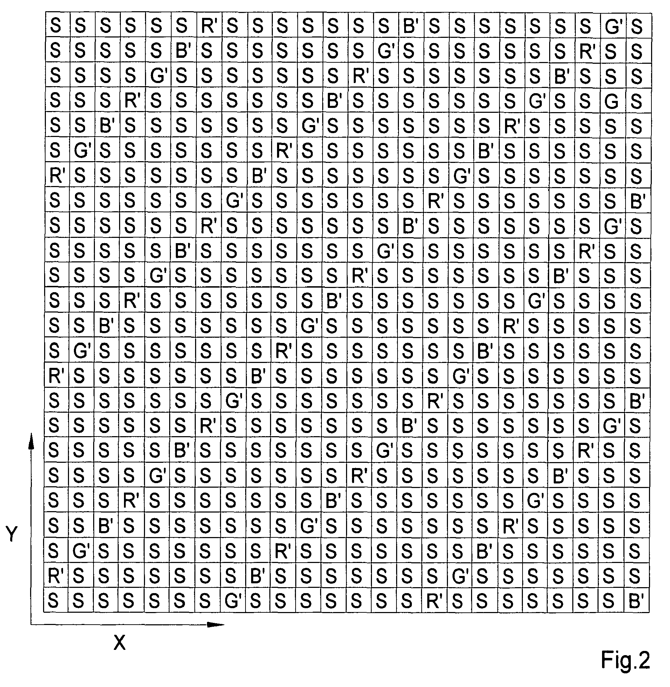

In Fig.2 ist ein Beispiel für ein Maskenbild anhand einzelner Subpixel. R',G',B' des Farb-LC-Displays 3 in einer Draufsicht auf die Displayfläche dargestellt, der Anschaulichkeit halber stark vergrößert und nicht maßstabgerecht. Die dargestellten Teilflächen entsprechen jeweils einem Subpixel, das bei Transparentsteuerung für Licht der jeweiligen Grundfarbe rot (R'), grün (G') und blau (B') durchlässig ist. Mit S sind die Subpixel bezeichnet, die opak gesteuert sind. Die Teilflächen sind hier vereinfacht quadratisch dargestellt; auf die exakte Darstellung der Form der Subpixel R',G',B' wurde hier bewußt verzichtet.

Werden beispielsweise zur Erzeugung eines Maskenbildes mit $b_{max}$ =4 drei Transparenzwellenlängen/-wellenlängenbereiche $\lambda_1,\lambda_2,\lambda_3$ vorgegeben für R,G,B und ein weiterer Transparenzwellenlängenbereich $\lambda_4$, mit dem das sichtbare Licht komplett abgeblockt werden kann, so ergibt sich unter Verwendung der Koeffizientenmatrix $d_{pq}$, die man nach der Vorschrift

$$(F4) \qquad d_{pq} = \frac{p-1-(p \bmod 3)}{q}\delta\big((p+q)\bmod 8\big) + \left(\frac{p-4}{q}\right)\delta\big[\delta\big((p+q)\bmod 8\big)\big]$$

erzeugen kann, ein für die räumliche Darstellung eines Gegenstandes/einer Szene auf der Grundlage von n=8 Ansichten $A_k$ (k=1...n) gut geeignetes Maskenbild.

Hinter dem in Fig.2 dargestellten Array, in diesem Falle also unterhalb der Zeichnungsebene der Fig.2, befindet sich die flächige Beleuchtungsquelle 4. Bei eingeschalteter Beleuchtungsquelle 4 geht von den einzelnen Subpixeln R' , G ' ,B' Licht der jeweiligen Grundfarben rot, grün und blau aus. Die mit S bezeichneten Subpixel bleiben dunkel.

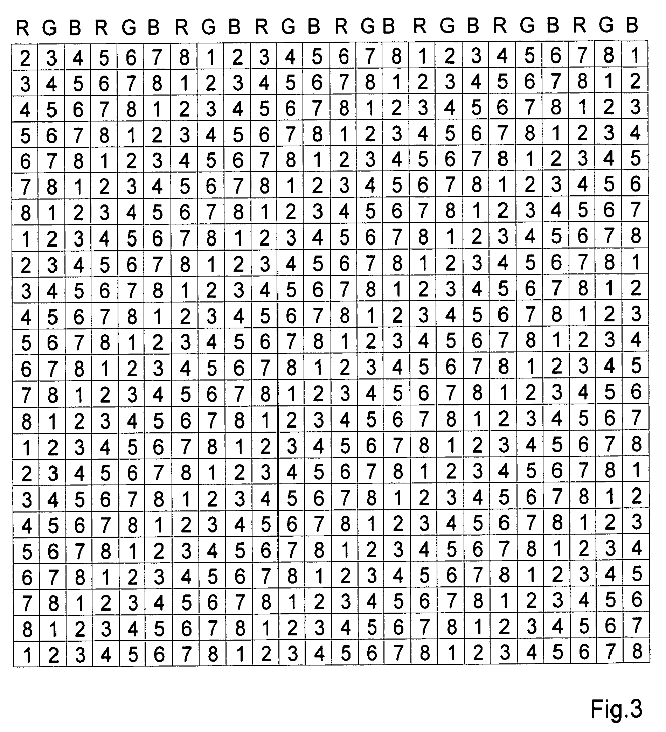

Fig.3 zeigt - ebenfalls nicht maßstabgerecht - ein Beispiel für die Kombination von Teilinformationen verschiedener Ansichten $A_k$ (k=1 ...8) in einer Draufsicht auf das Raster des Farb-LC-Displays 2, die nach der bereits beschriebenen Funktion

$$(F1) \qquad k = i - c_{ij} \cdot j - n \cdot IntegerPart\left[\frac{i - c_{ij} \cdot j - 1}{n}\right],$$

erzeugt worden ist, wobei $c_{ij}$ = -1 = const. und n=8 gewählt sind.

Auch hier entspricht jede quadratische Teilfläche einem Subpixel R,G,B. Die innerhalb der quadratischen Teilflächen angegebenen Ziffern 1 ...8=k geben die jeweilige Ansicht $A_k$ (k=1 ...n) an, zu der die auf einem Subpixel bzw. einem Bildelementen $\alpha_{ij}$ angezeigte Teilinformation gehört. So gehört eine auf einem mit k=1 bezeichneten Subpixel angezeigte Teilinformation zur Ansicht $A_1$, eine auf einem mit k=2 bezeichneten Subpixel angezeigte Teilinformation zur Ansicht $A_2$ usw. In dem gewählten Ausführungsbeispiel sind demnach zur räumlichen Darstellung acht Ansichten $A_1$ bis $A_8$, vorzugsweise Perspektivansichten, vorgesehen.

Aus Gründen der Übersichtlichkeit wurde u.a. darauf verzichtet, die "Black-Matrix" darzustellen, die oftmals technisch bedingt in Farb-LC-Displays eingearbeitet ist.

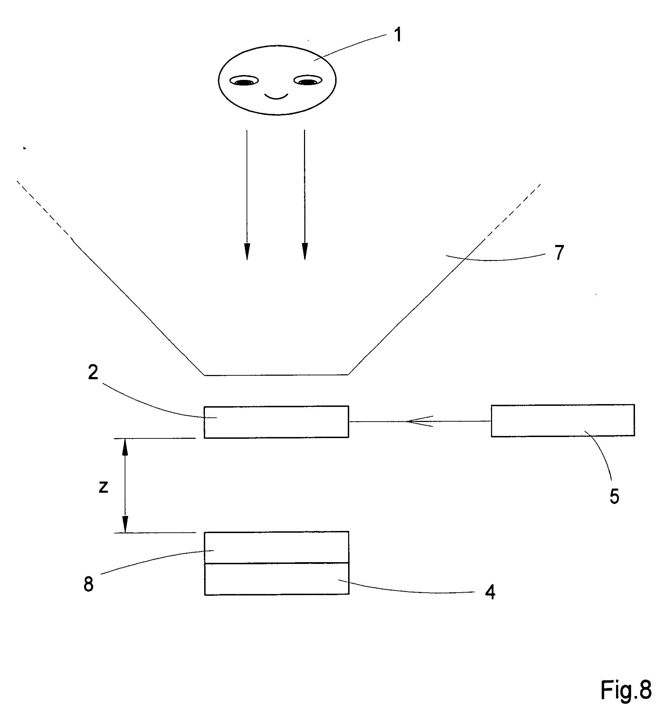

Stellt man sich nun vor, daß das in Fig.3 dargestellte Raster dem in Fig.2 dargestellten Array in Blickrichtung vorgeordnet ist, wie in Fig.8 gezeigt, so ist das jeweils von einem Subpixel R' der Grundfarbe rot kommende Licht (Fig. 2) durch alle korrespondierenden Subpixel R des Rasters (Fig.3) hindurch in den Betrachtungsraum 7 (der über der Zeichenebene liegt) hinein gerichtet und führt dabei die Teilinformationen mit, die auf den Subpixeln R dargestellt sind und Teilinformationen der Ansichten $A_k$ (k=1 ...n) entsprechen.

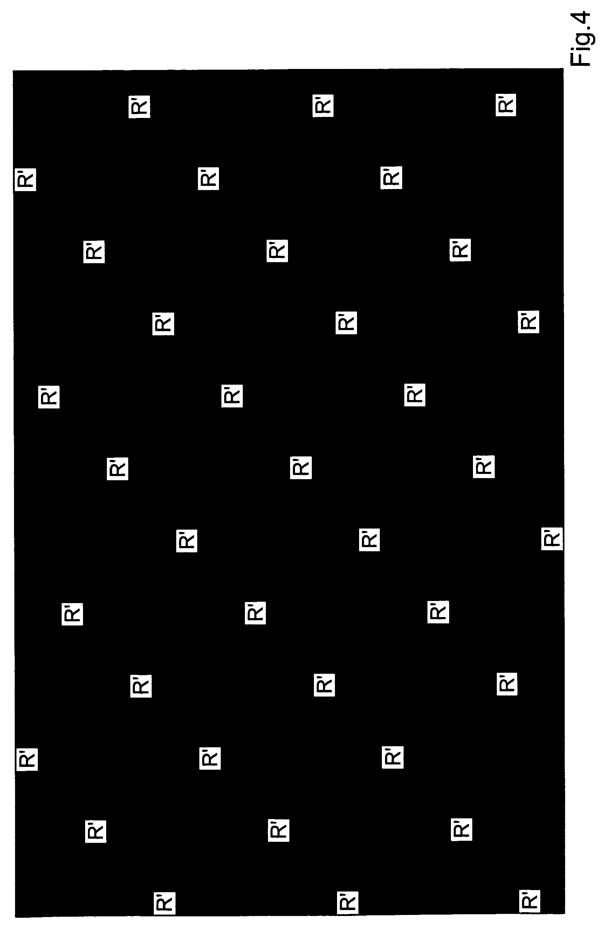

Die Wirkungsweise, die hierbei dem Zustandekommen des räumlichen Eindrucks zugrunde liegt, soll nun anhand von Fig.4 bis Fig.7 ausführlich erläutert werden, wobei eine Anordnung gemäß Fig.1 0 zugrunde liegt.

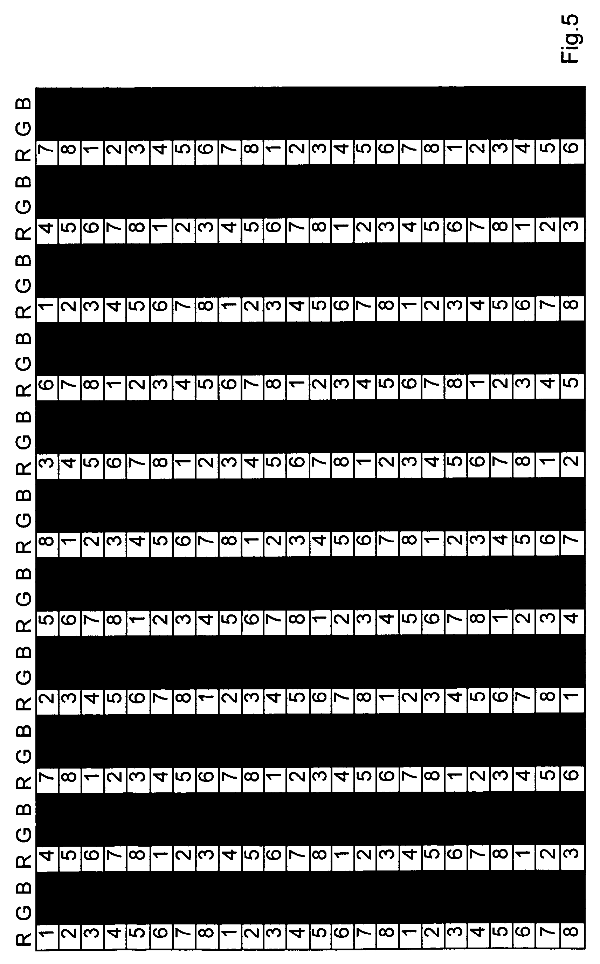

Vereinfachend werden diesbezüglich ausschließlich rote Bildelemente $\alpha_{ij}$ bzw. rote Wellenlängenfilter $\beta_{pq}$ betrachtet. Das bedeutet, daß in Fig.4 nur die roten Wellenlängenfilter $\beta_{pq}$ aus Fig.2 dargestellt sind; Fig.4 zeigt demzufolge die Struktur eines Maskenbildes mit Wellenlängenfilterelementen R'. Entsprechend zeigt Fig.5 nur die roten Bildelemente $\alpha_{ij}$ aus Fig.3. Die in die Spalten der Darstellung in Fig.5 eingetragenen Zahlen entsprechen der fortlaufenden Nummer k der Ansicht $A_k$(k=1...8), aus der die auf diesem Bildelement $\alpha_{ij}$ bzw. Subpixel R darzustellende Teilinformation zu entnehmen ist, um ein Kombinationsbild aus den Ansichten $A_k$ (k=1 ...8) zu erzeugen. Diese beispielhafte Erläuterung ist auf blau und grün in äquivalenter Weise übertragbar.

Die Darstellungen in Fig.4 und Fig.5 sind nicht maßstabgerecht gezeichnet, und das Maskenbild ist etwas vergrößert dargestellt. Dies soll den Sachverhalt widerspiegeln, daß z.B. bei Verwendung eines Maskenbildes nach Fig. 2, bei dem die Wellenlängenfilterelemente $\beta_{pq}$ tatsächlich die gleichen Abmessungen besitzen wie die Bildelemente $\alpha_{ij}$ in Fig.3, das Maskenbild einem Betrachter auf Grund der näheren Position in Blickrichtung etwas größer erscheint als das Raster mit den Bildelementen $\alpha_{ij}$,

Legt man nun - gedanklich - dieses leicht vergrößerte Maskenbild nach Fig.4 unmittelbar auf das Kombinationsbild nach Fig.5, so werden die für verschiedene Augenpositionen sichtbaren Bildelemente $\alpha_{ij}$ oder Anteile davon erkennbar.

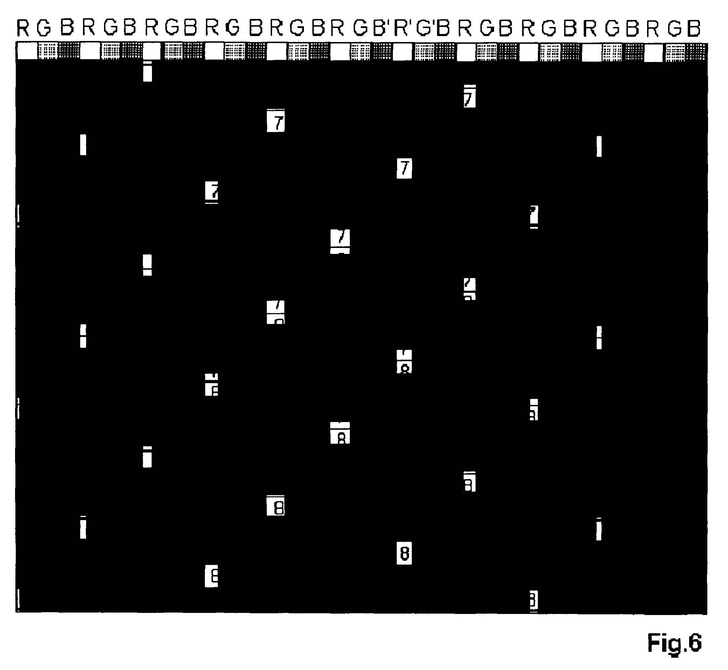

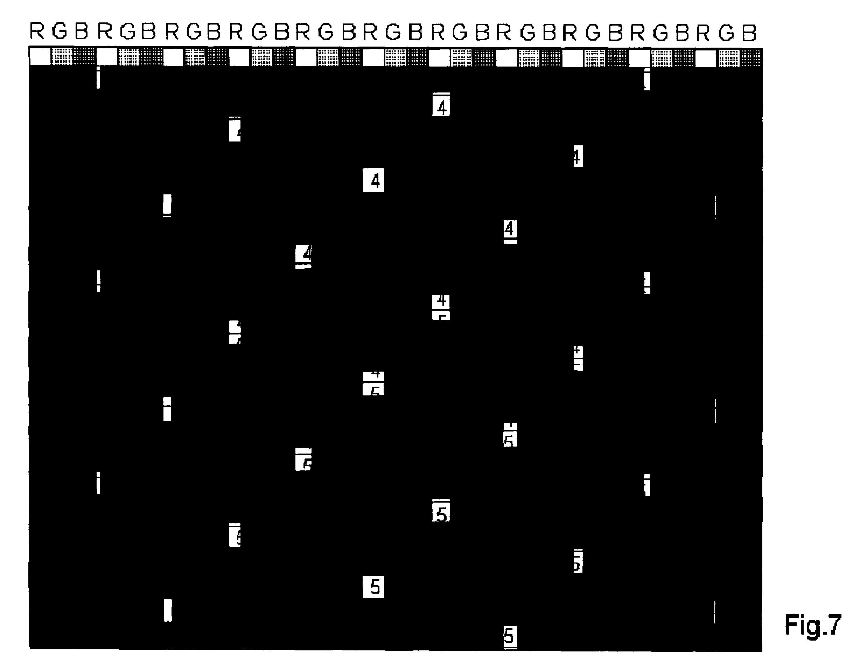

Dies ist in Fig.6 und Fig.7 beispielhaft und nicht maßstabgerecht für zwei - jeweils für verschiedene Augenpositionen gedachte - Maskenbilder dargestellt. Man erkennt, daß z.B. aus der Augenposition, die der Fig.6 zugeordnet ist, vornehmlich Bildelemente $\alpha_{ij}$ (oder Anteile davon) der Ansichten $A_7$ und $A_8$ wahrnehmbar sind. Nach Fig.7 dagegen sind aus einer Position, in der sich das andere Auges desselben Betrachters befindet, vornehmlich Bildelemente $\alpha_{ij}$ (oder Teile davon) aus den Ansichten $A_4$ und $A_5$ sichtbar.

Damit soll lediglich das Grundprinzip des erfindungsgemäßen Verfahrens verdeutlicht werden. Mit der Vielfalt, die aus der flächenhaften Anordnung von Bildelementen $\alpha_{ij}$ resultiert, ergibt sich dann die dreidimensionale Wahrnehmung: beide Augen sehen aus den Betrachtungspositionen Bildelemente $\alpha_{ij}$ bzw. Teilinformationen überwiegend verschiedener Ansichten $A_k$ (k=1 ...n), wobei der Anteil der für jedes Auge wahrnehmbaren Teilinformationen für die dreidimensionale Wahrnehmung entscheidend ist.

Abweichend von der Grundkonfiguration nach Fig.1 sind weitere Ausgestaltungsvarianten der Erfindung möglich. So kann z.B. - wie in Fig.8 dargestellt - vorgesehen sein, daß anstelle des Farb-LC-Displays 3 (in Fig.1) ein Wellenlängenfilter-Array 8 angeordnet ist, das zwar in ähnlicher Weise wie das Farb-LC-Display 3 strukturiert angeordnete Wellenlängenfilterelemente $\beta_{pq}$ aufweist, die beispielsweise jedoch bezüglich ihrer Wellenlängenselektivität nicht veränderbar sind. Jedem dieser Wellenlängenfilterelemente $\beta_{pq}$ ist die Selektivität nach den Grundfarben rot, grün oder blau bzw. opak oder anderer Transparenzwellenlänge/-wellenlängenbereich $\lambda_b$ unveränderbar zugeordnet, weshalb hier auch die Ansteuerschaltung überflüssig ist.

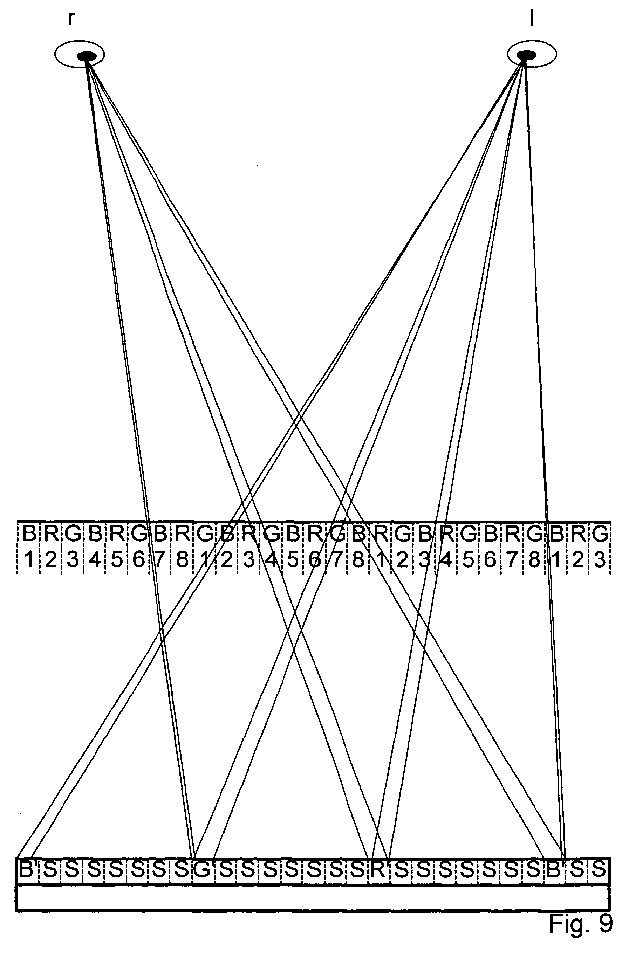

Fig.9 gibt (nicht maßstabgerecht) einen Schnitt durch eine solche in Fig.8 dargestellte Anordnung wieder, wobei die Gegebenheiten nach Fig.1 bis Fig.3 zugrunde gelegt worden sind. Die Darstellung ist auch hier unmaßstäblich, kann aber trotzdem zur Erläuterung dienen: In Fig.9 sieht beispielsweise das rechte Auge r jeweils etwa ein halbes Bildelement $\alpha_{ij}$ mit Teilinformationen aus den Ansichten $A_3$ (in diesem Falle R) und $A_8$ (in diesem Falle B) und einen sehr geringen

Teil eines Bildelementes $\alpha_{ij}$ mit einer Teilinformation aus der Ansicht $A_6$ (in diesem Falle G). Das linke Auge hingegen nimmt jeweils etwa ein halbes Bildelement $\alpha_{ij}$ mit Teilinformationen aus den Ansichten $A_4$ (in diesem Falle R) und $A_7$ (in diesem Falle G) sowie jeweils einen sehr geringen Teil eines Bildelementes $\alpha_{ij}$ mit Teilinformationen aus den Ansichten $A_1$ und $A_2$ (in diesem Falle B) wahr.

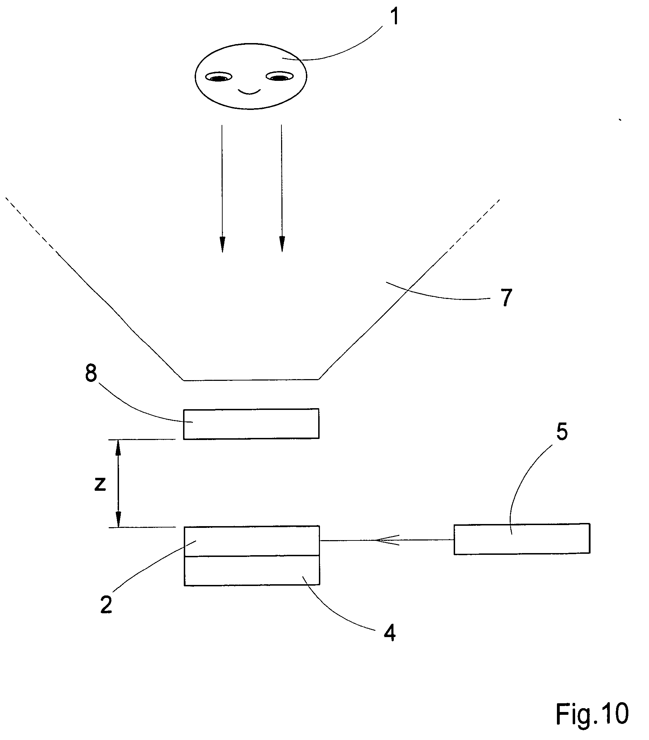

In einer weiteren Ausgestaltungsvariante, die von Fig.1 und Fig.8 abweicht, kann nach Fig.10 vorgesehen sein, daß von der Position des Betrachters 1 in Blickrichtung zunächst das Wellenlängenfilter-Array 8 und in dem Abstand z dahinter das bildgebende Farb-LC-Display 2 positioniert sind, wobei letzteres mit der flächigen Beleuchtung 4 zu einer Baueinheit verbunden ist. Hiermit wird grundsätzlich der gleiche Effekt erzielt, nämlich die Ausbreitungsrichtungen des von den Subpixeln R,G,B des Farb-LC-Displays 2 kommenden Lichtes durch die korrespondierenden Wellenlängenfilterelemente R' ,G' ,B' des Wellenlängenfilter-Arrays 8 hindurch schneiden sich im Betrachtungsraum 7 in einer Vielzahl von Betrachtungspositionen, aus denen der dargestellte Gegenstand räumlich wahrnehmbar ist.

Nochmals sei darauf hingewiesen, daß sich der Gegenstand der Erfindung nicht auf die hier beispielhaft dargestellten Anordnungen beschränkt, sondern daß von der Erfindung alle Anordnungen erfaßt sind, bei denen die Ausbreitungsrichtungen durch eine wellenlängenselektive Struktur, die nach oben genannter Vorschrift erzeugt wird, im Zusammenspiel mit einem - bevorzugt farbigen - Raster aus Bildelementen $\alpha_{ij}$ festgelegt werden.

Wie die Verringerung bzw. Vermeidung von Moiré-Effekten als ein wesentlicher Vorteil der Erfindung zustande kommt, soll nachfolgend beispielsweise anhand der in Fig.1 gezeigten Anordnung erläutert werden, wobei das Kombinationsbild aus Fig.3 und das Maskenbild aus Fig.2 zugrunde gelegt werden. Es wird als bekannt vorausgesetzt, daß Moiré-Streifen bei der Überlagerung periodischer Muster in der Richtung entstehen, welche senkrecht auf der Winkelhalbierenden des eingeschlossenen Winkels aus zwei Vorzugsrichtungen der verschiedenen besagten Muster stehen.

Im Falle eines handelsüblichen Farb-LC-Displays sind die Subpixel in Spalten angeordnet, wobei genau jede dritte Spalte ausschließlich rote Subpixel enthält. Da im gewählten Ausführungsbeispiel sowohl für die Wiedergabe der Ansichten $A_k$ (k=1 ...n) als auch für die Erzeugung des Maskenbildes handelsübliche Farb-LC-Displays verwendet werden, ist demnach eine der für die Ermittlung der Winkelhalbierenden in Betracht zu ziehende Richtung stets die Vertikale. Die jeweils zweite Richtung ergibt sich, wenn man auf dem Maskenbild einen ausgewählten roten Subpixel mit einem anderen durch eine Gerade verbindet. (Bezugspunkte seien stets die unteren linken Ecken der Subpixel).

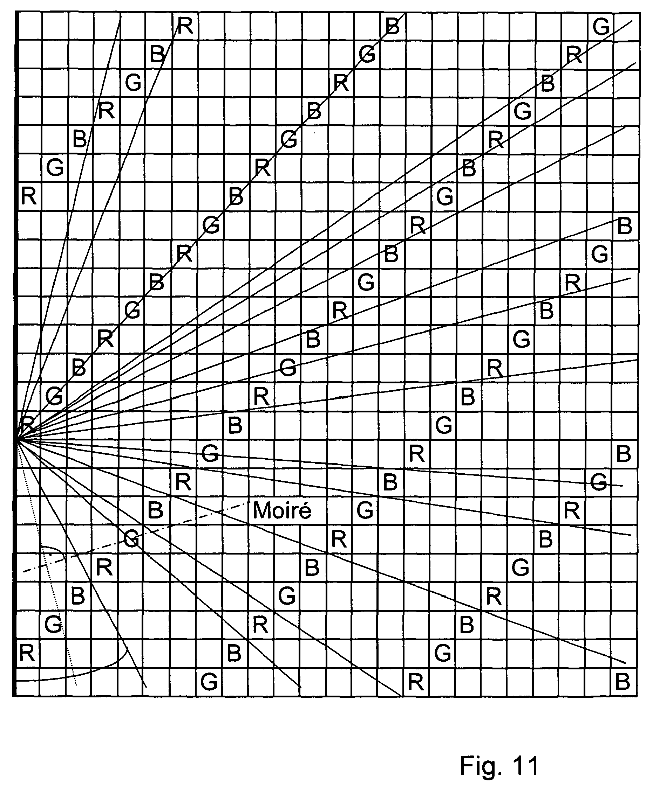

In Fig.11 ist dies für eine solche Gerade beispielhaft dargestellt. Die resultierende Winkelhalbierende ist mit einer Strichlinie dargestellt, während die Mittelsenkrechte auf der Winkelhalbierenden die Ausbreitungsrichtung des zugeordneten Moire-Streifens angibt. Für alle weiteren in Fig.11 dargestellten Verbindungsgeraden bzw. -richtungen zweier roter Wellenlängenfilterelemente $\beta_{pq}$ des Maskenbildes lassen sich so analog die korrespondierenden Ausbreitungsrichtungen für Moiré-Streifen ermitteln. Darüberhinaus gibt es noch eine Vielzahl weiterer relevanter Richtungen, die wegen der ausschnittweisen Darstellung des Maskenbildes hier nicht ersichtlich sind.

Die Wahrnehmbarkeit der Moire-Streifen hängt unmittelbar zusammen mit der Raumfrequenz der roten Wellenlängenfilterelemente $\beta_{pq}$ auf den Verbindungsgeraden. Je geringer der Abstand der roten Wellenlängenfilterelemente $\beta_{pq}$ auf den Geraden ist, d.h. je höher die Raumfrequenz der roten Wellenlängenfilterelemente $\beta_{pq}$ ist, um so deutlicher sind die entsprechenden Moire-Streifen wahrnehmbar.

Da sich in einer Anordnung nach Fig.1 bzw. Fig.2 aber gleichzeitig sehr viele Moire-Streifen entwickeln, ist für einen Betrachter keine dominierende Moire-Vorzugsrichtung wahrzunehmen.

Sämtliche hier dargelegten Überlegungen gelten gleichermaßen auch für die grünen und blauen Bildelemente $\alpha_{ij}$ bzw. Wellenlängenfilterelemente $\beta_{pq}$, wodurch auch dort eine Verminderung der Moiré-Effekte erzielt wird.

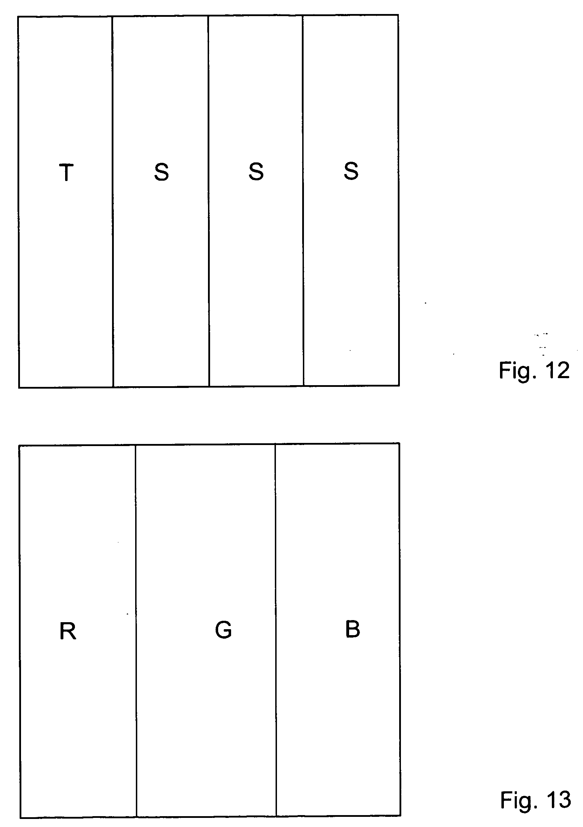

Die Gründe für die verbesserte Textlesbarkeit - verglichen mit bekannten Schwarz-Weiß-Barriereverfahren - sollen im folgenden anhand der Fig.12 und der Fig.13 erläutert werden. Fig.12 zeigt beispielsweise die Verhältnisse bei einer aus dem Stand der Technik bekannten Schwarz-Weiß-Barriere, wenn auf eine für das sichtbare Licht transparente Spalte T drei opake Spalten S folgen, was einer Barriere für ein System mit vier Ansichten entspricht.

Werden wellenlängenabhängige Maskenbildstrukturen ganz ohne opake Flächen verwendet, wie beispielsweise in Fig.1 3 gezeigt, und wird beiden Maskenbildstrukturen nach Fig.12 und Fig.13 gewöhnlicher Text untergelegt, so ist unter der Schwarz-Weiß-Barriere im Mittel nur ein Teil, nämlich ein Viertel der dargestellten Textfläche sichtbar. Bei der RGB-Barriere nach Fig.13 hingegen ist der Text unter jedem Filter sichtbar. Dies erleichtert die Textlesbarkeit ganz wesentlich.

Nachfolgend werden nun Ausführungsbeispiele der erfindungsgemäßen Anordnung bei Ausstattung mit Mitteln zur 2D-3D-Umschaltung näher erläutert.

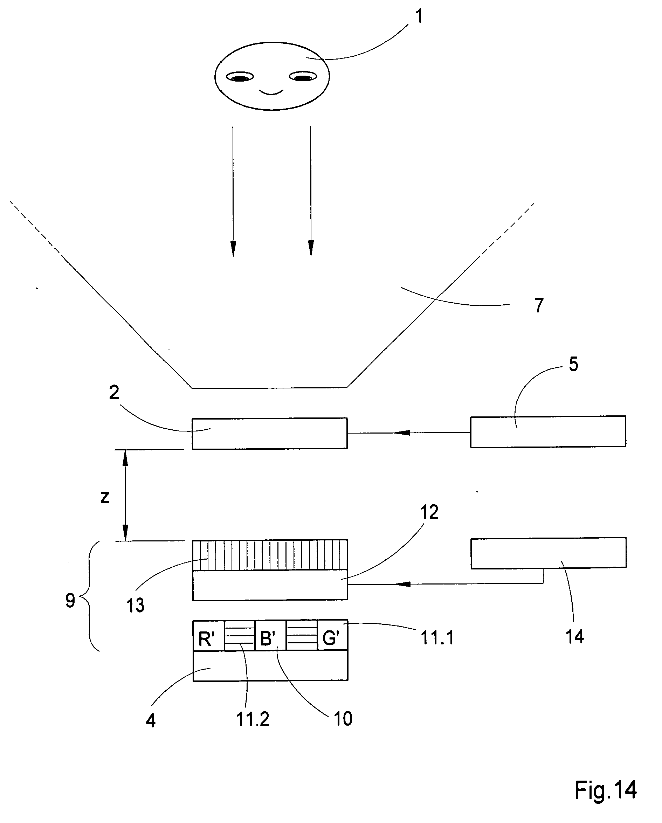

In einem ersten solchen Ausführungsbeispiel, das in Fig.14 gezeigt ist und bei dem die dreidimensionale (autostereoskopische) Darstellung auf eine zweidimensionale Darstellung umschaltbar ist, stammen die auf den Bildelementen $\alpha_{ij}$ wiedergegebenen Bildinformationen aus Perspektivansichten der darzustellenden Szenen bzw. Gegenständen.

In Fig.14 sind in Blickrichtung eines Betrachters 1 zunächst eine Bildwiedergabeeinrichtung in Form eines derzeit handelsüblich verfügbaren Farb-LC-Displays 2, wie beispielsweise *Sanyo LMU-TK 12A,* und in einem Abstand z dahinter eine Filteranordnung 9 mit einem Filterarray 10 angeordnet. Hinter der Filteranordnung 9 befindet sich auch hier wieder eine flächige Beleuchtungsquelle 4, die weißes Licht abstrahlt.

Das Filterarray 10 besteht in diesem Fall aus einer rasterartig angeordneten Kombination von Wellenlängenfilterelementen 1 1.1 und Linearpolarisationsfilterelementen 11 .2. Neben diesem Filterarray 10 umfaßt die Filteranordnung 9 ein optisches Medium 12, mit dem die Polarisationsrichtung des einfallenden linearpolarisierten Lichtes während des Durchtritts durch die Filteranordnung 9 verdreht werden kann, sowie einen flächenhaften Linearpolarisationsfilter 13. Der Linearpolarisationsfilter 13 ist zwischen dem Farb-LC-Display 2 und dem optischen Medium 12 positioniert. Die Durchlaßrichtung des Linearpolarisationsfilter 13 entspricht der Durchlaßrichtung eines vorhandenen, in der Zeichnung jedoch nicht dargestellten beleuchtungsseitigen Polarisationsfilters des Farb-LC-Displays 2.

Das Farb-LC-Display 2 verfügt auch hier über separat ansteuerbare Subpixel der Grundfarben rot (R), grün (G) und blau (B) und ist mit einer Ansteuerschaltung 5 verknüpft. Zur besseren Unterscheidbarkeit sind wiederum die Subpixel des Farb-LC-Displays 2 mit R,G,B bezeichnet, die Wellenlängenfilterelemente 11.1 hingegen in Abhängigkeit von ihrer Transparenz mit R',G',B'. Die Wellenlängenfilterelemente 11.1 sind für Licht unabhängig von der Polarisationsrichtung durchlässig.

Die Ansteuerschaltung 5 ist wie schon in den vorher erläuterten Ausführungsbeispielen zur Generierung von Teilinformationen der Ansichten $A_k$ (k=1 ...n) auf den einzelnen Subpixeln R,G,B des Farb-LC-Displays 2 ausgebildet.

Ist der 3D-Modus aktiviert - wie weiter unten noch näher erläutert werden wird - so schneiden sich die Ausbreitungsrichtungen des von den Wellenlängenfilterelementen 11.1 der Filteranordnung 9 kommenden und durch die korrespondierenden Subpixeln R,G,B des Farb-LC-Displays 2 strahlenden Lichtes in dem Betrachtungsraum 7 in einer Vielzahl von Betrachtungspositionen, von denen aus der dargestellte Gegenstand bzw. die Szene räumlich wahrnehmbar ist.

Der Abstand z zwischen dem Farb-LC-Display 2 und dem Filterarray 10 beträgt hier 2,3 mm. Dieses Maß ergibt sich aus (F3), wenn für $s_p$ der mittlere Abstand der Wellenlängenfilterelemente 11.1 auf dem Filterarray 10 zueinander mit 100 $\mu$m angenommen wird. Dabei sind die Wellenlängenfilterelemente 11.1 in ihrer Ausdehnung senkrecht zur Blickrichtung etwa ebenso breit ausgestaltet, wie die Subpixel des verwendeten Farb-LC-Displays 2. Für die mittlere Pupillendistanz $p_d$ wurde 65 mm gesetzt. Als mittlerer Betrachtungsabstand $d_a$ wurde 1,5 m gewählt.

Die Kombination von Teilinformationen verschiedener Ansichten $A_k$ (k=1...8) auf dem Farb-LC-Display 2 entspricht hier wiederum dem Beispiel nach Fig.3. Weiterhin liegt dem Filterarray 10 auch hier das Beispiel des Maskenbildes nach Fig.2 zugrunde. Die Kombination von Teilinformationen und das Maskenbild sind hier ebenfalls in der bereits beschriebenen Weise nach den Funktionen (F1) bzw. (F2) erzeugt, und die Wirkungsweise, die dem Zustandekommen des autostereoskopischen Eindrucks zugrunde liegt, entspricht der weiter oben schon anhand Fig.4 bis Fig.7 und Fig. 9 gegebenen Erläuterung.

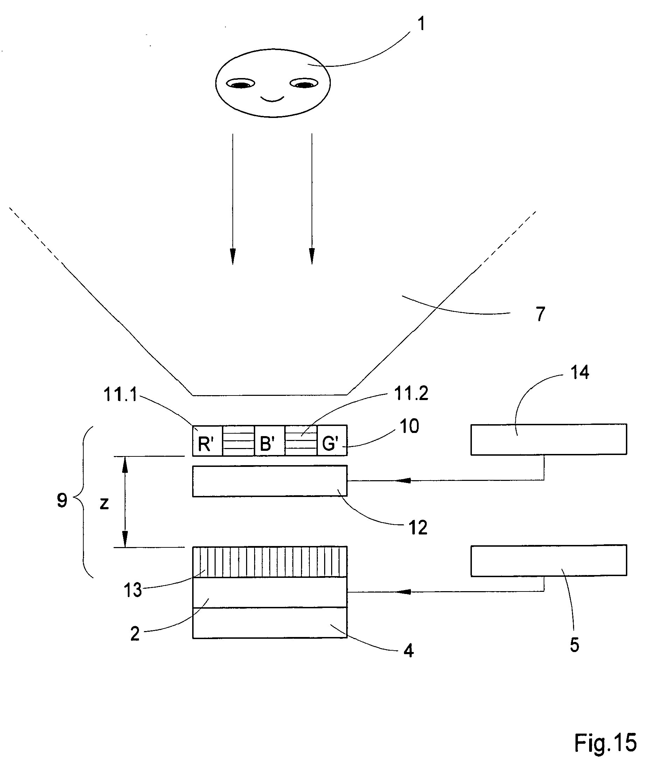

Ein zweites Ausführungsbeispiel der erfindungsgemäßen Anordnung mit Mitteln zur 2D-3D-Umschaltung ist in Fig.15 dargestellt. Dies entspricht hinsichtlich der verwendeten Baugruppen im wesentlichen dem ersten Ausführungsbeispiel nach Fig.14, allerdings befindet sich jetzt die Filteranordnung 9 mit dem Filterarray 10, das wiederum sowohl Wellenlängenfilterelementen 11.1 als auch Linearpolarisationsfilterelementen 11.2 umfaßt, aus der Position des Betrachters 1 gesehen im Abstand z vor dem bildgebenden Farb-LC-Display 2. Weiterhin befindet sich das Filterarray 10 bei dem Ausführungsbeispiel nach Fig.15 nicht mehr unmittelbar vor der Lichtquelle 4.

In Fig.15 ist das Farb-LC-Display 2 mit der flächigen Beleuchtungseinrichtung 4 und dem Linearpolarisationsfilter 13 zu einer Baueinheit verbunden. Ist nun der 3D-Modus aktiviert - wie weiter unten noch näher erläutert werden wird - so schneiden sich die Ausbreitungsrichtungen des von den Subpixeln R,G,B des Farb-LC-Displays 2 kommenden und durch die korrespondierenden Wellenlängenfilterelemente 11.1 der Filteranordnung 9 strahlenden Lichtes in dem Betrachtungsraum 7 in einer Vielzahl von Betrachtungspositionen, von denen aus der dargestellte Gegenstand bzw. die Szene räumlich wahrnehmbar ist.

In Fig.14 und in Fig.15 sind die Linearpolarisationsfilterelemente 11.2 durch horizontale Linien dargestellt, um so die Polarisationsrichtung zu symbolisieren. Es ist erkennbar, daß die Polarisationsrichtung bei allen Linearpolarisationsfilterelementen 11.2 gleich ist. Die Linearpolarisationsfilterelemente 11.2 können in ihrer Wirkung entweder opak oder auch im gesamten Bereich des sichtbaren Lichtes transparent sein; es ist daneben auch möglich, die polarisationsabhängige Transparenz auf bestimmte Wellenlängenbereiche, z.B ebenfalls auf R',B',G', zu beschränken.

Die Anordnung der Wellenlängenfilterelemente 11.1 und der Linearpolarisationsfilterelemente 11.2 in Blickrichtung des Betrachters entspricht in beiden Ausführungsbeispielen nach Fig. 14 und Fig.15 der stark vergrößerten und nicht maßstabgerechten Darstellung in Fig.2. Die Wellenlängenfilterelemente 11.1 sind in Fig.2 anhand der Bezeichnungen R', B', G' erkennbar, die Linearpolarisationsfilterelemente 11.2 dagegen sind mit S bezeichnet.

Das Filterarray 10 ist vorzugsweise in Form einer dünnen Kunststoff-Folie oder Kunststoff-Platte ausgebildet, die in der beschriebenen Weise strukturiert sind.

Das ansteuerbare optische Medium 12, das eine definierte Drehung der Polarisationsrichtung des hindurchtretenden linearpolarisierten Lichtes ermöglicht, wirkt mit dem Filterarray 10 und dem Linearpolarisationsfilter 13 zusammen, um - je nach Drehung - den Lichtdurchtritt durch die Filteranordnung 9 im Bereich der Linearpolarisationsfilterelemente 11.2 entweder zu ermöglichen oder aber nicht zu ermöglichen.

Zur Auslösung der Drehung ist eine Ansteuereinrichtung 14 vorgesehen, welche beispielsweise durch Anlegen eines Steuersignals an das optische Medium 12 eine Veränderung der Polarisationsrichtung des Lichtes auf dem Weg von der Lichteintrittsseite zu der Lichtaustrittsseite ermöglicht.

Diesbezüglich weist das optische Medium 12 beispielsweise Flüssigkristalle auf. In dem Ausführungsbeispiel nach Fig.14 wird hierzu ein herkömmliches LC-Display (bzw. ein LC-Panel) eingesetzt, bei dem gegebenenfalls vorhandene Farbfilter und Polarisationsfilter fehlen oder entfernt wurden. jedoch kann auch ein LC-Display verwendet werden, bei dem einseitig noch ein Linearpolarisationsfilter vorgesehen ist, das dann die Funktion des oben erläuterten Linearpolarisationsfilters 13 übernimmt. Die Umschaltung des optischen Mediums 12 erfolgt in diesem Fall günstigerweise über die Ansteuereinrichtung 14 des entsprechend ausgebildeten LC-Displays. Beispielhaft kann als Ansteuersignal intern ein weißer oder schwarzer Bildschirminhalt dienen, der dann z.B. zwei zueinander gekreuzten effektiven Polarisationsdrehungsrichtungen der Flüssigkristalle entspricht. Als optisches Medium 12 zur Drehung der Polarisationsrichtung eignen sich u.a. LC-Displays vom Typ Philips 150B oder Sanyo LMU-TK 12A. Bei diesen ergibt sich die weitere Vereinfachung, daß nicht jedes einzelne Flüssigkristallelement separat angesteuert werden muß, sondern daß alle Flüssigkristallelemente auf einen oder wenige Steuerbausteine reagieren können.

Bei dem Ausführungsbeispiel nach Fig.15 dagegen ist eine Bildwiedergabeeinrichtung vorgesehen, die linear polarisiertes oder unpolarisiertes Licht aussendet. Sie wird hier beispielhaft durch das Farb-LC-Display 2 und die dahinterliegende Beleuchtungsquelle 4 gebildet. Bei der hier beschriebenen beispielhaften Verwendung eines Farb-LC-Displays 2 ist der flächenhaft ausgedehnte Linearpolarisationsfilter 13 funktionsbedingt schon in das Farb-LC-Displays 2 integriert, so daß das Farb-LC-Display 2 linear polarisiertes Licht aussendet. Für andere Typen von Displays 2, welche unpolarisiertes Licht aussenden, wie z.B. Plasma-Bildschirme, stellt der Linearpolarisationsfilter 13 allerdings eine separat anzufügende Baugruppe dar.

Erfolgt in dem optischen Medium 12, das in beiden beschriebenen Fällen zwischen dem Linearpolarisationsfilter 13 und dem Filterarray 10 angeordnet ist, keine Drehung der Polarisationsrichtung und schneiden sich die Polarisationsrichtung des flächenhaft ausgedehnten Linearpolarisationsfilters 13 mit der Polarisationsrichtung der Linearpolarisationsfilterelemente 11.2 unter einem Winkel von 90°, so wird ein Lichtdurchtritt im Bereich der Linearpolarisationsfilterelemente 11.2 der Filteranordnung 9 weitestgehend unterbunden. In diesem Fall besitzt dann die Filteranordnung 9 eine für die autostereoskopische, dreidimensionale Darstellung geeignete Strukturierung.

Zur Umschaltung auf die zweidimensionale Darstellungsart wird das optische Medium 12 über die Ansteuereinrichtung 14 betätigt, woraufhin die Polarisationsrichtung des einstrahlenden Lichtes um einen definierten Winkel gedreht wird, und zwar derart, daß dieses durch die Linearpolarisationsfilterelemente 11.2 hindurchtreten kann. Die ursprünglich starke Einschränkung der Ausbreitungsrichtungen des Lichtes wird damit deutlich abgemindert. Zudem ergibt sich eine höhere mittlere Lichtdurchlässigkeit. Für den Betrachter sind in diesem Fall mehr Bildinformationen sichtbar, wodurch die Bildauflösung ansteigt. Damit läßt sich insbesondere die Lesbarkeit von Texten verbessern. Im idealfall, das heißt bei einer parallelen Ausrichtung der Polarisationsrichtungen an der Lichtaustrittsseite des optischen Mediums 12 und der Linearpolarisationsfilterelemente 11.2, wirken letztere als 100 % transmittierende Analysatoren. Allerdings ist eine strenge Parallelität nicht zwingend, da auch noch bei kleinen Schnittwinkeln der Polarisationsrichtungen bis etwa 15°, die hier noch als im wesentlichen parallel angesehen werden, eine Lichtdurchlässigkeit von etwa 90 Prozent erreicht wird. Diese ist für eine gute Texterkennung sowie eine hochauflösende 2D-Bilddarstellung in jedem Fall ausreichend.

Bei dem in Fig.15 dargestellten Ausführungsbeispiel sind die Polarisationsrichtungen des Linearpolarisationsfilters 13 und der Linearpolarisationsfilterelemente 11.2 derart angeordnet, daß im ausgeschalteten Zustand des optischen Mediums 1 2 sich die Anordnung in der 3D-Betriebsart befindet. Durch eine andere Ausrichtung beispielsweise des Linearpolarisationsfilters 13 ist jedoch auch eine umgekehrte Betriebsweise möglich, bei der im ausgeschalteten Zustand des optischen Mediums 12 die 2D-Betriebsart vorherrscht, so daß für den 3D-Betrieb das optische Medium 12 zu aktivieren ist.

Die Polarisationsdrehung des optischen Mediums 12 kann, wie eingangs erläutert, auf unterschiedliche Weise erzeugt werden. In einer Variante kann als schaltbares optisches Medium 12 eine longitudinale Pockelszelle mit einer entsprechenden Ansteuerung zum Einsatz kommen. Bei einer solchen Zelle wird die natürliche optische Achse eines Kristalls, aus dem diese im wesentlichen besteht, parallel zu einem zuschaltbaren elektrischen Feld ausgerichtet, das in Longitudinalrichtung modulierbar ist. Die bei eingeschaltetem Feld in dem Kristall entstehenden schnellen und langsamen optischen Achsen müssen in einem Winkel von 45° zu der Schwingungsebene des linearpolarisierten, einfallenden Lichtes stehen, was hier durch eine entsprechende Ausrichtung erreicht wird. Die Pockelszelle besteht beispielsweise aus Lithiumniobat ($LiNbO_3$) oder Kaliumphosphat ($KH_2PO_4$). Wird an die Pockelszelle die sogenannte Halbwellenspannung U angelegt, so erfolgt eine Drehung der Polarisationsrichtung des einfallenden linearpolarisierten Lichtes um 90°. Die Halbwellenspannung errechnet sich nach der Gleichung

$$(F5) \qquad U = \lambda_0 / 2 r n_0^3.$$

Hierin ist $\lambda_0$ die Basiswellenlänge, für die die Halbwellenspannung errechnet werden soll, r das Tensorelement der linearen elektrooptischen Konstanten, welches die in der Pockelszelle verwendete Komponente angibt und $n_o$ die Brechzahl des entsprechenden Kristalls. Beispielsweise beträgt für $\lambda_0$ = 555 nm (grünes Licht) für $LiNbO_3$ die Halbwellenspannung U = 747 V und für $KH_2PO_4$ U = 7327 V.

Abweichungen vom exakten Polarisationsrichtungswinkel 90° für die von 555 nm verschiedenen Wellenlängen wirken sich nicht nachteilig aus, da die Linearpolarisationsfilterelemente 11.2 und der Linearpolarisationsfilter 13 wie alle Polarisator-Analysator-Paare eine Intensitätstransmissionscharakteristik proportional dem Quadrat des Kosinus des Verdrehwinkels aufweisen. Dies bedeutet, daß der Drehwinkel der Polarisationsrichtung des auf das Filterarray 10 bzw. den Linearpolarisationsfilter 13 gerichteten Lichtes im Bereich von 75° bis 105° immer für einen im Idealfall weit über 90-%igen Durchgang des Lichtes durch die Filteranordnung 9 sorgt.

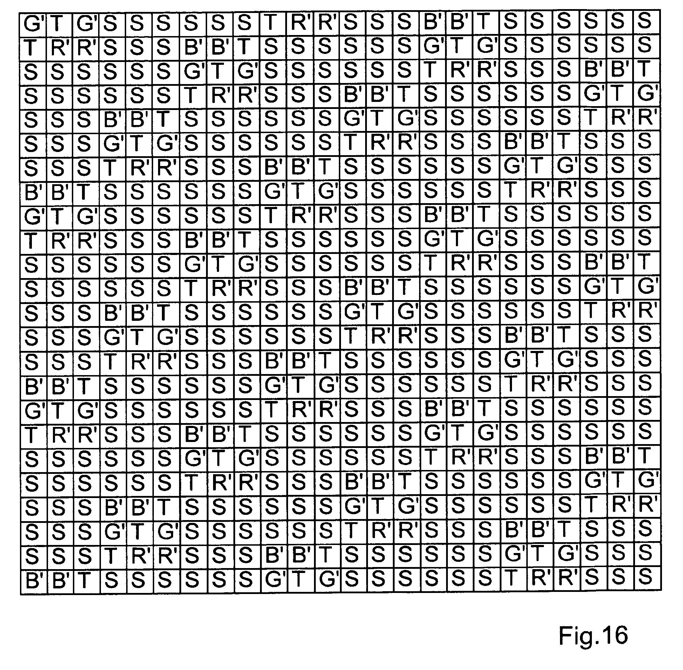

In einer gesonderten Ausführungsvariante kann anstelle der in Fig.2 dargestellten Struktur des Filterarrays 10 auch eine Struktur verwendet werden, die neben den Einzelelementen R',B',G' und S auch stets transparente, d.h. polarisationsrichtungsunabhängig Elemente T aufweist. Eine konkrete Anordnung dieser Elemente zum Zweck eines in Zusammenwirkung mit dem optischen Medium 12 und dem Linearpolarisationsfilter 13 deutlich wahrnehmbaren Umschalteffektes ist beispielhaft in Fig.16 gezeigt.

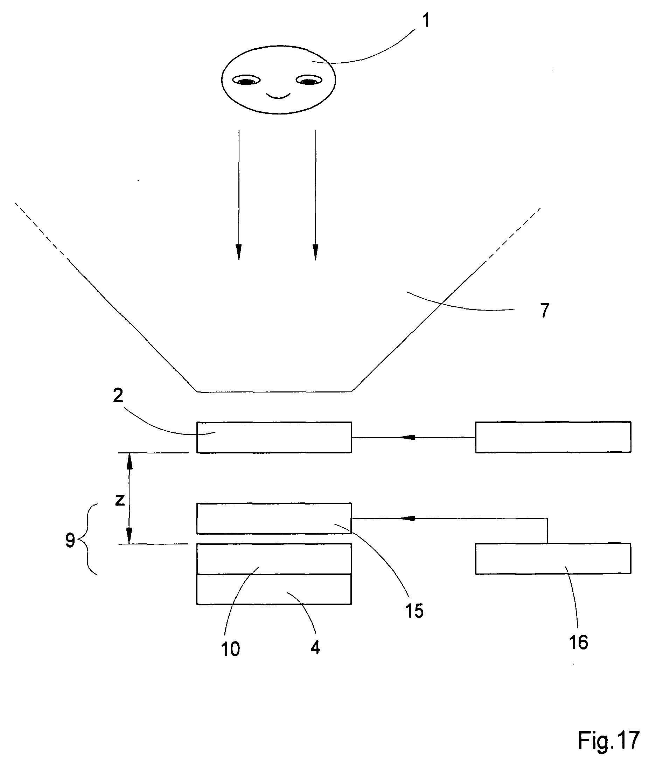

In einem dritten Ausführungsbeispiel zur 2D-3D-Umschaltung, das in Fig.17 dargestellt ist, ist als Mittel zur Umschaltung eine Streuscheibe 1 5 vorgesehen. Die hier dargestellte Anordnung weist dazu wiederum ein Farb-LC-Display 2 als Bildwiedergabeeinrichtung, eine Filteranordnung 9 und eine Beleuchtungsquelle 4 auf. Aus der Betrachtungsposition liegt dabei das Farb-LC-Display 2 vor der Filteranordnung 9.

Die Filteranordnung 9 umfaßt ein statisches Filterarray 10 der schon weiter oben beschriebenen Art. Außerdem umfaßt die Filteranordnung 9 eine flache Streuscheibe 15, die mittels einer Ansteuereinrichtung 16 elektronisch zwischen einem transparenten Zustand und einem streuenden, transluzenten Zustand umschaltbar ist. Diese Streuscheibe 15 ist zwischen dem Filterarray 10 und dem Farb-LC-Display 2 positioniert. Derartige Streuscheiben mit Abmessungen bis zu 50 Zoll in der Diagonalen und größer sind beispielsweise als Privalite-Gläser® der Firma VEGLA, Aachen, Deutschland, erhältlich. Diese Gläser basieren auf Flüssigkristallen, die im spannungsfreien Zustand milchig, d.h. streuend sind, bei Anlegen einer elektrischen Spannung hingegen im wesentlichen transparent werden.

Im transparenten Zustand wirkt die durch das Filterarray 10 strukturierte Beleuchtung als Grundlage für die 3D-Betriebsart, d.h. die Streuscheibe 1 5 hat keinen funktionswesentlichen Einfluß auf das hindurchtretende Licht. Wird hingegen die Streuscheibe 15 in den streuenden Zustand umgeschaltet, so wird die Strukturierung der Beleuchtung im wesentlichen aufgehoben. Dies hat zur Folge, daß die transluzente Bildwiedergabeeinrichtung, also hier das Farb-LC-Display 2, weitgehend homogen beleuchtet wird. Damit können herkömmliche zweidimensionale Bildinhalte in der 2D-Betriebsart ohne Beeinflussung durch das Filterarray 10 dargestellt werden.

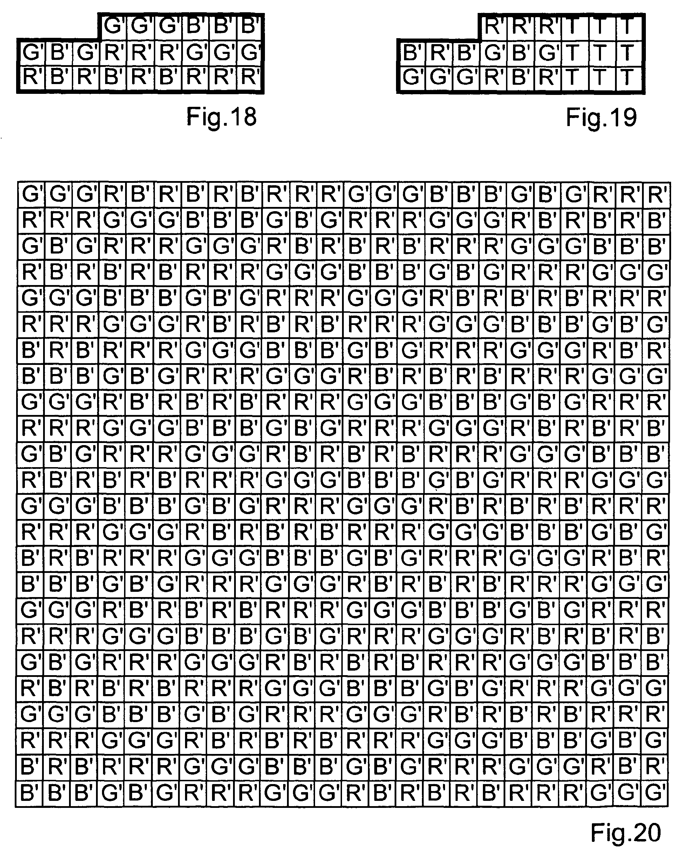

In einem weiteren Ausführungsbeispiel zur 3D-2D-Umschaltung, insbesondere bei dem in Fig.8 und Fig.10 dargestellten Aufbau der erfindungsgemäßen Anordnung, kann als Mittel zur 2D-3D-Umschaltung anstelle des Wellenlängenfilter-Arrays 8 eine Filteranordnung verwendet werden, die nachfolgend anhand Fig.18 bis Fig.23 näher erläutert werden soll.

Diese Filteranordnung umfaßt zwei beispielsweise als dünne Folienfilter ausgebildete Arrays aus statischen, d.h. bezüglich ihrer optischen Eigenschaften zeitlich unveränderlichen Wellenlängenfilterelementen. Beide Wellenlängenfilter-Arrays sind aus einer Vielzahl gleichartiger Grundelemente zusammengesetzt, von denen je eines in Fig.18 und Fig.19 dargestellt ist. Diese Grundelemente unterscheiden sich hinsichtlich der Strukturierung mit einzelnen Wellenlängenfilterelementen R',G',B' bzw. mit Elementen T, die im gesamten Bereich des sichtbaren Lichtes transparent sind (vgl. Fig.19).

Fig.20 zeigt einen Ausschnitt eines ersten Wellenlängenfilter-Arrays, das ausschließlich aus gleichartigen Grundelementen zusammengesetzt ist, wie in Fig.18 dargestellt. Dieses Wellenlängenfilter-Array weist keine transparenten Elemente T auf.

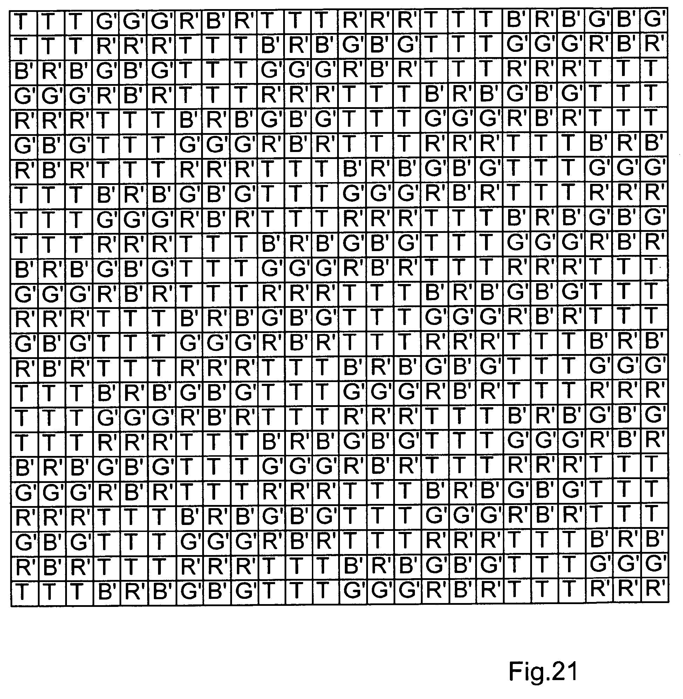

Fig.21 zeigt einen Ausschnitt eines zweiten Wellenlängenfilter-Arrays, das ausschließlich aus Grundelementen zusammengesetzt ist, wie in Fig.19 dargestellt. Dieses Wellenlängenfilter-Array weist neben Wellenlängenfilterelementen R',G'B' auch transparente Elemente T auf.

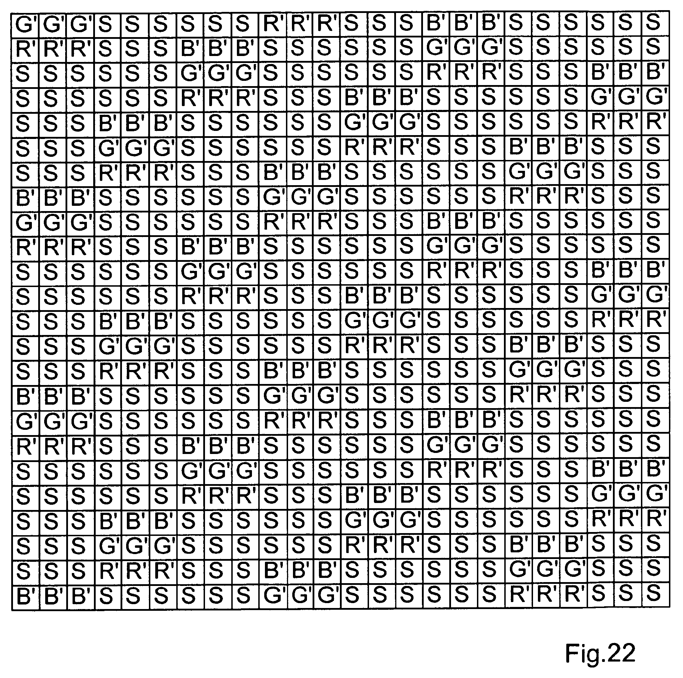

Beim Übereinanderlegen beider Wellenlängenfilter-Arrays aus Fig.20 und Fig.21, so daß das Licht nacheinander durch beide Wellenlängenfilter-Arrays hindurchtreten muß, ergibt sich in einer ersten Ausrichtung der Wellenlängenfilterelementen R',G'B' bzw. der Elemente T zueinander das in Fig.22 dargestellte summarische Wellenlängenfilter-Array, bei dem lediglich im Bereich der transparenten Elemente T (auf dem Wellenlängenfilter-Array nach Fig.21) die durch die Wellenlängenfilterelemente R',G'B' auf dem Wellenlängenfilter-Array nach Fig.20) bestimmte Filterwirkung erzielt wird. An allen übrigen Stellen, bei denen sich Wellenlängenfilterelemente R',G'B' beider Wellenlängenfilter-Array überdecken, ist das summarische Wellenlängenfilter-Array opak, d.h. intransparent. Die opaken Raster-Teilabschnitte des summarischen Wellenlängenfilter-Array sind in Fig.22 mit S gekennzeichnet.

Als Filteranordnung bewirkt das summarische Wellenlängenfilter-Array eine Vorgabe der Ausbreitungsrichtungen des von dem Farb-LC-Display 2 abgestrahlten Lichtes in der oben beschriebenen Weise, wodurch eine realistische, dreidimensionale Wahrnehmung möglich ist. Es werden beispielhaft an einem ersten Beobachtungsort überwiegend Informationen einer ersten Gruppe von Ansichten $A_4$ bis $A_5$ und an einem zweiten beispielhaften Beobachtungsort in Augenabstand von dem ersten Ort überwiegend Informationen der zweiten Gruppe von Ansichten $A_7$ bis $A_8$ wahrgenommen.

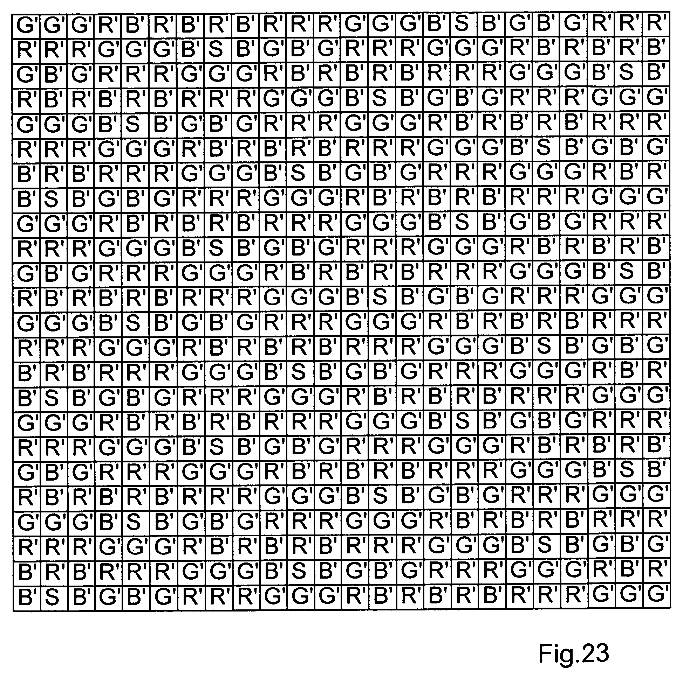

Nach einer Verschiebung der beiden übereinander liegenden Wellenlängenfilter-Array aus Fig.20 und Fig.21 um drei Rasterpositionen in Horizontalrichtung parallel zueinander ergibt sich das in Fig.23 dargestellte summarische Wellenlängenfilter-Array. Wie aus Fig.23 zu entnehmen ist, ergibt sich hierdurch eine sehr hohe Lichtdurchlässigkeit, da lediglich einer der insgesamt vierundzwanzig Raster-Teilabschnitte eines Grundelementes lichtundurchlässig ist. Durch die daraus resultierende hohe Transparenz des summarischen Wellenlängenfilter-Array nach Fig.23 wird der in der vorherigen ersten Stellung vorhandene dreidimensionale Wahrnehmungseindruck aufgehoben, so daß sich die auf dem Farb-LC-Display 2 dargestellten Bildinformationen nun zweidimensional betrachten lassen.

Die Parallelverschiebung der beiden Wellenlängenfilter-Array nach Fig.20 und Fig.21 gegeneinander erfolgt auf mechanische Weise, beispielsweise durch einen Piezosteller, mit dem sich sehr kleine Verschiebungsschritte in der Größenordnung der Rasterbreite oder Rasterhöhe der Wellenlängenfilter-Array realisieren lassen. Anstelle eines Piezostellers kann auch ein Schrittmotor verwendet werden.

In einer Abwandlung ist es auch möglich, mehr als zwei Wellenlängenfilter-Array übereinanderzulegen und gesondert gegeneinander zu verschieben, wobei jedoch darauf zu achten ist, daß die beiden oben erläuterten Positionen entstehen.

Es ist unmittelbar ersichtlich, daß hierzu die Positionierung der Wellenlängenfilterelemente R',G'B' und der transparenten Elemente T aufeinander abgestimmt werden muß, so daß sich mit der Parallelverschiebung eine erste Stellung mit einem stärkeren Ordnungsgrad zur Erzeugung eines 3D-Eindruckes und eine zweite Stellung mit geringem Ordnungsgrad, jedoch mit erhöhter Transparenz zur 2D-Darstellung ergeben.

Mit den in Fig.20 und Fig.21 dargestellten ersten und zweiten Wellenlängenfilter-Array läßt sich bei Parallelverschiebung um drei Raster-Teilabschnitte in der ersten Stellung ein guter 3D-Eindruck und in der zweiten Stellung ein guter 20-Eindruck erhalten. Allerdings ist die Erfindung nicht auf die hier beschriebene Strukturierung der Wellenlängenfilter-Array beschränkt, sondern es können unter Zugrundelegung der vorstehenden Überlegung bzw. auf iterativem Wege noch weitere Anordnungsmuster erzeugt werden.

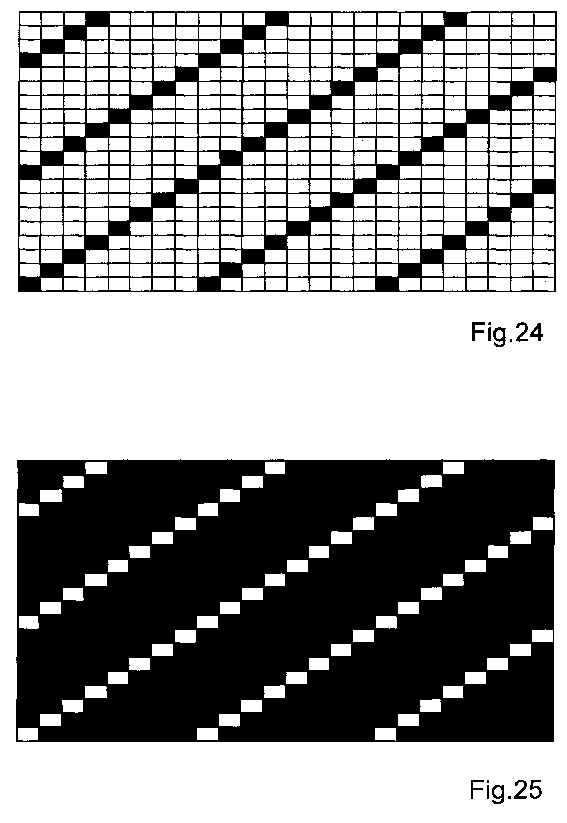

Beispielsweise kann die Filteranordnung auch durch die Überlagerung von sieben Wellenlängenfilter-Array gebildet werden, dessen einzelne Wellenlängenfilterelemente entweder opak oder im gesamten Bereich des sichtbaren Lichtes transparent sind. Ein Beispiel für ein solches Wellenlängenfilter-Array ist in Fig.24 dargestellt. Bei einer Überlagerung von sieben derartigen Wellenlängenfilter-Array mit einem Versatz von jeweils einem Raster-Teilabschnitt ergibt sich das in Fig.25 dargestellte summarische Wellenlängenfilter-Array.

Dabei stellt Fig.25 gleichzeitig die erste Stellung dieser Filteranordnung für den autostereoskopischen Modus dar. Durch eine Umschaltung der Filteranordnung mittels einer der vorstehend genannten mechanischen Vorrichtungen wird eine zweite Stellung erreicht, in der das summarische Wellenlängenfilter-Array weitestgehend transparent ist, das heißt sämtliche opaken Raster-Teilabschnitte in Betrachtungsrichtung hintereinander liegen. Es entsteht dann ein summarisches Wellenlängenfilter-Array, dessen Strukturierung Fig.24 entspricht und das eine hohe Transparenz aufweist, so daß die auf dem Farb-LC-Display 2 gezeigten Bilder zweidimensional wahrgenommen werden.

Zur Verbesserung der Filterwirkung während des 3D-Betriebs sind die opaken Filterelemente, die in der ersten Stellung entsprechend Fig.25 nicht an den noch transparenten Diagonalstreifen angrenzen, beispielsweise etwa 1,3 mal breiter ausgebildet als die verbleibenden opaken Filterelemente. Dadurch ergibt sich in der ersten Stellung eine Überlappung der opaken Filterelemente, die gewährleistet, daß bei einer Betrachtung unter einem schrägen Sichtwinkel, das heißt nicht senkrecht auf die bilddarstellende Fläche, lediglich durch die gewünschten, noch transparenten Raster-Teilabschnitte der Filteranordnung auf das bilddarstellende Raster des Farb-LC-Displays 2 geblickt wird.

Bisher wurden der Einfachheit halber Wellenlängenfilterelemente beschrieben, die im roten, grünen und blauen Licht oder auch im gesamten Bereich des sichtbaren Lichts transparent sind. Die Erfindung schließt jedoch abweichend davon auch die Möglichkeit ein, andere Transparenzwellenlängenbereiche zu verwenden, sofern sie sich für die Ausbildung statischer, passiver Filterarrays eignen. Die Transparenzwellenlängenbereiche müssen überdies nicht auf den Bereich des sichtbaren Lichtes beschränkt sein.

Unter Umständen ist für einen Betrachter wahlweise eine ganzflächig zweidimensionale, eine ganzflächig dreidimensionale oder eine auf Teilflächen beschränkte zweidimensionale, im übrigen dreidimensionale Darstellung einer Szene bzw. eines Gegenstandes wünschenswert. Diesbezüglich sind die nachfolgend beschriebenen weiteren Ausführungsbeispiele zur 3D-2D-Umschaltung von Vorteil.

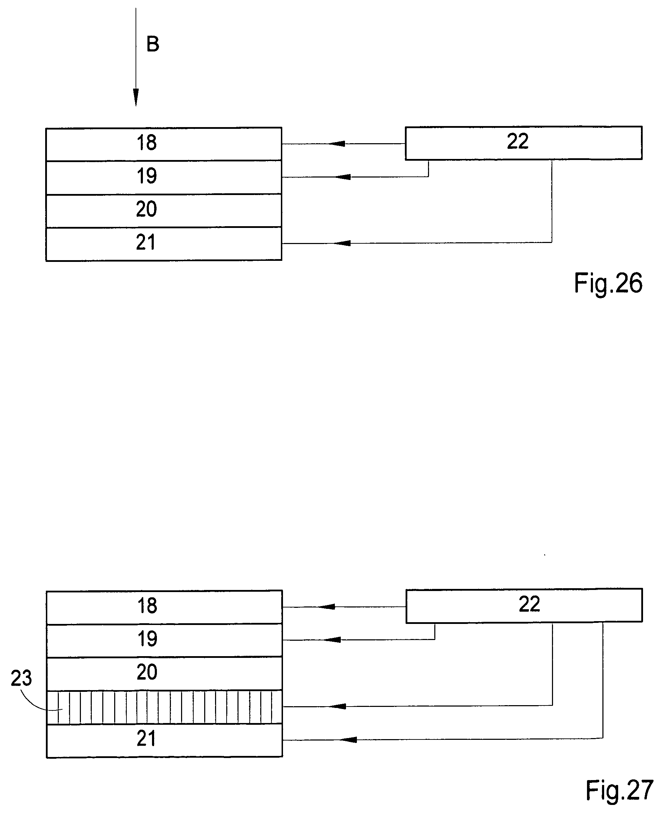

Hierzu zeigt Fig.26 zunächst den prinzipiellen Aufbau der erfindungsgemäßen Anordnung mit der Option zur wahlweise zwei- oder dreidimensionalen Darstellung von Bildern einer Szene oder eines Gegenstandes. Aus Blickrichtung B eines Betrachters (bzw. mehrerer Betrachter) aufeinander folgend sind hier symbolisch gezeichnet: eine Bildwiedergabeeinrichtung 18, die aus einer Vielzahl von transluzenten Bildelementen besteht, auf denen Bildinformationen aus mehreren Perspektivansichten der Szene/des Gegenstandes darstellbar sind; eine zur Beleuchtungsvorrichtung der Anordnung gehörende erste Planbeleuchtungsquelle 19; ein Wellenlängenfilter-Array 20, das aus einer Vielzahl von in vorgegebenen Wellenlängenbereichen lichtdurchlässigen Filterelementen besteht und eine zur Beleuchtungsvorrichtung der Anordnung gehörende zweite Planbeleuchtungsquelle 21.

Das Wellenlängenfilter-Array 20 besteht aus einer Vielzahl von Filterelementen mit etwa den Abmessungen 0,99 mm (Breite) und 0,297 mm (Höhe). Diese Abmessungen sind abgestimmt auf ein Farb-LC-Display "Batron BT 63212", das hier beispielhaft als Bildwiedergabeeinrichtung 18 dienen soll. Der Abstand zwischen Bildwiedergabeeinrichtung 18 und Wellenlängenfilter-Array 20 beträgt im gewählten Beispiel etwa 2 mm.

Die Ansteuerschaltung 22 hat die Funktion, auf der Bildwiedergabeeinrichtung 18 anzuzeigende Kombinationsbilder aus mehreren Ansichten, insbesondere aus mehreren Perspektivansichten der darzustellenden Szene bzw. des Gegenstandes, zu generieren. Diese Kombinationsbilder können sowohl Standbilder oder gegebenenfalls auch bewegte, sich in vorgegebenen kurzen Zeittakten ändernde Bilder sein. Außerdem veranlaßt die Ansteuerschaltung 22 das Ein-/Ausschalten der beiden Planbeleuchtungsquellen 19 und 21, denen zu diesem Zweck jeweils gesondert ansteuerbare Ein-/Ausschalter zugeordnet sind (zeichnerisch nicht dargestellt).

Je nach Vorgabe durch die Ansteuerschaltung 22 ist die Umschaltung zwischen mehreren unterschiedlichen Betriebsarten möglich, bei denen das Beleuchtungslicht entweder zwecks zweidimensionaler Darstellung ausschließlich nur durch die Bildelemente der Bildwiedergabeeinrichtung 18, nicht jedoch durch Filterelemente des Wellenlängenfilter-Array 20 hindurch zum Betrachter gelangt oder zwecks dreidimensionaler Darstellung durch die Filterelemente des Wellenlängenfilter-Array 20 und nachfolgend auch noch durch die Bildelemente der Bildwiedergabeeinrichtung 18 hindurch zum Betrachter gelangt.

Fig.3 zeigt beispielhaft einen stark vergrößerten Ausschnitt der Bildstruktur der Bildwiedergabeeinrichtung 18 mit der Vielzahl von Bildelementen. Jedes der in Fig.3 in Form von Quadraten dargestellte Subpixel hat in bezug auf eine Perspektivansicht stets exakt die gleiche Position i,j innerhalb des Bildrasters aus Zeilen und Spalten. Dabei werden dem zu generierenden Kombinationsbild acht Perspektivansichten zugrunde gelegt, d.h. die Bildinformationen, die auf den einzelnen Bildelementen wiederzugeben sind, werden aus acht Perspektivansichten bezogen und zu einem Gesamtbild kombiniert, das in seiner flächigen Ausdehnung der Bildwiedergabeeinrichtung entspricht. Die in die Bildelemente eingetragenen Ziffern 1 bis 8 bezeichnen jeweils eine der acht Perspektivansichten, aus denen die jeweilige Bildinformation stammt. Das wesentlich vergrößert dargestellte Raster aus Bildelementen hat entsprechend dem verwendeten Farb-LC-Display insgesamt beispielsweise 1024 Spalten und 768 Zeilen.

Um zu gewährleisten, daß der Betrachter stets gleichzeitig Bildinformationen aus unterschiedlichen Ansichten, d.h. aus unterschiedlichen Bildkanälen sieht, wird das Wellenlängenfilter-Array 20 in Abhängigkeit von den einzelnen Bildelementen der Bildwiedergabeeinrichtung 18, die bevorzugt Pixel- oder Subpixelgröße haben, so strukturiert, wie dies beispielhaft in Fig.2 anhand eines ebenfalls stark vergrößerten Ausschnittes aus der Struktur des Wellenlängenfilter-Arrays 20 dargestellt ist.

Während in Fig.3 jedes Quadrat einem Bildelement in Pixel- oder Subpixelgröße entspricht, soll in Fig.2 jedes Quadrat einem Filterelement entsprechen. Die mit R' gekennzeichneten Filterelemente sind lediglich im Bereich des roten Lichtes, die mit G' gekennzeichneten Filterelemente lediglich im Bereich des grünen Lichtes und die mit B' gekennzeichneten Filterelemente lediglich im Bereich des blauen Lichtes durchlässig. Mit S sind Filterelemente gekennzeichnet, die (im sichtbaren Spektralbereich) lichtundurchlässig sind. Die Rasterung der Filterelemente und der Bildelemente sind bezüglich ihrer Abmessungen zueinander proportional oder identisch.

Fig.27 zeigt einen prinzipiellen Aufbau der erfindungsgemäßen Anordnung, bei dem abweichend von dem Aufbau nach Fig.26 nicht nur die Option zur wahlweise zwei- oder dreidimensionalen Darstellung von Bildern einer Szene oder eines Gegenstandes, sondern zusätzlich auch noch die Möglichkeit gegeben ist, Bildausschnitte je nach Wahl zwei- oder dreidimensionalen wiedergeben zu können.

Hier ist zwischen der Planbeleuchtungsquelle 21 und dem Wellenlängenfilter-Array 20 ein Shutter 23 angeordnet, der aus einer Vielzahl von einzeln ansteuerbaren Shutterelementen besteht, wobei je nach Anzahl der angesteuerten Shutterelemente der Weg des von der zweiten Planbeleuchtungsquelle 21 erzeugten Beleuchtungslichtes durch eine größere oder kleinere Anzahl von Filterelementen hindurch unterbrochen oder freigegeben werden kann. Im folgenden soll davon ausgegangen werden, daß angesteuerte Shutterelemente den Lichtweg "öffnen", während nicht angesteuerte Shutterelemente den Lichtweg "sperren".

Beim Betreiben der Anordnung ist in einer ersten Betriebsart zwecks zweidimensionaler Darstellung lediglich die erste Planbeleuchtungsquelle 19 eingeschaltet, und es gelangt Beleuchtungslicht nur durch die Bildwiedergabeeinrichtung 18 hindurch, nicht jedoch durch das Wellenlängenfilter-Array 20 hindurch zum Betrachter. In einer zweiten Betriebsart zwecks dreidimensionaler Darstellung ist lediglich die zweite Planbeleuchtungsquelle 21 eingeschaltet, so daß Beleuchtungslicht stets durch das Wellenlängenfilter-Array 20 und die Bildwiedergabeeinrichtung 18 hindurch zum Betrachter gelangt.

In einer dritten Betriebsart sind beide Planbeleuchtungsquellen 19 und 21 eingeschaltet, und eine vorgegebene Anzahl von Shutterelementen ist angesteuert, so daß das Beleuchtungslicht in Bereichen der angesteuerten und damit den Lichtweg freigebenden Shutterelemente sowohl durch die Filterelemente als auch durch die zugeordneten Bildelemente hindurch zum Betrachter gelangt, während das Beleuchtungslicht in Bereichen der nicht angesteuerten (den Lichtweg "sperrenden") Shutterelemente nur durch die Bildwiedergabeeinrichtung 18 hindurch zum Betrachter gelangt.

Dadurch ist die Szene/der Gegenstand in den Bereichen der nicht angesteuerten Shutterelemente zweidimensional, dagegen in den Bereichen der angesteuerten Shutterelemente dreidimensional wahrnehmbar. Eine Voraussetzung hierzu ist allerdings, daß die Planbeleuchtung 21 eine deutliche höhere Leuchtdichte pro Flächeneinheit liefert, als die Planbeleuchtungsquelle 19, was beispielsweise mittels Dimmer erreicht werden kann.

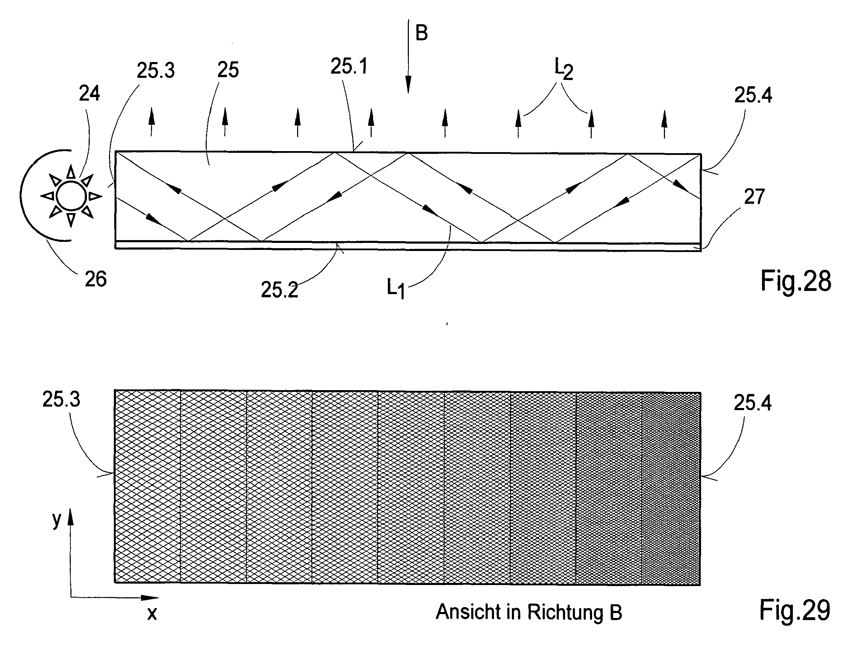

In Fig.28 ist die Planbeleuchtungsquelle 19 in einer Ausführung dargestellt, die eine Lichtquelle 24 und einen planen Lichtleiter 25 umfaßt. Der Lichtleiter 25 ist durch zwei einander gegenüberliegende Großflächen 25.1 und 25.2 sowie durch umlaufende Schmalflächen 25.3 und 25.4 begrenzt, von denen in Fig.28 lediglich die Schnittdarstellungen zu sehen sind. Die zwei weiteren den Lichtleiter begrenzenden Schmalflächen kann man sich parallel unterhalb und oberhalb der Zeichenebene vorstellen.

Die Lichtquelle 24 ist beispielsweise eine stabförmige Lampe, deren Längsausdehnung senkrecht zur Zeichenebene ausgerichtet ist. Sie ist so positioniert, daß die von ihr ausgehende Strahlung durch die Schmalfläche 25.3 hindurch in den Lichtleiter 25 eingekoppelt wird. Die eingekoppelte Strahlung wird zu einem Anteil $L_1$ innerhalb des Lichtleiters hin- und herreflektiert und zu einem Anteil $L_2$ als Nutzlicht über die Großfläche 25.1 abgestrahlt. Im gesonderten Falle kann die der Einkopplung gegenüber liegende Schmalfläche 25.4 reflektierend ausgebildet sein, so daß dorthin gerichtete Strahlung in den Lichtleiter zurückgeworfen wird.

Der Lichtquelle 24 kann in einer bevorzugten Ausgestaltung noch ein Reflektor 26 zugeordnet sein, der zur Erhöhung der Intensität der auf die Schmalfläche 25.3 gerichteten und in den Lichtleiter 25 eingekoppelten Strahlung beiträgt.

Um nun die Lichtdichteverteilung über die abstrahlende Großfläche 25.1 hinweg in einem vorgegebenen Maß beeinflussen zu können, ist erfindungsgemäß auf der der abstrahlenden Großfläche 25.1 gegenüberliegenden Großfläche 25.2 eine die Totalreflexion störende Beschichtung 27 vorgesehen, die aus einzelnen Partikeln besteht und deren Störvermögen über die flächige Ausdehnung der Großfläche 25.2 hinweg zwischen zwei Grenzwerten inhomogen ist. Die Grenzwerte des Störvermögens sind mit der Dichte d der Beschichtung 27 bestimmt, wobei die Dichte d ein Maß für den mittleren Abstand der Partikel zueinander pro Flächeneinheit ist.

Fig.29 zeigt ein Beispiel dafür, wie die Dichte d der Beschichtung 27 und damit deren Störvermögen über die Großfläche 25.2 hinweg strukturiert sein kann. In der Zeichnung sind die Streifen sehr breit dargestellt, um das Prinzip zu erläutern. Die Streifenbreite ist in der physischen Ausführung vorzugsweise deutlich geringer. Die Großfläche 25.2 ist hier senkrecht zur Blickrichtung B dargestellt.

Die über die Großfläche 25.2 hinweg unterschiedliche Dichte d ist durch Schraffuren mit unterschiedlichem Abstand der Schraffurlinien symbolisiert. Es sei angenommen, daß die Flächenbereiche mit größeren Abständen zwischen den Schraffurlinien eine geringere Dichte d und damit ein geringeres Störvermögen, dagegen die Flächenabschnitten mit geringeren Abständen zwischen den Schraffurlinien eine größere Dichte d und ein ausgeprägteres Störvermögen der Beschichtung 27 angeben.

Aus Fig.29 geht im Hinblick auf Fig.28 hervor, daß nahe der Schmalfläche 25.3, durch welche das Licht in den Lichtleiter 25 eingekoppelt wird, die Dichte d bzw. das Störvermögen gering, mit wachsendem Abstand x von dieser Schmalfläche 25.3 jedoch progressiv von Flächenabschnitt zu Flächenabschnitt zunehmend stärker ausgebildet ist.

Dies hat zur Folge, daß in der Nähe der Schmalfläche 25.3 aufgrund der geringsten Dichte d die Totalreflexion am wenigsten gestört wird, trotzdem aber infolge der dort noch hohen Lichtintensität ein Anteil $L_2$ des Lichtstromes aus der Großfläche 25.1 austritt, der ebenso groß ist wie der durch die Großfläche 25.1 hindurchtretende Lichtstrom in größerer Entfernung x von der Schmalfläche 25.3, da mit zunehmender Entfernung x zwar die Lichtintensität geringer, aufgrund der zunehmenden Störung der Totalreflexion aber mehr Licht durch die abstrahlende Großfläche 25.1 ausgekoppelt wird.

Mit anderen Worten: mit zunehmendem Abstand x von der Schmalfläche 25.3 nimmt zwar die Lichtintensität ab, jedoch das Störvermögen der Beschichtung 27 zu, was bei entsprechender Auslegung der Dichte d dazu führt, daß über die gesamte Großfläche 25.1 hinweg das Licht mit nahezu gleicher Intensität abgestrahlt wird.

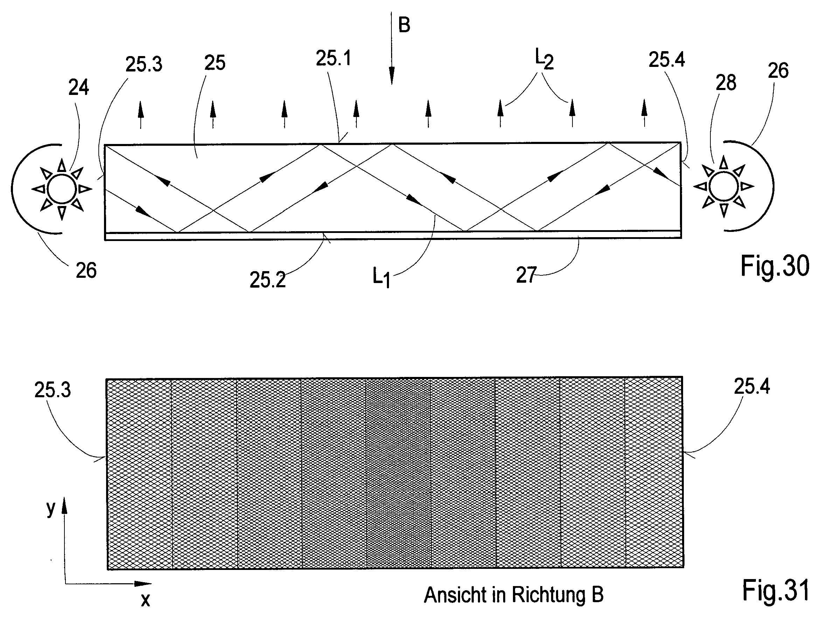

Fig.30 zeigt eine Ausgestaltung, bei der die von einer weiteren Lichtquelle 28 ausgehende Strahlung noch zusätzlich durch die Schmalfläche 25.4 hindurch in den Lichtleiter 25 eingekoppelt wird. Um in diesem Falle eine Vergleichmäßigung der Lichtabstrahlung über die Großfläche 25.1 zu erzielen, ist in einer Ausgestaltung vorgesehen, die zweite Großfläche 25.2 mit einer Beschichtung 27 zu versehen, deren Störvermögen in diesem Falle von beiden Schmalflächen 25.3 und 25.4 ausgehend zur Mitte des Lichtleiters 25 hin bis zu einem gemeinsamen Maximum zunehmend stärker ausgebildet ist. Dies ist anhand Fig.31 dargestellt.

Auf diese Weise wird erreicht, daß mit zunehmenden Abständen x von den Schmalflächen 25.3 und 25.4 durch die Beschichtung 27 die Totalreflexion von Flächenabschnitt zu Flächenabschnitt stärker gestört und so dafür gesorgt wird, daß trotz zur Flächenmitte hin abnehmender Lichtintensität noch etwa die gleiche Lichtmenge durch die Großfläche 25.1 als Nutzlicht abgestrahlt wird wie nahe der Seitenflächen 25.3 und 25.4.

Die aus einer Vielzahl einzelner Partikel bestehende Beschichtung 27 kann durch unterschiedliche Materialien realisiert werden. So ist es beispielsweise denkbar, daß Partikel mit höherem und Partikel mit geringerem Störvermögen vorgesehen sind und diese beiden Arten von Partikeln in einem vorgegebenen Mengenverhältnis auf die Großfläche 25.2 aufgebracht werden. Dabei überwiegen in Flächenbereichen, in denen die Totalreflexion stärker gestört werden soll, Partikel mit höherem Störvermögen und in Flächenbereichen, in denen die Totalreflexion weniger stark gestört werden soll, die Partikel mit geringerem Störvermögen. Beispielsweise können die Partikel mit höherem Störvermögen matte Silberteilchen und die Partikel mit geringerem Störvermögen glänzende Silberteilchen sein. Diese können mittels Druckverfahren aufgebracht werden, wobei es vorteilhaft ist, wenn in einem ersten Druckvorgang die glänzenden, in einem zweiten Druckvorgang die matten Silberteilchen aufgebracht werden.

Bei der Verwendung dieser Beschichtungen für eine dreidimensionale Darstellung beispielsweise nach Fig.26 und Fig.27 ist es vorteilhaft, wenn beim Bedrucken einige regelmäßige Muster in der Beschichtung ausgespart werden, wobei an den Stellen der Aussparungen vorzugsweise nicht opake Wellenlängenfilterelemente angeordnet sind.

Eine alternative Ausführung hierzu, die auf technologisch einfache Weise herstellbar ist, sieht eine aus einem Lack bestehende Beschichtung 27 vor. In diesem Falle ist die örtliche Lackdichte ein Äquivalent für das Störvermögen an einem betreffenden Ort. Ist beispielsweise die Lackdichte mit der Funktion d = f(x) definiert, ist x wie bereits angegeben das Maß für den Abstand von der Schmalfläche 25.3 und d ein Maß für die Dichte mit den Grenzwerten d = 0 und d = 1, wobei 1 das Störvermögen bei größter Lackdichte und 0 das Störvermögen bei fehlender Lackschicht angeben. Beispielsweise sind in

$$d = f(x) = a_3 \cdot x^3 + a_2 \cdot x^2 + a_1 \cdot x + a_0$$

die Parameter $a_0$, $a_1$, $a_2$ und $a_3$ wählbar. Als vorteilhafte Parametersätze haben sich im Zusammenhang mit der Anordnung nach Fig.28 bewährt

(1) $a_0=0$; $a_1=0.5$; $a_2=2$; $a_3=-0.5$;
(2) $a_0 = 0$; $a_1 = 0$; $a_2 = 1$ ; $a_3 = 0$;
(3) $a_0=0$; $a_1=0,5$; $a_2=-0.5$; $a_3=1$
Für die Anordnung nach Fig.30 kann vorteilhaft vorgegeben werden
(4) $a_0 = 0$, $a_1 = 4$, $a_2 = -4$ und $a_3 = 0$.

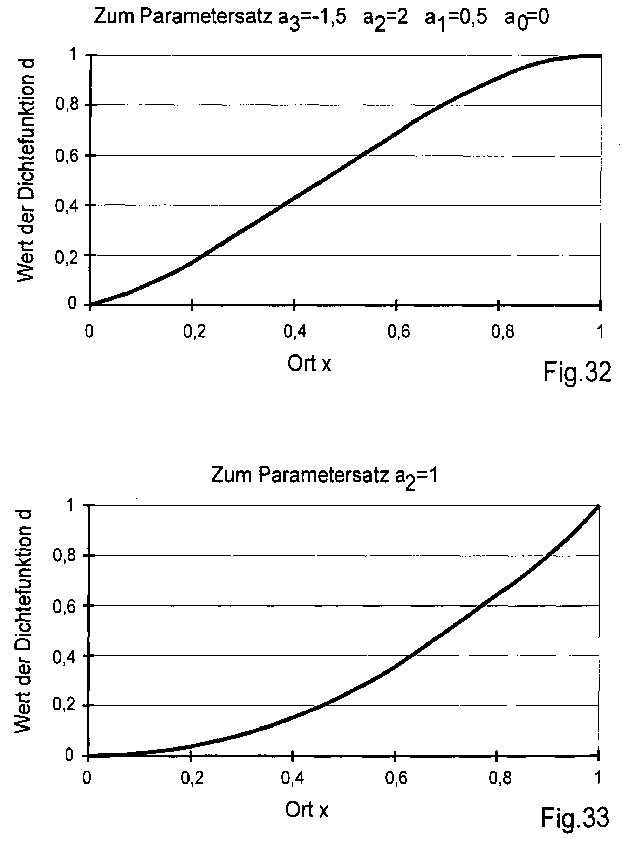

In Fig.32 bis Fig.3 5 ist für die Parametersätze (1) bis (4) die Dichteverteilung in Abhängigkeit vom Abstand x dargestellt. Die Parameter sind grundsätzlich frei wählbar. Jedoch ist darauf zu achten, daß die Funktion d = f(x) im Definitionsbereich [$x_{min}$, $x_{max}$] Werte mit $0 \leq d \leq 1$ liefert. Dabei beschreiben die Werte $x_{min}$ und $x_{max}$ trivialerweise die horizontale Ausdehnung der zu lackierenden Großfläche 25.2.

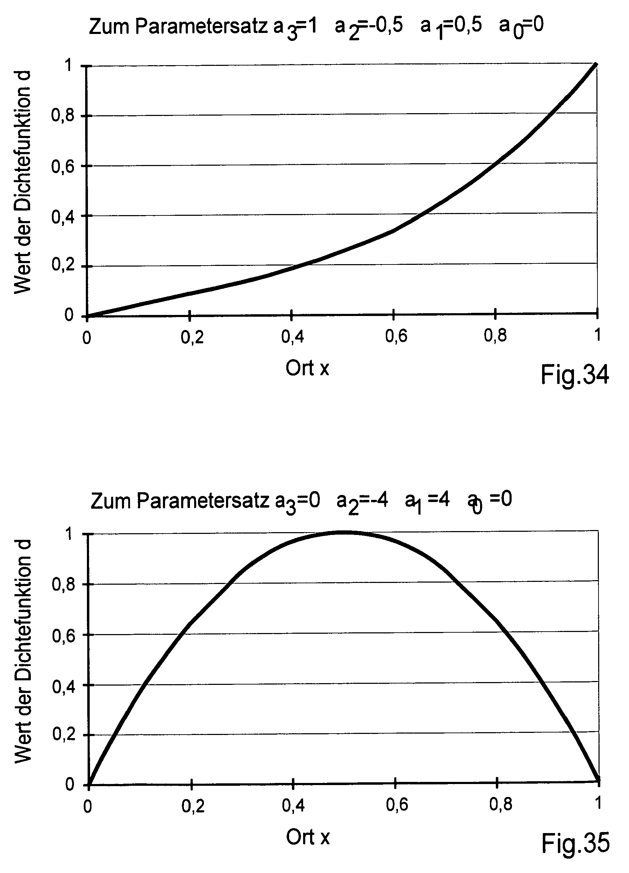

Davon ausgehend ist in Fig.32 bis Fig.35 jeweils der Wert $x_{min}$ = 0 der Position der Schmalfläche 25.3 und der Wert $x_{max}$ =1 der Position der Schmalfläche 25.4 zugeordnet. Dabei liegt die geringste Dichte $d_{min}$ = 0 jeweils bei $x_{min}$ = 0, also stets bei der Schmalfläche 25.3 bzw. 25.4, in die Licht eingekoppelt wird. Die maximale Dichte $d_{max}$=1 ist stets in der größten Entfernung von der Schmalfläche 25.3 oder 25.4 vorhanden, in die Licht eingekoppelt wird. In Fig.32 bis Fig.34 ist das jeweils nur die Schmalfläche 25.3, deshalb liegt hier die Dichte $d_{min}$=0 nur bei $x_{min}$ = 0. In Fig.35 erfolgt die Lichteinkopplung in beide Schmalflächen 25.3 und 25.4; deshalb liegt hier die Dichte $d_{min}$ = 0 bei $x_{min}$ =0 und bei $x_{max}$ =1, die Dichte $d_{max}$ =1 dagegen beim Ort x=0,5.

Werden Lichtquellen 24, 28 verwendet, die in Richtung y (vgl. Fig.29 und Fig.31) Licht mit inhomogener Intensität abstrahlen, so kann erfindungsgemäß vorgesehen sein, die Dichte d nicht nur in Richtung x, sondern auch in Richtung y zu variieren, wodurch die Dichtefunktion dann die Form d = f(x,y) erhält.

Damit wird erreicht, daß innerhalb des Lichtleiters 25 an Orten mit geringerer Lichtintensität die Großfläche 25.2 eine dichtere Beschichtung 27 aufweist, wobei die Totalreflexion dort stärker gestört ist und so die Intensität des durch die Großfläche 25.1 hindurch abgestrahlten Nutzlichtes erhöht wird. Dagegen ist an Orten höherer Intensität entlang der Koordinate y eine geringere Dichte d und damit ein geringeres Störvermögen vorgesehen, wobei trotzdem eine ausreichende Lichtmenge als Nutzlicht durch die Großfläche 25.1 nach außen gelangt. Es wird also zusätzlich auch in Richtung der Koordinate y eine Vergleichmäßigung der abgestrahlten Lichtmenge erzielt.

Selbstverständlich kann die Beschichtung 27 nicht nur dazu genutzt werden, die durch die Großfläche 25.1 abgestrahlte Lichtmenge zu vergleichmäßigen, sondern es kann mit der Variation der Dichte d, wenn diese in entsprechender Weise vorgegeben ist, vor allem auch erreicht werden, daß durch bevorzugte Flächenabschnitte der Großfläche 25.1 Licht mit höherer Lichtintensität abgestrahlt wird als durch nicht bevorzugte Flächenabschnitte. Auf diese Weise lassen sich je nach Vorgabe Lichtstrukturen und Lichtfiguren erzeugen, die sich aufgrund einer größeren oder geringeren Helligkeit von ihrer Umgebung auf der Großfläche 25.1 abheben. So kann in einem einfachen Beispiel ein besonders heller Fleck in der Mitte der abstrahlenden Großfläche 25.1 erzielt werden.

Alternativ kann die gesamte Großfläche 25.2 im wesentlichen homogen lackiert bzw. verspiegelt werden, so daß besonders viel Licht durch die Großfläche 25.1 - dann allerdings nicht mit homogener Verteilung - abgestrahlt wird.

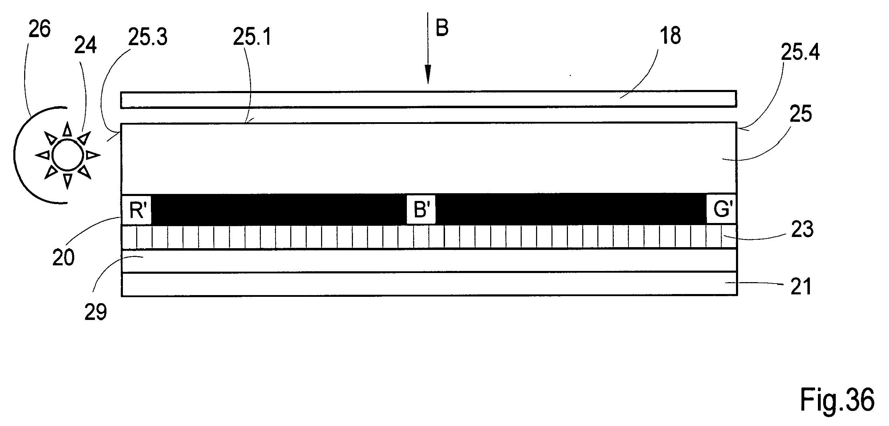

Anhand von Fig.36 wird im folgenden ein Ausführungsbeispiel der erfindungsgemäßen Anordnung zur wahlweise dreidimensionalen oder zweidimensionalen Darstellung einer Szene/eines Gegenstandes ausführlicher erläutert, wobei hier eine Beleuchtungsquelle in der Ausführung nach Fig.28 integriert ist. Die Beschichtung 27 ist in diesem Ausführungsfall nicht zwingend erforderlich. Wird sie jedoch angebracht, dann vorzugsweise unter Verwendung der o.g. Silberpartikel mit unterschiedlichen Eigenschaften hinsichtlich der Störung der Totalreflexion. In einer alternativen Ausführung ist es denkbar, die Beschichtung 27 in Form einer zugleich das Filterarray bildenden Lackschicht auszugestalten. Jedoch sind - zur Verwendung in der Anordnung zur räumlichen Darstellung - in beiden Ausführungen Muster auszusparen, die derart zu der Struktur des eingesetzten Wellenlängenfilter-Arrays korrespondieren, daß vorzugsweise jeweils an den nicht opak vorgegebenen Filterelementen eine Aussparung vorhanden ist.

In Fig.36 sind in der Blickrichtung B eines Betrachters zunächst die Bildwiedergabeeinrichtung 18 in Form eines transluzenten LC-Displays, der Lichtleiter 25, ein Wellenlängenfilter-Array 20 und die Planbeleuchtungsquelle 21 angeordnet, wobei letztere beispielsweise als Planon-Lichtkachel (Hersteller "OSRAM") ausgebildet sein kann.

Zur Homogenisierung der Intensität der Strahlung, die von der Planbeleuchtungsquelle 21 ausgeht, ist zwischen dieser und dem Wellenlängenfilter-Array 20 eine Streuscheibe 29 eingeordnet.

Fig.36 zeigt wieder die schon im vorhergehenden Ausführungsbeispiel erwähnte, nahe der Schmalfläche 25.3 des Lichtleiters 25 angeordnete Lichtquelle 24 mit dem Reflektor 26 zur Einkopplung der Strahlung in den Lichtleiter 25. Sowohl die Lichtquelle 24 als auch die Planbeleuchtungsquelle 21 sind mit separat ansteuerbaren Ein-/Ausschaltern gekoppelt, wodurch es möglich ist, entweder nur die Lichtquelle 24 oder nur die Planbeleuchtungsquelle 21 oder auch beide zu betreiben. Damit lassen sich wie bereits beschrieben die erste und die zweite Betriebsart realisieren und die Szene/der Gegenstand jeweils ganzflächig zwei- oder dreidimensional darstellen. Die dritte Betriebsart ist, wie ebenfalls bereits dargestellt, mit der separaten Ansteuerung einer Auswahl einzelner Shutterelemente des Shutters 23 möglich (vgl. Beschreibung zu Fig.26).

In der ersten Betriebsart, in dem die Planbeleuchtungsquelle 21 ein-, dagegen aber die Lichtquelle 24 ausgeschaltet ist, erreicht das Beleuchtungslicht durch das Wellenlängenfilter-Array 20, den Lichtleiter 25 und die Bildwiedergabeeinrichtung 18 hindurch die Augen des Betrachters, wobei beiden Augen, vorgegeben durch die Position p,q der Filterelemente relativ zu den Positionen i,j der zugeordneten Bildelemente, unterschiedliche Bildinformationen angeboten werden und für den Betrachter ein räumlicher Eindruck der auf der Bildwiedergabeeinrichtung dargestellten Szene bzw. des Gegenstandes entsteht. Dabei ist der Shutter angesteuert ("offen").

In der zweiten Betriebsart ist nur die Lichtquelle 24 eingeschaltet, was zur Folge hat, daß ausschließlich Licht zum Betrachter gelangt, das zwar von der Großfläche 25.1 kommend die Bildelemente der Bildwiedergabeeinrichtung 18 passiert hat und die Bildinformationen mit sich führt, jedoch nicht das Wellenlängenfilter-Array 20 passiert hat. Damit entfällt die Selektion und Richtungsvorgabe für ausgewählte Bildinformationen und deren Zuordnung zu dem rechten oder linken Auge des Betrachters, so daß die Szene/der Gegenstand nicht dreidimensional, sondern zweidimensional wahrgenommen wird.

In der dritten Betriebsart sind die Lichtquelle 24 und die Planbeleuchtungsquelle 21 eingeschaltet. Eine vorgegebene Anzahl von Shutterelementen ist, wie ebenfalls bereits dargelegt, so angesteuert, daß das Beleuchtungslicht in ausgewählten Bereichen sowohl durch die Filterelemente als auch durch die zugeordneten Bildelemente hindurch und demzufolge mit vorgegebener Ausbreitungsrichtung zum Betrachter gelangt, während das Beleuchtungslicht in Bereichen der nicht angesteuerten Shutterelemente nur durch die Bildwiedergabeeinrichtung, nicht jedoch durch zugeordnete Filterelemente hindurch und demzufolge nicht mit vorgegebener Ausbreitungsrichtung zum Betrachter gelangt. Dadurch ist die Szene/der Gegenstand in Bereichen der nicht angesteuerten Shutterelemente zweidimensional, dagegen in Bereichen der angesteuerten Shutterelemente dreidimensional wahrnehmbar.

Die Beschichtung 27, die in dem hier gewählten Beispiel vorzugsweise aus matten und glänzenden Silberpartikeln gebildet ist, sorgt in diesem Falle dafür, daß möglichst viel Nutzlicht über die Großfläche 25.1 abgestrahlt wird. Die Dichtestruktur der Beschichtung 27 ist beispielsweise so wie in Fig.29 dargestellt ausgebildet, wodurch erreicht wird, daß die Intensität des über die Großfläche 25.1 abgestrahlten Nutzlichtes über die gesamte Großfläche 25.1 weitestgehend gleichmäßig ist und insofern eine gleichmäßig verteilte Bildhelligkeit gewährleistet ist. Wie weiter oben erwähnt, ist die Beschichtung 27 in diesem Ausführungsbeispiel jedoch nicht zwingend erforderlich.

Zur Vergleichmäßigung der Einkopplung des Lichtes von der Lichtquelle 24 in den Lichtleiter 25 können vor der Schmalfläche 25.3 (nicht dargestellte) Zylinderlinsen oder ebenfalls eine Streuscheibe vorgesehen sein.

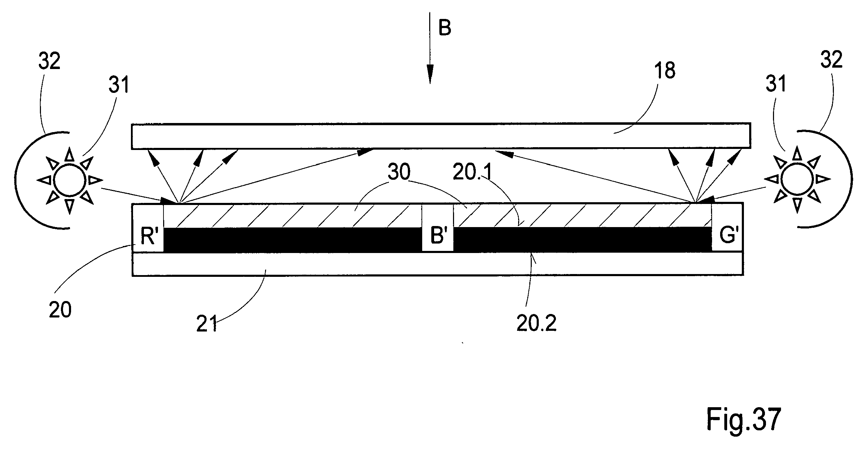

Ein weiteres Ausführungsbeispiel zur 2D-3D-Umschaltung soll nachfolgend anhand Fig.37 vorgestellt werden. In der Anordnung nach Fig.37 ist vorgesehen, daß die der Planbeleuchtungsquelle 21 abgewandte Seite 20.1 eines Wellenlängenfilter-Arrays 20 mit streuenden Oberflächenelementen 30 beschichtet ist. Die streuenden Oberflächenelemente 30 sind beispielsweise in eine 0,5 mm dicke Scheibe durch Ätzen eingearbeitet und diese (nicht gesondert dargestellte) Scheibe ist mit dem Wellenlängenfilter-Array 20 verbunden.

Die Ätzungen sind lediglich in Flächenbereichen vorgesehen, die den in Fig.2 mit S bezeichneten opaken Filterelementen entsprechen. Die übrigen mit R',G',B' bezeichneten Filterelemente bleiben von dieser Ätzung bzw. von streuenden Oberflächenelementen 30 frei und sind insofern ungehindert transparent.

Seitlich neben der so strukturierten Außenfläche des Wellenlängenfilter-Arrays 20 sind zusätzliche Lichtquellen 31 positioniert, und zwar so, daß die hiervon ausgehende Strahlung auf die streuenden Oberflächenelemente 30 trifft. Auch können den zusätzlichen Lichtquellen 31 Reflektoren 32 zugeordnet sein, die für eine Erhöhung der Intensität der auf die streuenden Oberflächenelemente 30 gerichteten Strahlung sorgen.

Bevorzugt werden als Lichtquellen 31 stabförmige Lampen verwendet. Bei der Positionierung der Lichtquellen 31 ist zu beachten, daß die der Planbeleuchtungsquelle 21 zugewandte Seite 20.2 der Wellenlängenfilter-Arrays 20 hiervon nicht beleuchtet wird.

Bei eingeschalteten Lichtquellen 31 trifft das von dort ausgehende Licht auf die streuenden Oberflächenelemente 30 und beleuchtet aufgrund des verhältnismäßig geringen Abstandes von nur 3 mm zwischen Wellenlängenfilter-Array 20 und Bildwiedergabeeinrichtung 18 relativ diffus und homogen auch das bilddarstellende Raster der Bildwiedergabeeinrichtung 18.

Auch hier sind die Planbeleuchtungsquelle 21 und die Lichtquellen 31 jeweils getrennt ein- und ausschaltbar, so daß sich wie bereits erwähnt die erste und zweite Betriebsart einstellen läßt.

In der ersten Betriebsart sind lediglich die Lichtquellen 31 eingeschaltet, während die Planbeleuchtungsquelle 21 ausgeschaltet ist. In dieser Betriebsart ist für einen Betrachter das auf der Bildwiedergabeeinrichtung 18 dargestellte Bild bzw. die dargestellte Szene zweidimensional wahrnehmbar, da das von der Bildwiedergabeeinrichtung 18 zum Betrachter gelangende Licht bezüglich seiner Richtung nicht durch die Zuordnung von Filterelementen und Bildelementen beeinflußt ist, sondern gleichmäßig die Bildwiedergabeeinrichtung 18 durchstrahlt und das Licht von allen Bildelementen gleichberechtigt die Augen der Betrachters erreicht.

In der zweiten Betriebsart sind die Lichtquellen 31 ausgeschaltet. Die Bildwiedergabeeinrichtung 18 wird ausschließlich mittels der Planbeleuchtungsquelle 21 durch das Wellenlängenfilter-Array 20 hindurch beleuchtet. In dieser Betriebsart findet eine Richtungsselektion aufgrund der Lagezuordnung von Filterelementen und Bildelementen statt, die wie beschrieben dafür sorgt, daß jedem Auge des Betrachters nur ausgewählte Bildinformationen sichtbar sind und damit der dreidimensionale Eindruck für den Betrachter entsteht.

Um die dritte Betriebsart zu realisieren, kann wieder zwischen der Planbeleuchtungsquelle 21 und dem Wellenlängenfilter-Array 20 ein Shutter vorgesehen sein, der aus einer Vielzahl einzeln ansteuerbarer Shutterelemente besteht, die je nach Bedarf vorgegebene Bereiche des Lichtweges sperren oder freigeben. Die Steuerung des Ein- und Ausschaltens der Lampen und der Shutterelemente kann in allen beschriebenen Fällen über Prozessoren mit Hilfe von Software erfolgen. Vorzugsweise ist hierbei die Planbeleuchtungsquelle 21 heller als die Lichtquellen 31, d.h. die resultierende Leuchtdichte pro Flächeneinheit der Planbeleuchtungsquelle 21 ist höher, als die der Lichtquellen 31. Dies kann mittels an in den Versorgungsstromkreis eingeordnete Dimmer erzielt werden.

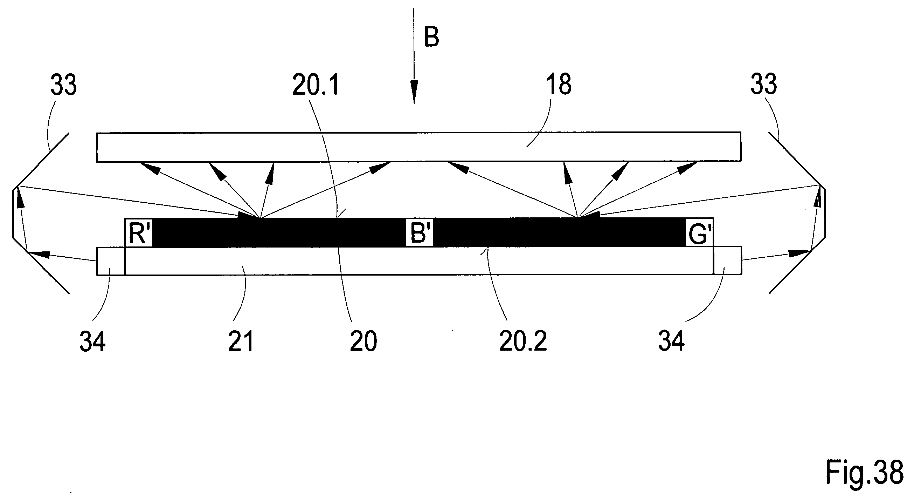

Wie in Fig.38 dargestellt, kann in einer gesonderten Ausgestaltung auch vorgesehen sein, daß lediglich die Planbeleuchtungsquelle 21 vorhanden ist und das aus den Schmalflächen der Planbeleuchtungsquelle 21 austretende Licht über seitlich zum Wellenlängenfilter-Array 20 angeordnete Reflektoren 33 auch auf die der Planbeleuchtungsquelle 21 abgewandte Fläche 20.1 des Wellenlängenfilter-Arrays 20 gelangen kann.

Die Reflektoren 33 sind fest so eingestellt, daß die von den Schmalflächen der Planbeleuchtungsquelle 21 austretende und auf die Reflektoren 33 gerichtete Strahlung stets von diesen umgelenkt und auf die Fläche 20.1 des Wellenlängenfilter-Arrays 20 gerichtet wird. Zwischen den lichtabstrahlenden Schmalflächen und den Reflektoren 33 sind jeweils ansteuerbare Shutter 34 vorgesehen ist, die diesen Lichtweg je nach Ansteuerung sperren oder freigeben. Bei freigegebenem Lichtweg zu den Reflektoren ist die Szene/der Gegenstand zweidimensional, bei gesperrtem Lichtweg dreidimensional wahrnehmbar.

In einer weiteren Ausgestaltung, die zeichnerisch nicht dargestellt ist, fehlen die Shutter 34, jedoch sind die Reflektoren 33 schwenkbar gelagert. Dabei ist die von der Planbeleuchtungsquelle 21 ausgehende Strahlung in einer ersten Schwenkposition nicht auf die Fläche 20.1 des Wellenlängenfilter-Arrays 20, in einer zweiten Schwenkposition auch auf die Fläche 20.1 des Wellenlängenfilter-Arrays 20 gerichtet.

Auf diese Weise ist in der ersten Schwenkposition gewährleistet, daß das von der Planbeleuchtungsquelle 21 ausgehende Licht sowohl durch das Wellenlängenfilter-Array 20 als auch durch die Bildwiedergabeeinrichtung 18 hindurch zum Betrachter gelangt, während in der zweiten Schwenkposition auch Licht zum Betrachter gelangt, das wie beschrieben nicht von der Zuordnung von Filterelementen zu Bildelementen beeinflußt ist. So ist im ersten Fall die dreidimensionale, im zweiten Fall die zweidimensionale Wahrnehmung möglich.

Wie in der Ausführung nach Fig.37 können auch hier auf der Fläche 20.1 des Wellenlängenfilter-Arrays 20, bevorzugt auf den dortigen mit S bezeichneten opaken Flächenbereichen (vgl. Fig.2), streuende Oberflächenelementen 30 vorgesehen sein, von denen das seitlich eingestrahlte Licht vergleichmäßigt auf die Rückseite der Bildwiedergabeeinrichtung 18 und danach durch diese hindurch zum Betrachter gelangt. Anstelle der streuenden Oberflächenelemente können alternativ auch spiegelnde Oberflächenelemente vorgesehen sein.

Im Rahmen der Erfindung liegt es außerdem, wenn auch auf die Seite 20.2 des Wellenlängenfilter-Arrays 20, die der Planbeleuchtungsquelle 21 zugewandt ist, reflektierende Oberflächenelemente aufgebracht sind, wodurch erreicht wird, daß über einen bestimmten Grenzwinkel hinaus einfallendes Licht von der Fläche 20.2 reflektiert wird, dagegen unter diesem Grenzwinkel, etwa senkrecht einfallendes Licht, transmittiert wird.

Auf diese Weise kann das schräg auf das Wellenlängenfilter-Array 20 auftreffende Licht über seitlich angebrachte Reflektoren teilweise zur Beleuchtung der streuenden Oberflächenelemente 30 genutzt werden, während das Wellenlängenfilter-Array 20 nach wie vor trotzdem noch durchstrahlt wird.

In weiteren, hiervon abweichenden Ausgestaltungen der Erfindung ist es auch denkbar, an Stelle eines Farbdisplays ein Schwarz-Weiß-Display unter ausschließlicher Verwendung von Neutralfiltern im Filterarray einzusetzen. In diesem Zusammenhang soll unter Zugrundelegung des in Fig.10 dargestellten Aufbaus der erfindungsgemäßen Anordnung nachfolgend ein weiteres Ausführungsbeispiel zur 2D-3D-Umschaltung erläutert werden, bei dem Neutralfilter zur Anwendung kommen.

Wie in Fig.10 dargestellt, befindet sich das Filterarray 8 mit den Filterelementen $\beta_{pq}$ aus der Position des Betrachters 1 gesehen in dem Abstand z vor dem bildgebenden Farb-LC-Display 2. Das Farb-LC-Display 2 ist mit der dahinter liegenden flächigen Beleuchtungseinrichtung 4 zu einer Baueinheit verbunden. Die Ausbreitungsrichtungen des von den Subpixeln R,G,B des Farb-LC-Displays 2 kommenden und durch die korrespondierenden Filterelemente $\beta_{pq}$ des Filterarrays 2 strahlenden Lichtes schneiden sich in dem Betrachtungsraum 7 in einer Vielzahl von Betrachtungspositionen, aus denen der dargestellte Gegenstand bzw. die Szene räumlich wahrnehmbar ist.

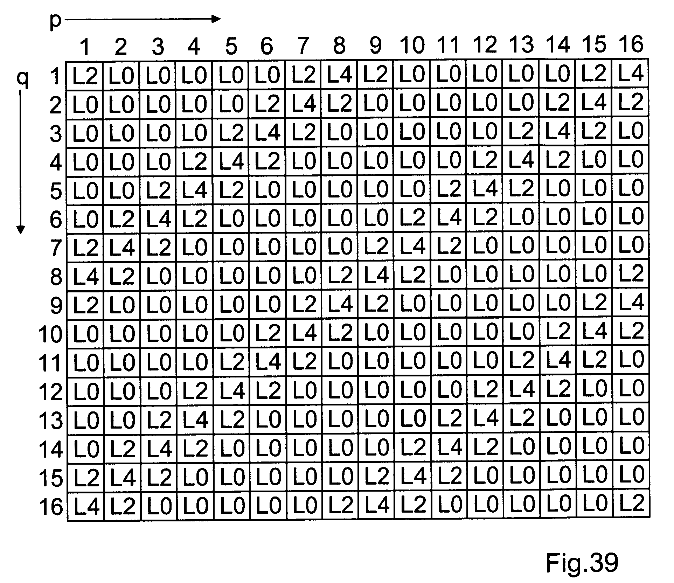

In Fig.39 ist ein Beispiel für die Ausführung des Filterarrays 8 als Filterarray mit einzelnen Neutralfiltern L0, L2 und L4 dargestellt. Zwecks Anschaulichkeit ist diese Darstellung stark vergrößert und nicht maßstabgerecht gezeichnet. Die Teilflächen entsprechen jeweils Neutralfiltern, die 0% (L0), 50% L(L2) bzw. 100% (L4) des einfallenden Lichtes (bezogen auf die Lichtintensität) wellenlängenunabhängig transmittiert. Die Teilflächen sind vereinfacht quadratisch dargestellt; auf die exakte Darstellung der Form der Neutralfilter L0, L2, L4 wurde hier verzichtet. Sie sind bevorzugt rechteckig ausgebildet und besitzen beispielsweise eine Breite von 99 $\mu$m und eine Höhe von 297 $\mu$m.

Die in Fig.39 gezeigte Filterarraystruktur läßt sich auf Grund der Gleichung (F2) erzeugen, in dem man als Parameter die Werte $d_{pq}$=-1=const. und $n_m$ = 8 einsetzt. Die Transmissionseigenschaften $\lambda_b$ sind hier wie folgt gewählt:

- $\lambda_8$ entspricht einem wellenlängenunabhängig zu 100% transmittierenden Filter (L4 in der Zeichnung), d.h. der Transmissionsgrad ist 100%;
- $\lambda_1$ und $\lambda_7$ entsprechen wellenlängenunabhängig zu 50% transmittierenden Filtern (L2 in der Zeichnung), d.h. der Transmissionsgrad ist 50%;
- $\lambda_2...\lambda_6$ entsprechen wellenlängenunabhängig nicht transmittierenden (opaken) Filtern (L0 in der Zeichnung), d.h. der Transmissionsgrad ist 0%.

Die Transmissionseigenschaften sind hierbei insbesondere bezüglich des sichtbaren Spektrums maßgeblich, d.h. ein L4-Filter kann durchaus für elektromagnetische Strahlung beispielsweise im UV-Bereich intransparent sein.

Fig.3 zeigt ein Beispiel für die Kombination von Teilinformationen verschiedener Ansichten $A_k$ (k=1 ...8) in einer Draufsicht auf das Raster des Farb-LC-Displays 2, die nach der bereits beschriebenen Funktion (F1) mit den Parametern $c_{ij}$=-1=const. und n=8 erzeugt worden ist und die sich gut zur räumlichen Darstellung in Verbindung mit einer Filterarraystruktur nach Fig.39 eignet.

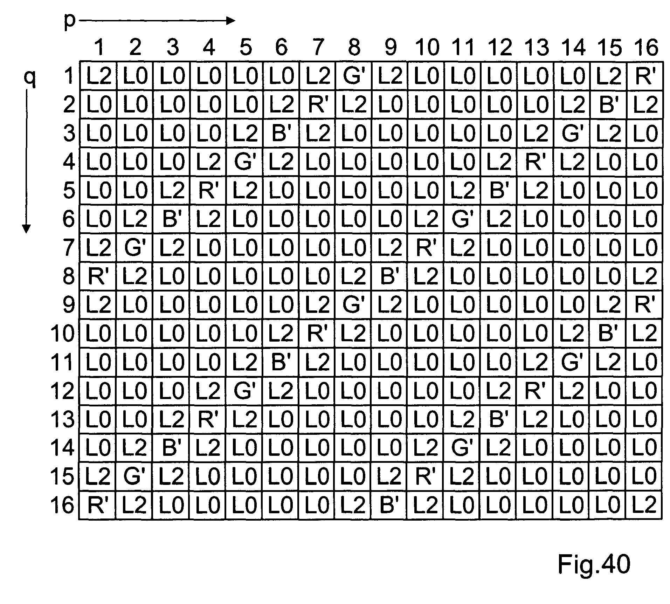

Die Fig.40 zeigt ein Filterarray 8, welches über Neutralfilter (L2) verfügt, die - bezogen auf die Lichtintensität - wellenlängenunabhängig etwa 50% des durch sie hindurchtretenden Lichtes transmittieren. Die Filter L0 sind opak, während die beispielhaft eingearbeiteten Filterelemente R',G',B' für Licht jeweils der Farbbereiche rot, grün oder blau lichtdurchlässig sind.

Auch hier ist es möglich, vollkommen andere Transparenzwellenlängenbereiche als R' ,G' ,B' für die Filterelemente zu verwenden, die überdies auch nicht auf den Bereich des sichtbaren Lichtes beschränkt bleiben müssen.

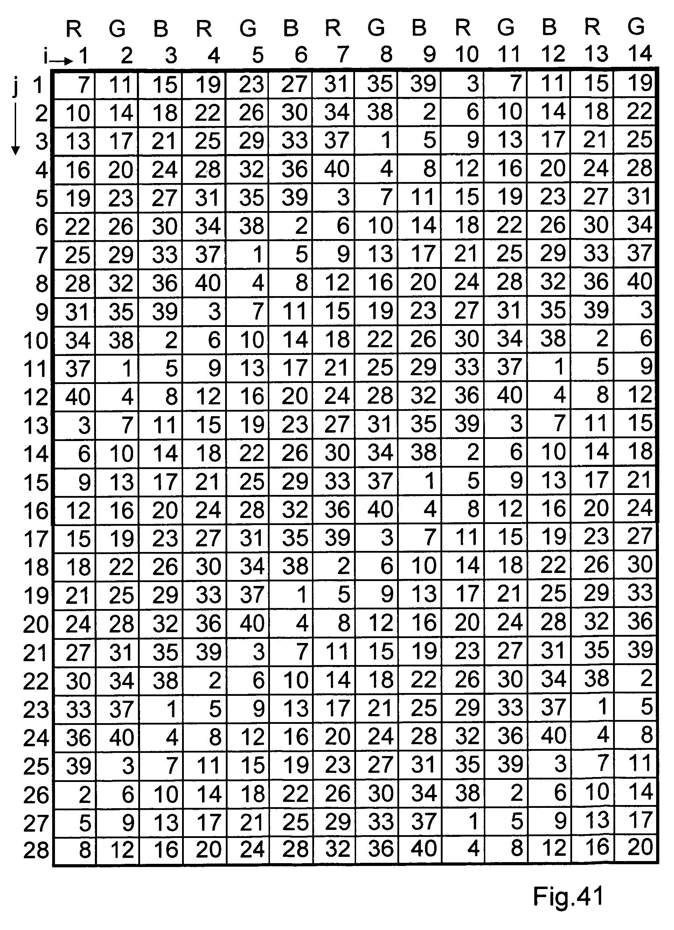

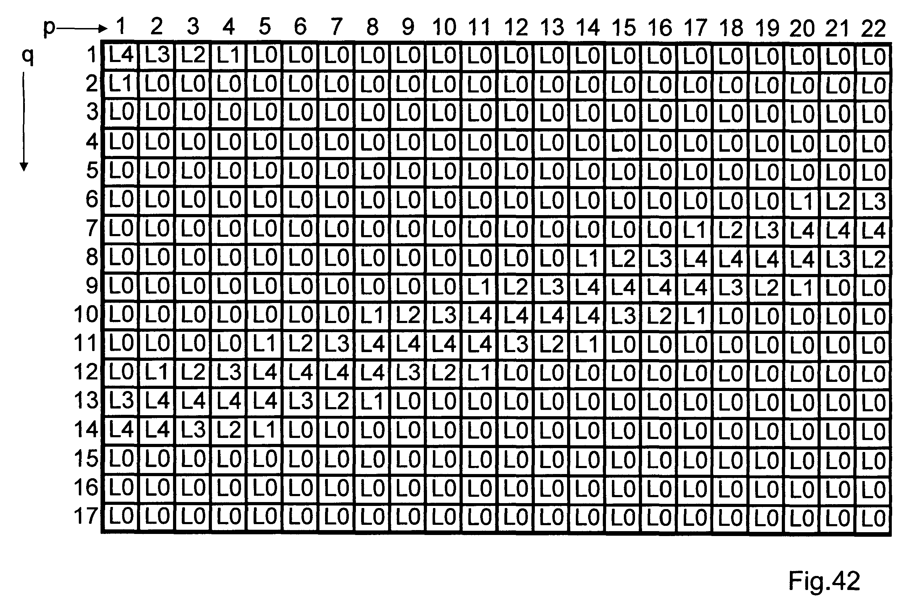

In Fig.41 ist schematisch eine weitere Möglichkeit der Bildkombination dargestellt. Hierbei kommen n=40 Ansichten zum Einsatz. Eine beispielhafte, für eine dreidimensionale Darstellung günstige Filterstruktur für diese Bildkombination ist in Fig.42 gezeigt. Dabei kommen wellenlängenunabhängige Neutralfilter zur Schwächung der Lichtintensität zum Einsatz, die jeweils 0% (L0), 25% (L1), 50% (L2), 75% (L3) oder 100% (L4) des auf sie einfallenden (sichtbaren) Lichtes transmittieren. Die Filter besitzen in diesem Ausführungsbeispiel vorzugsweise etwa ein Viertel der Breite der Bildelemente $\alpha_{ij}$, also der Subpixel, während sie in der Höhe etwa genauso ausgedehnt sind, wie die Bildelemente $\alpha_{ij}$.

Eine solche Anordnung hat insbesondere den Vorteil, daß quasi aus jeder Betrachtungsposition ein Auge eines Betrachters nahezu alle dargestellten Bildinformationen einer bestimmten Gruppe von Ansichten sieht (vermehrt um weitere Bildinformation der nächstbenachbarten Ansichten, wobei insgesamt aber stets überwiegend Ansichten der bestimmten Gruppe gesehen werden).

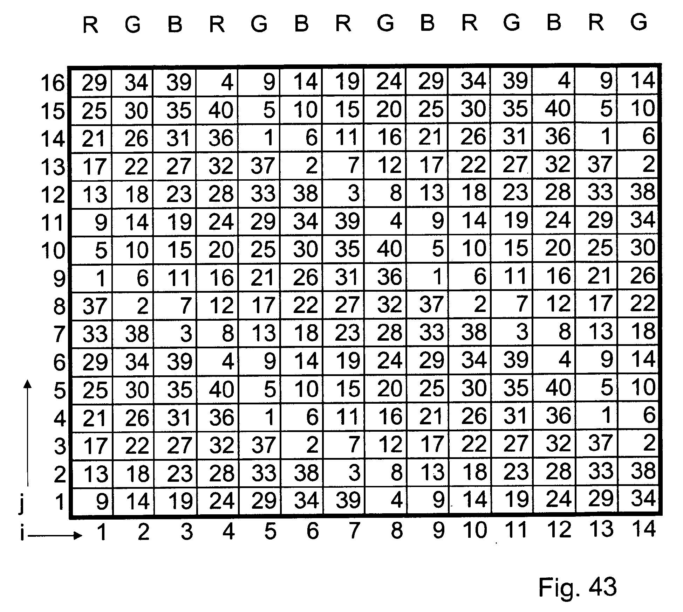

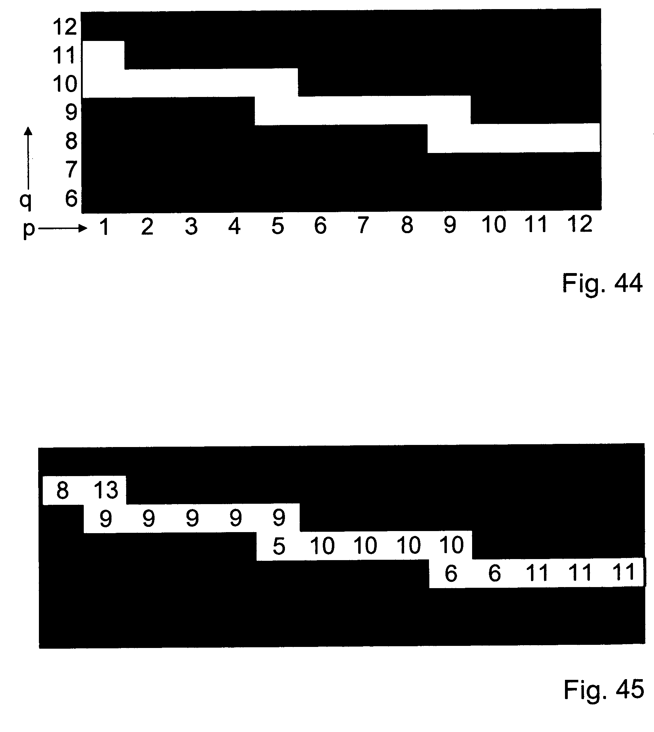

Ein unter Umständen vorteilhaftes Kombinationsbild unter Verwendung von n=40 Ansichten ist beispielhaft in Fig.43 dargestellt. Ein entsprechendes Filterarray ist in Fig.44 dargestellt. Die Breite der Filterelemente $\beta_{pq}$ beträgt in diesem Falle etwa nur ein Fünftel der Breite der Bildelemente $\alpha_{ij}$.

Aus Fig.45 ist ersichtlich, daß ein Betrachterauge überwiegend eine erste Auswahl der Ansichten $A_k$ (k=1..n) sieht, wobei die Sichtbarkeit einer dieser Ansichten überwiegt und weitere, in diesem Fall benachbarte Ansichten, teilweise ebenfalls mitgesehen werden. Allerdings ist die Darstellung in Fig.45 idealisiert; tatsächlich sind unter dem Filterarray von den Bildelementen $\alpha_{ij}$ (bzw. den Subpixeln, auf denen die entsprechenden Bildinformationen wiedergegeben werden) je nach Betrachtungsabstand stets etwas mehr oder etwas weniger als die hier dargestellten Anteile sichtbar.

Weitere Ausgestaltungen in diesem Sinne sind beispielsweise denkbar mit n=60, n=72, n=90 oder n=1 10 Ansichten.

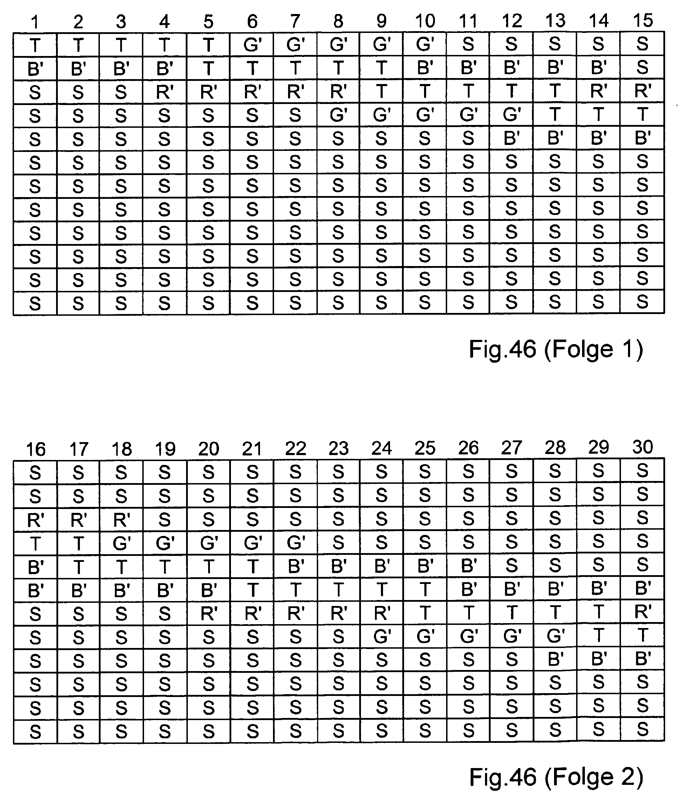

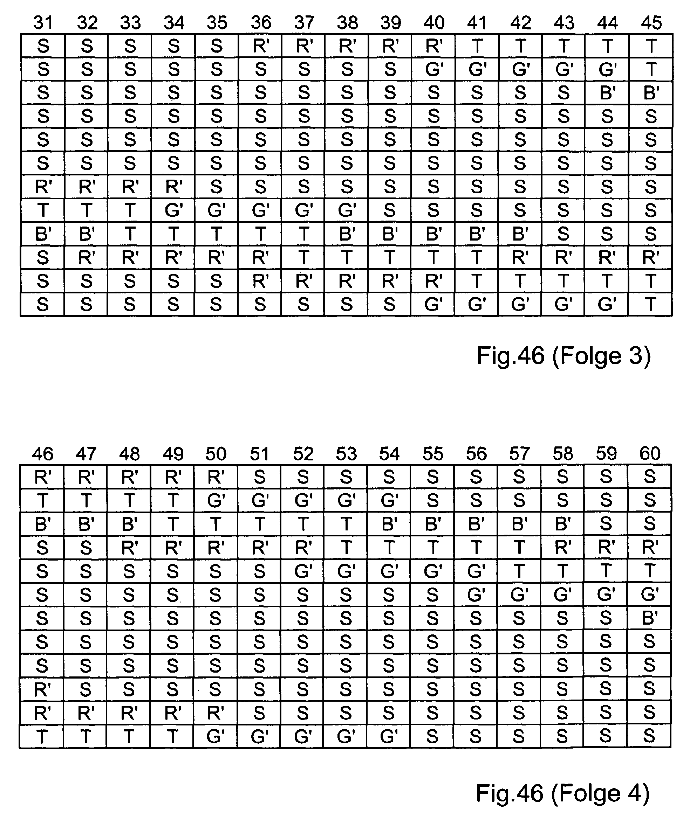

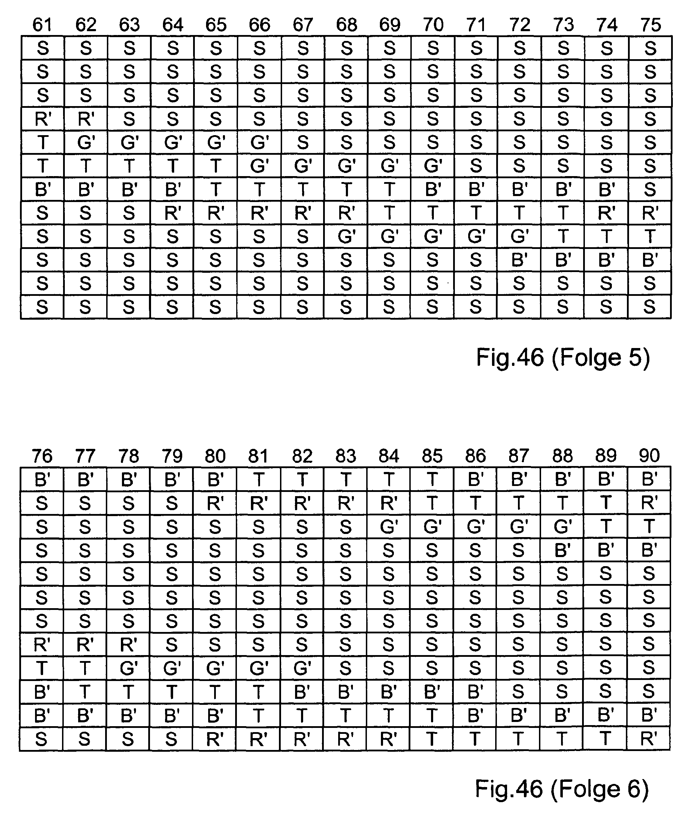

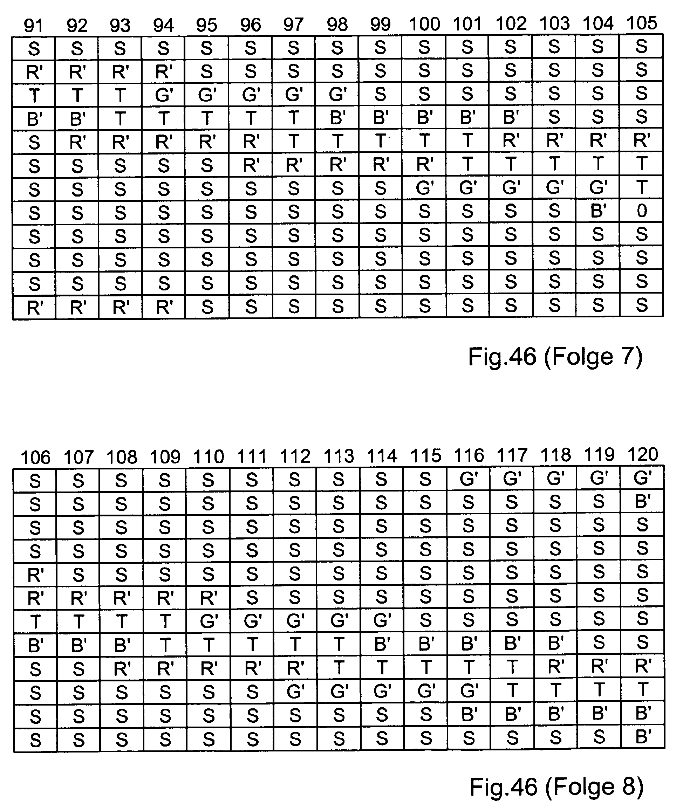

Ein weiteres Ausführungsbeispiel eines Filterarrays zeigt Fig.46. Dort hat ein Wellenlängenfilterelement $\beta_{pq}$ etwa ein Fünftel der Breite eines Bildelementes $\alpha_{ij}$, wobei in dem Filterarray nicht nur Transparent-Opak-Filter vorgesehen sind, sondern auch farbige Wellenlängenfilterelemente $\beta_{pq}$ wie beispielsweise R',G',B'. Damit wird ein helleres Bild erzielt. Eine hierfür gut geeignete Bildkombinationsvorschrift ist als Ausschnitt in Fig.43 gezeigt.

Es ist im Stand der Technik bekannt, einem Betrachter ein stereoskopisches Bild zu vermitteln, dessen eines Halbbild eine gute, das andere eine schlechte Bildauflösung aufweist, wobei der Betrachter das räumliche Bild in der Regel subjektiv trotzdem mit der hohen Auflösung wahrnimmt.

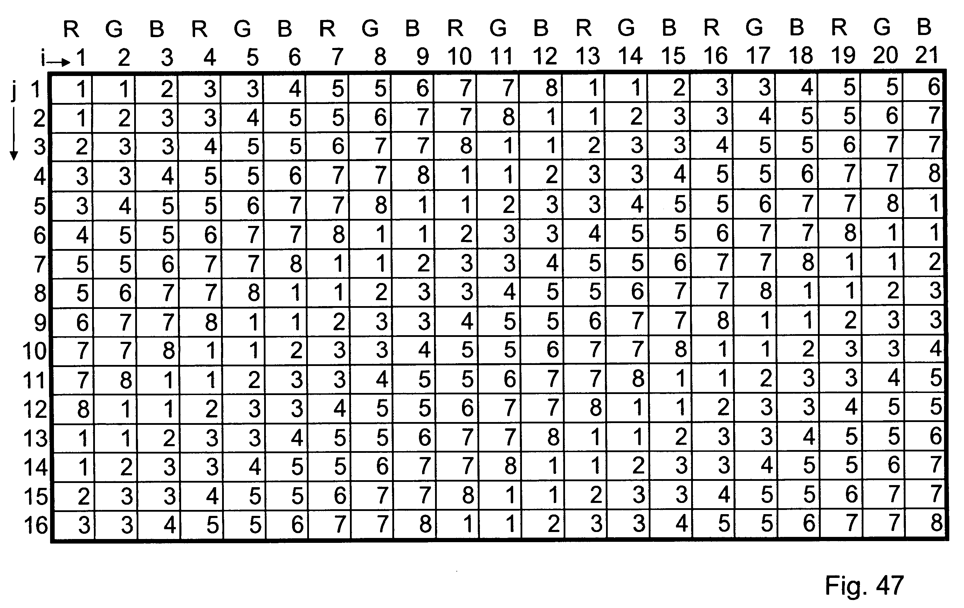

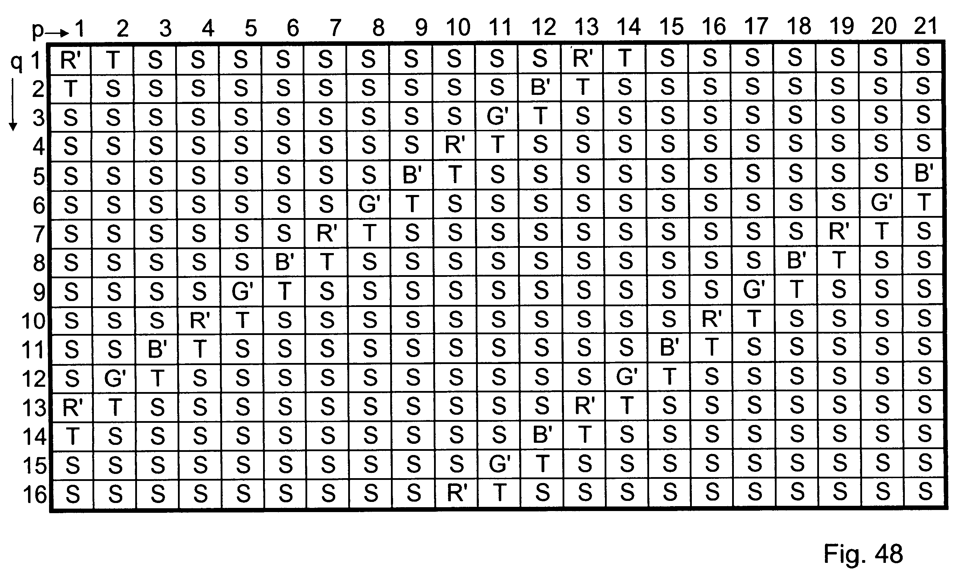

Eine beispielhafte, den vorstehend beschriebenen Effekt ausnutzende Bildkombinationsstruktur auf der Basis von n=8 Ansichten ist ausschnittsweise in Fig.47 dargestellt. Korrespondierend hierzu kann ein Filterarray, welches ausschnittsweise in Fig. 48 gezeigt ist, zum Einsatz kommen. Als günstigen Effekt einer solchen Konstellation ergibt sich, daß die Bildinformationen jeder ungeradzahligen Ansicht eine höhere Auflösung haben, als die geradzahligen Ansichten.

Dabei sieht in den häufigsten Fällen ein Betrachter mit mindestens einem seiner Augen im Mittel überwiegend Bildelemente einer ungeradzahligen Ansicht, da die Wahrscheinlichkeit vergleichsweise gering ist, daß er mit beiden Augen überwiegend jeweils Anteile von geradzahligen Ansichten sieht. Damit kann die von ihm subjektiv wahrgenommene Bildauflösung gesteigert werden.

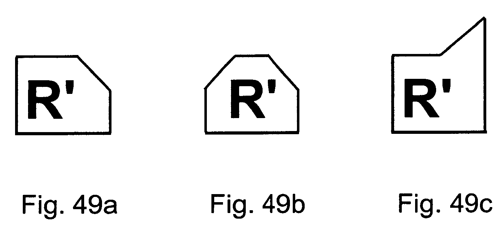

In Fig.49a, Fig.49b und Fig.49c sind Beispiele für vieleckige Filterelemente angegeben. Diese oder auch andere Vieleckformen können zur Verminderung von Moire-Effekten beitragen und sind - etwa im Gegensatz zur Veränderung der Außenform von Bildelementen in LC- oder Plasmabildschirmen - bei der Herstellung der Filterarrays in einfacher Weise zu fertigen.

Um zu erreichen, daß ein unter mehreren Betrachtern ausgewählter Betrachter trotz seiner sich verändernden Augenposition fast ausschließlich die mittleren der Ansichten $A_k$ (k=1...n) sieht, ist in einem besonderen Ausführungsbeispiel eine Einrichtung zur Verschiebung des Filterarrays senkrecht zur Blickrichtung dieses Betrachters vorgesehen.

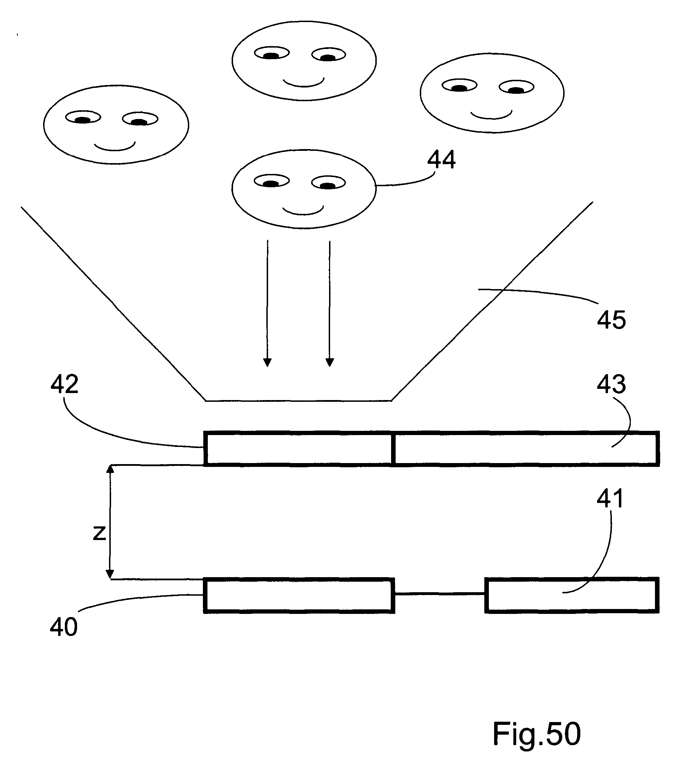

Wie in Fig.50 schematisch angedeutet, umfaßt eine diesbezügliche Anordnung ein Farb-LC-Display 40 zur Bildwiedergabe mit Ansteuerschaltung 41 und ein Filterarray 42, das mit einer mechanischen Verschiebeeinrichtung 43 zur Verschiebung senkrecht zur Blickrichtung des ausgewählten Betrachters 44 gekoppelt ist, der sich mit weiteren Betrachtern im Betrachtungsraum 45 aufhält.

Die Verschiebeeinrichtung 43 wird in einer beispielhaften Ausgestaltung aus einem Schrittmotor (mit einer entsprechenden Ansteuerung) und Führungsschienen für das Filterarray 42 gebildet. Dabei ist das Filterarray 42 auf einem Träger, z.B. einer Glasscheibe auflaminiert. Diese Glasscheibe mit dem Filterarray 42 wird an ihrer Oberkante bzw. Unterkante in einer Schiene geführt, wobei zusätzliche Mittel zur Verringerung der Reibung (z.B. Rollen) vorgesehen sein können.

Eine in der Zeichnung nicht dargestellte Tracking-Einrichtung zur Echtzeit-Detektion der Augenposition eines ausgewählten Betrachters 44 liefert über eine Recheneinrichtung Informationen für die Steuerungseinheit der Verschiebeeinrichtung 43. Diese veranlaßt die Verschiebung des Filterarrays 42 nun fortlaufend mit dem Ziel, daß der ausgewählte Betrachter 44 überwiegend stets die gleichen, paarweise verschiedenen Ansichten $A_x$ und $A_y$ aus den Ansichten $A_k$ (k=1..n) wahrnimmt.

Die Trägheit bzw. Hysterese dieses Regelkreises, der aus Tracking- und Verschiebeeinrichtung 43 besteht, wird nun dadurch ausgeglichen, daß bei zu langsamer Verschiebung bzw. überschwingender Verschiebung des Filterarrays 42 verglichen mit der jeweiligen exakt angestrebten Zielposition die neben den genannten mittleren Ansichten $A_x$ und $A_y$ befindlichen Ansichten immer noch einen korrekten 3D-Eindruck für den ausgewählten Betrachter 44 ergeben. Dies kann insbesondere auch dann von Vorteil sein, wenn großformatige Bildschirme (z.B. ein Plasma-Display des o.g. Typs) als 3D-Bildschirme konfektioniert werden sollen, weil in diesen Fällen die Masse und damit die Trägheit des Filterarrays 42 (und gegebenenfalls des Trägermateriales) sowie die Trägheit bzw. Hysterese besagter Regelkreise besonders groß sein kann.

Während der ausgewählte Betrachter 44 im wesentlichen immer die Ansichten $A_x$ und $A_y$ sieht, können die anderen Betrachter auch ein orthoskopisches autostereoskopisches 3D-Bild wahrnehmen. Bewegt sich der ausgewählte Betrachter 44, ändert sich lediglich die Perspektive der übrigen Betrachter. Für den Fall, daß dadurch ein Betrachter in die Übergangzone der Ansichten, den sogenannten Sprungpunkt, bei dem die Periode der horizontal nebeneinander wahrnehmbaren Ansichten neu beginnt (d.h. in den Übergangsbereich der letzten Ansicht $A_n$ zur ersten Ansicht $A_1$ gelangt) kann ein solcher Betrachter durch eine leichte seitliche Kopfbewegung wieder in einen orthoskopischen Sichtbereich gelangen.

Diese Ausgestaltung bietet gegenüber dem Stand der Technik viele Vorteile. Insbesondere kann ein ausgewählter Betrachter 44 ohne Hilfsmittel wie Brillen ein korrektes räumliches Bild aus im wesentlichen immer dergleichen Perspektive sehen. Pseudoskopische Erscheinungen können für diesen ausgewählten Betrachter selbst bei Verwendung sehr großer Bildanzeigegeräte und den damit zusammenhängenden recht groß zu dimensionierenden optischen Baugruppen, die zur räumlichen Wahrnehmung notwendig sind, vermieden werden, während eine Vielzahl übriger Betrachter die gleiche Szene ohne Hilfsmittel ebenfalls räumlich sehen kann.

In einer weiteren Ausgestaltung wird nicht nur das Filterarray verschoben, sondern es wird auch entsprechend der Position des ausgewählten Betrachters der Bildinhalt, d.h. die Ansichten und das resultierende Kombinationsbild, ständig und vorzugsweise in Echtzeit neu berechnet. Dadurch wird für den ausgewählten Betrachter gewissermaßen ein Herumgehen um die dargestellte räumliche Szene ermöglicht.

Eine solche Einrichtung kann insbesondere dazu dienen, einer mit einer wichtigen Aufgabe betrauten Person, etwa einem Chirurgen, dauernd die gleiche Perspektive und darüberhinaus eine stets korrekte räumliche Sichtweise darzubieten, während ein Auditorium auch ein räumliches Bild sehen soll, welches sich aber hinsichtlich der Perspektive leicht ändern kann. Dies könnte z.B. eine Gruppe von Medizinstudenten sein, die einer Operation beiwohnen.

In einem weiteren Ausführungsbeispiel der erfindungsgemäßen Anordnung ist zur Wiedergabe der Teilinformationen der Ansichten $A_k$ (k=1..n) auf Bildelementen $\alpha_{ij}$ im Raster (i,j) ein Plasma-Display, beispielsweise vom Typ Pioneer PDP-502MXE , vorgesehen.

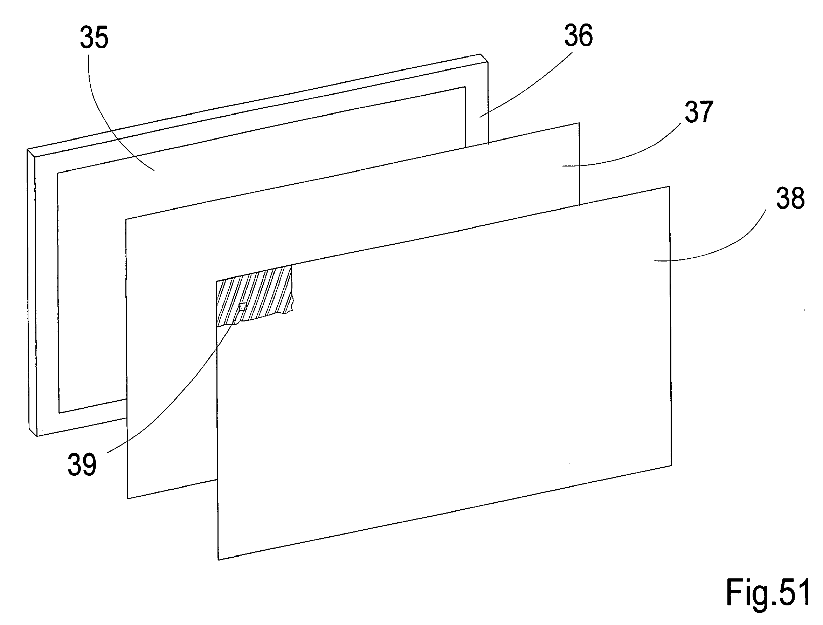

Ein diesbezüglicher Aufbau ist in Fig.51 schematisch und nicht maßstabgerecht dargestellt. Das hier angedeutete Plasma-Display 35 mit dem Rahmen 36 wird von einer zeichnerisch nicht dargestellten Elektronik derart angesteuert, daß die Bildelemente $\alpha_{ij}$ des Rasters (i,j) ihre Bildinformationen aus den Perspektivansichten gemäß der ausschnittsweise in Fig.41 gezeigten Kombinationsvorschrift beziehen. Das Raster (i,j) bezieht sich hierbei auf die Anordnung der Bildelemente $\alpha_{ij}$ als RGB-Subpixel des Plasma-Displays, d.h. die Spalte i=1 beinhaltet ausschließlich rote Bildelemente (Subpixel), während die Spalte i=2 ausschließlich grüne Bildelemente (Subpixel) beinhaltet, worauf in der nächsten Spalte i=3 die blauen Subpixel folgen usw. Dies ist durch die Buchstaben R,G,B in Fig.41 angedeutet.

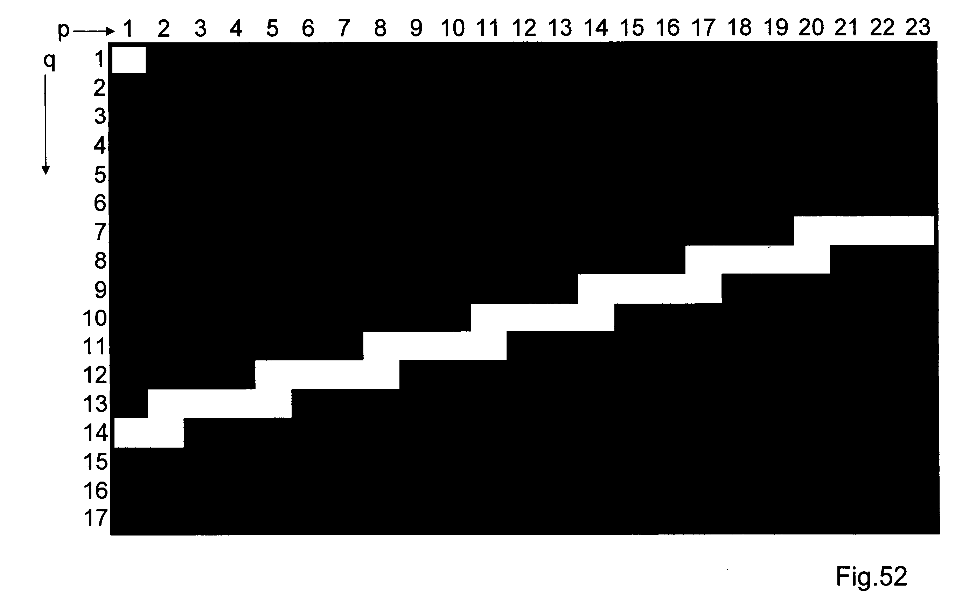

Im Abstand z vor dem Plasma-Display 35 befindet sich das Trägermaterial 37 mit einer Filterstruktur in Form eines Filterarrays 38, von dem in Fig.52 ein Ausschnitt nicht maßstabgerecht dargestellt ist. Zu beachten ist der Unterschied zwischen dem Raster (i,j) für die Bildelemente $\alpha_{ij}$ und dem Raster (p,q) für die Flächenelemente der Filterarraystruktur, insbesondere was die Breite der Flächenelemente der beiden Raster (i,j) und (p,q) in der physischen Ausführung betrifft (siehe unten).

In Fig.51 wurden das Trägermaterial 37 und das Filterarray 38 zwecks anschaulicher Darstellung getrennt gezeichnet, jedoch sind Trägermaterial 37 und das Filterarray 38 in der Regel als einheitliche Baugruppe ausgebildet.

Der Abstand z zwischen dem Filterarray 38 und dem Raster (i,j) aus Bildelementen $\alpha_{ij}$, d.h. dem Plasma-Display 35, in Blickrichtung gemessen, wird für das Ausgestaltungsbeispiel nach folgender Gleichung festgelegt:

$$(F7) \qquad \frac{z}{s_p} = \frac{d_a}{p_d}$$

Hierin bedeutet:

- $s_p$ der mittleren horizontalen Abstand zwischen zwei Bildelementen $\alpha_{ij}$,
- $p_d$ die mittlere Pupillendistanz bei einem Betrachter und
- $d_a$ einen wählbaren Betrachtungsabstand, der im wesentlichen dem mittleren aller im gesamten Betrachtungsraum möglichen Abstände zwischen dem Filterarray 38 und einem Betrachter bzw. einer Betrachtungsposition entspricht.

Im konkreten Fall einer Bildwiedergabeeinrichtung auf Basis eines Pioneer PDP-502MXE ist unter Beachtung der RGB-Subpixelstruktur $s_p$ = 286 $\mu$m, Wenn $p_d$=65 mm und $d_a$= 2.000 mm angenommen werden, dann ergibt sich z = 8,8 mm.

Die mögliche Struktur eines Filterarrays bei n=40 Ansichten ist ausschnittsweise in Fig.52 gezeigt. Eine solche Struktur ist beispielweise im Zusammenhang mit einem Kombinationsbild nach Fig.41 gut geeignet. Bei der Herstellung des Filterarrays 38 soll das Raster (p,q) der Filterstruktur vorzugsweise in seinen physischen horizontalen bzw. vertikalen Abmaßen im wesentlichen mit den physischen horizontalen bzw. vertikalen Abmaßen des Rasters (i,j) übereinstimmen, d.h. die horizontale Ausdehnung eines Flächenelementes des Rasters (p,q) beträgt hier etwa beispielhaft ein Viertel der horizontalen Ausdehnung eines Flächenelementes des Rasters (i,j), während die vertikale Ausdehnung der entsprechenden Flächenelemente im wesentlichen übereinstimmt. Daraus ergibt sich, daß die in Fig.41 gezeigten Flächenelemente des Rasters (i,j), d.h. die Bildelemente $\alpha_{ij}$, in der Fig. 41 (s. unten) in praxi jeweils die Breite von etwa vier Flächenelementen des Rasters (p,q) (der Filterstruktur) einnehmen.

Für das Plasma-Display Pioneer PDP-502MXE ist demnach ein Flächenelement im Raster (p,q) der Filterstruktur beispielhaft 71,5 μm breit und 808 μm hoch. Bevorzugt sind alle opaken Filterelemente elektrisch leitfähig ausgeführt und elektrisch leitend miteinander verbunden.

Nachfolgend werden nun zwei Beispiele für Verfahren zur Herstellung des vorbeschriebenen mindestens teilweise leitfähigen Filterarrays 38 näher erläutert.

In einem ersten Beispiel zur Herstellung eines Filterarrays 38, bei dem mindestens jedes zehnte Filterelement 39 elektrisch leitfähig ist, umfaßt das Verfahren die beiden Verfahrensschritte:

- Vorbereiten einer Siebdruckmaske unter Verwendung einer elektrisch leitfähigen Farbe, z.B. SPI Conductive Carbon Paint (Hersteller: Structure Probe, Inc., USA), wobei mindestens jedes zehnte nicht transparent vorgegebene Filterelement mittels dieser leitfähigen Farbe hergestellt wird, und
- Siebdrucken der Filterstruktur auf ein durchsichtiges Trägermaterial, z.B. PMMA oder Glas.

Sofern nicht nur opake, sondern auch andere wellenlängenselektive Filterelemente auf der Filterstruktur angebracht werden sollen, kann das so auf dem Trägermaterial 37 erzeugte Filterarray 38 auch noch weitere Male den Siebdruckprozeß durchlaufen, wobei jedes Mal die Filter eines bestimmten Wellenlängentransparenzbereiches aufgebracht werden können.

Ein zweites Beispiel zur Herstellung des Filterarrays 38, bei dem mindestens jedes zehnte Filterelement 39 elektrisch leitfähig ist, umfaßt die folgenden Schritte:

- Vorbereiten einer Druckmaske unter Verwendung metallischer Partikel, z.B. Silberpartikel, wobei mindestens jedes zehnte nicht transparent vorgegebene Filterelement 39 mittels besagter Partikel gebildet wird,
- Beschichten eines durchsichtigen Trägermaterials, z.B. PMMA oder Glas, mit einem durchsichtigen Klebstoff (z.B. Acrifix 192 Kleber, Hersteller: Röhm GmbH Darmstadt),
- Aufdrucken der Filterstruktur auf das Trägermaterial und
- sofern erforderlich Belichtung, z.B. UV-Belichtung, der Beschichtung zur Aushärtung des Klebers.
Die metallischen Partikel kommen in diesem Fall im wesentlichen nur für opake Filterelemente in Frage.

Diese Ausgestaltung der Erfindung bietet den Vorteil, daß an Stelle von elektrisch leitfähigen, durchsichtigen Frontscheiben für Plasma-Displays gewöhnliche Glas- oder PMMA-Scheiben verwendet werden können. Dadurch wird auch der Umbau von gewöhnlichen Plasma-Bildschirmen zu 3D-Bildschirmen vereinfacht, da dann nicht zusätzlich ein Filterarray auf eine spezielle Frontscheibe aufgebracht werden muß.

**Patentansprüche**

1.  Anordnung zur räumlichen Darstellung einer Szene/eines Gegenstandes, bei der eine Vielzahl einzelner Bildelemente $\alpha_{ij}$ in einem Raster aus Spalten i und Zeilen j gleichzeitig sichtbar gemacht wird, umfassend

    - eine Einrichtung zur Wiedergabe eines Bildarrays aus einer Vielzahl von Bildelementen $\alpha_{ij}$, die in vorgegebener Zuordnung Informationen aus mehreren Ansichten $A_k$ (k=1 ... n) der Szene/des Gegenstandes repräsentieren, wobei von den einzelnen Bildelementen Licht in unterschiedlichen Wellenlängenbereichen abgestrahlt wird,
    - mit i dem Index eines Bildelements $\alpha_{ij}$ in einer Zeile des Rasters, j dem Index eines Bildelements $\alpha_{ij}$ in einer Spalte des Rasters, k der fortlaufenden Nummer der Ansicht $A_k$ (k=1...n), und n der Gesamtzahl der jeweils verwendeten Ansichten $A_k$ (k=1...n),
    - eine in Blickrichtung eines Betrachters vor oder hinter der Bildwiedergabeeinrichtung angeordnete Filteranordnung (9) mit einem Filterarray (10) aus einer Vielzahl von Filterelementen, die Linearpolarisationsfilterelemente (11.2) sowie in bestimmten Wellenlängenbereichen durchlässige Wellenlängenfilterelemente $\beta_{pq}$ umfassen, mit einem Linearpolarisationsfilter (13) und mit einem zwischen dem Filterarray (10) und dem Linearpolarisationsfilter (13) angeordneten ansteuerbaren optischen Medium (12), bevorzugt in Form von Flüssigkristallen, das in Abhängigkeit von seiner Ansteuerung eine Drehung der Polarisationsrichtung von hindurchtretendem, linearpolarisiertem Licht bewirkt, mit p dem Index eines Wellenlängenfilterelements $\beta_{pq}$ in einer Zeile des Filterarrays (10) und q dem Index eines Wellenlängenfilterelements $\beta_{pq}$ in einer Spalte des Filterarrays (10),
- wobei die Filterelemente derart angeordnet sind, daß
- in einem ersten Zustand des optischen Mediums (12), in dem die durch das optische Medium (12) bewirkte Polarisationsrichtung und die Polarisationsrichtung des nachfolgenden Filters, d.h. der Linearpolarisationsfilterelemente (11.2) des Filterarrays (10) oder des Linearpolarisationsfilters (13), einander kreuzen, für das von der Bildwiedergabeeinrichtung abgestrahlte Licht definierte Ausbreitungsrichtungen vorgegeben sind, so daß an einer Vielzahl von ersten Beobachtungsorten überwiegend Informationen einer ersten Gruppe von Ansichten aus den Ansichten $A_k$ und an einer Vielzahl von zweiten Beobachtungsorten, von denen sich jeder etwa in Augenabstand von einem zugeordneten ersten Beobachtungsort befindet, überwiegend Informationen einer zweiten Gruppe von Ansichten aus den Ansichten $A_k$ wahrnehmbar sind, wobei eine Vielzahl solcher Gruppen von Ansichten existiert, und
- in einem zweiten Zustand des optischen Mediums (12), in dem die durch das optische Medium (12) bewirkte Polarisationsrichtung und die Polarisationsrichtung des nachfolgenden Filters, d.h. der Linearpolarisationsfilterelemente (11.2) des Filterarrays (10) oder des Linearpolarisationsfilters (13), im wesentlichen parallel zueinander verlaufen, die Filteranordnung (9) gegenüber der ersten Stellung eine erhöhte Transparenz aufweist.

2. Anordnung nach Anspruch 1, **dadurch gekennzeichnet, daß** alle Linearpolarisationsfilterelemente (11.2) die gleiche Polarisationsrichtung aufweisen.

3. Anordnung zur räumlichen Darstellung einer Szene/eines Gegenstandes, bei der eine Vielzahl einzelner Bildelemente $\alpha_{ij}$ in einem Raster aus Spalten i und Zeilen j gleichzeitig sichtbar gemacht wird, umfassend

- eine Einrichtung zur Wiedergabe eines Bildarrays aus einer Vielzahl von Bildelementen $\alpha_{ij}$, die in vorgegebener Zuordnung Informationen aus mehreren Ansichten $A_k$ (k=1...n) der Szene/des Gegenstandes repräsentieren, wobei von den einzelnen Bildelementen Licht in unterschiedlichen Wellenlängenbereichen abgestrahlt wird,
- mit i dem Index eines Bildelements $\alpha_{ij}$ in einer Zeile des Rasters, j dem Index eines Bildelements $\alpha_{ij}$ in einer Spalte des Rasters, k der fortlaufenden Nummer der Ansicht $A_k$, und n der Gesamtzahl der jeweils verwendeten Ansichten $A_k$ (k=1 ...n),
- eine in Blickrichtung eines Betrachters auf die Bildwiedergabeeinrichtung angeordnete Filteranordnung (9) mit einem Filterarray (10), das eine Vielzahl von in bestimmten Wellenlängenbereichen durchlässigen Wellenlängenfilterelementen $\beta_{pq}$ umfaßt, und mit einer in Blickrichtung des Betrachters hinter der Bildwiedergabeeinrichtung und vor dem Filterarray (10) angeordneten Streuscheibe (15), die wahlweise zwischen einer transparenten Stellung und einer streuenden Stellung umschaltbar ist, mit p dem Index eines Wellenlängenfilterelements $\beta_{pq}$ in einer Zeile des Filterarrays (10) und q dem Index eines Wellenlängenfilterelements $\beta_{pq}$ in einer Spalte des Filterarrays (10),
- wobei die Wellenlängenfilterelemente $\beta_{pq}$ derart angeordnet sind, daß
- in der transparenten Stellung der Streuscheibe (15) für das von der Bildwiedergabeeinrichtung abgestrahlte Licht definierte Ausbreitungsrichtungen vorgegeben sind, so daß an einer Vielzahl von ersten Beobachtungsorten überwiegend Informationen einer ersten Gruppe von Ansichten aus den Ansichten $A_k$ und an einer Vielzahl von zweiten Beobachtungsorten, von denen sich jeder etwa in Augenabstand von einem zugeordneten ersten Beobachtungsort befindet, überwiegend Informationen einer zweiten Gruppe von Ansichten aus den Ansichten $A_k$ wahrnehmbar sind, und
- in der streuenden Stellung der Streuscheibe (1 5) die Strukturierung des durch das Filterarray (10) hindurchtretenden Lichtes gegenüber der ersten Stellung vermindert wird.

4. Anordnung nach einem der Ansprüche 1 bis 3, **dadurch gekennzeichnet, daß** das Filterarray (10) als passiver Filter ausgebildet ist.

5. Anordnung nach einem der Ansprüche 1 bis 4, **dadurch gekennzeichnet, daß** die Wellenlängenfilterelemente jeweils in mindestens einem der drei Farbbereiche rot, grün oder blau oder im gesamten Spektrum des sichtbaren Lichtes transparent oder opak sind.

6. Anordnung zur räumlichen Darstellung einer Szene/eines Gegenstandes, bei der eine Vielzahl einzelner Bildelemente $\alpha_{ij}$ in einem Raster aus Spalten i und Zeilen j gleichzeitig sichtbar gemacht wird,

- mit einer Bildwiedergabeeinrichtung (18) aus einer Vielzahl von transluzenten Bildelementen $\alpha_{ij}$, auf denen Bildinformationen aus mehreren Ansichten $A_k$ (k=1 ...n) der Szene/des Gegenstandes darstellbar sind, mit i dem Index eines Bildelements $\alpha_{ij}$ in einer Zeile des Rasters, j dem Index eines Bildelements $\alpha_{ij}$ in einer Spalte

des Rasters, k der fortlaufenden Nummer der Ansicht $A_k$, und n der Gesamtzahl der jeweils verwendeten Ansichten $A_k$ (k=1 1 ... n),

- mit einem in Blickrichtung eines Betrachters der Bildwiedergabeeinrichtung (18) nachgeordneten Wellenlängenfilterarray (20), das aus einer Vielzahl von in vorgegebenen Wellenlängenbereichen lichtdurchlässigen Wellenlängenfilterelementen $\beta_{pq}$ besteht, mit p dem Index eines Wellenlängenfilterelements $\beta_{pq}$ in einer Zeile des Wellenlängenfilterarrays (10) und q dem Index eines Wellenlängenfilterelements $\beta_{pq}$ in einer Spalte des Wellenlängenfilterarrays (10), und

- mit einer Beleuchtungsvorrichtung, wobei in Abhängigkeit von der Beleuchtung der Bildelemente $\alpha_{ij}$ und/oder Wellenlängenfilterelemente $\beta_{pq}$ die Szene/der Gegenstand für den Betrachter zweidimensional oder dreidimensional wahrnehmbar ist,

**dadurch gekennzeichnet, daß** Mittel zur Umschaltung zwischen mehreren unterschiedlichen Betriebsarten vorgesehen sind, bei denen das Beleuchtungslicht entweder

- zwecks zweidimensionaler Darstellung ausschließlich nur durch die Bildelemente $\alpha_{ij}$ der Bildwiedergabeeinrichtung (18), nicht jedoch durch Wellenlängenfilterelemente $\beta_{pq}$ des Wellenlängenfilterarrays (20) hindurch zum Betrachter gelangt oder

- zwecks dreidimensionaler Darstellung durch mindestens einen Teil der Wellenlängenfilterelemente $\beta_{pq}$ des Wellenlängenfilterarrays (20) und nachfolgend durch einen zugeordneten Teil der Bildelemente $\alpha_{ij}$ der Bildwiedergabeeinrichtung (18) hindurch zum Betrachter gelangt.

7. Anordnung nach Anspruch 6, **dadurch gekennzeichnet, daß** in Blickrichtung des Betrachters

- zwischen der Bildwiedergabeeinrichtung (18) und dem Wellenlängenfilterarray (20) eine erste Planbeleuchtungsquelle (19) und hinter dem Wellenlängenfilterarray (20) eine zweite Planbeleuchtungsquelle (21) vorgesehen sind und

- beide Planbeleuchtungsquellen (2,4) mit separat ansteuerbaren Ein-/Ausschaltern gekoppelt sind und

- in einer ersten Betriebsart zwecks zweidimensionaler Darstellung lediglich die erste Planbeleuchtungsquelle (19) eingeschaltet ist und Beleuchtungslicht nur durch die Bildwiedergabeeinrichtung (18), nicht jedoch durch das Wellenlängenfilterarray (20) hindurch zum Betrachter gelangt und

- in einer zweiten Betriebsart zwecks dreidimensionaler Darstellung lediglich die zweite Planbeleuchtungsquelle (21) eingeschaltet ist und Beleuchtungslicht stets durch das Wellenlängenfilterarray (20) und die Bildwiedergabeeinrichtung (18) hindurch zum Betrachter gelangt.

8. Anordnung nach Anspruch 7, **dadurch gekennzeichnet, daß** dem Wellenlängenfilterarray (20) ein Shutter (23) aus einer Vielzahl einzeln ansteuerbarer Shutterelemente zugeordnet ist, wobei je nach Anzahl der angesteuerten Shutterelemente der Weg des von der zweiten Planbeleuchtungsquelle (21) erzeugten Beleuchtungslichtes durch eine größere oder kleinere Anzahl Wellenlängenfilterelemente $\beta_{pq}$ hindurch unterbrochen oder freigegeben ist und

- in einer ersten Betriebsart zwecks zweidimensionaler Darstellung lediglich die erste Planbeleuchtungsquelle (19) eingeschaltet ist und Beleuchtungslicht nur durch die Bildwiedergabeeinrichtung (18), nicht jedoch durch das Wellenlängenfilterarray (20) hindurch zum Betrachter gelangt,

- in einer zweiten Betriebsart zwecks dreidimensionaler Darstellung lediglich die zweite Planbeleuchtungsquelle (21) eingeschaltet ist und Beleuchtungslicht stets durch das Wellenlängenfilterarray (20) und die Bildwiedergabeeinrichtung (18) hindurch zum Betrachter gelangt und

- in einer dritten Betriebsart beide Planbeleuchtungsquellen (19, 21) eingeschaltet sind und eine vorgegebene Anzahl von Shutterelementen so angesteuert ist, daß das Beleuchtungslicht in Bereichen der angesteuerten Shutterelemente durch die Filterelemente und die zugeordneten Bildelemente hindurch zum Betrachter gelangt, während das Beleuchtungslicht in Bereichen der nicht angesteuerten Shutterelemente nur durch die Bildwiedergabeeinrichtung (18) hindurch zum Betrachter gelangt, wodurch die Szene/der Gegenstand mit Blick auf die Bereiche der nicht angesteuerten Shutterelemente zweidimensional, dagegen mit Blick auf die Bereiche der angesteuerten Shutterelemente dreidimensional wahrnehmbar ist.

9. Anordnung nach Anspruch 7, **dadurch gekennzeichnet, daß** die erste Planbeleuchtungsquelle (19) als plattenförmiger Lichtleiter (25) ausgebildet ist, der von zwei aneinander gegenüberliegenden Großflächen (25.1, 25.2), von denen eine erste zur Bildwiedergabeeinrichtung (18), die zweite zum Wellenlängenfilterarray (20) weist, sowie von umlaufenden Schmalflächen (25.3, 25.4) begrenzt ist und der von mindestens einer Lichtquelle (24, 26) gespeist wird, deren Strahlung durch eine der Schmalflächen (25.3) hindurch in den Lichtleiter (25) eingekoppelt wird und dort teils infolge Totalreflexion an den beiden Großflächen (25.1 , 25.2) hin- und herreflektiert und teils als Nutzlicht über die erste Großfläche (25.1) abgestrahlt wird.

10. Anordnung nach Anspruch 9, **dadurch gekennzeichnet, daß** die zweite Großfläche (25.2) des Lichtleiters (25) mit einer die Totalreflexion störenden Beschichtung (27) aus Partikeln versehen ist, deren Störvermögen über die Ausdehnung der zweiten Großfläche (25.2) hinweg zwischen zwei Grenzwerten inhomogen ist, wobei die Grenzwerte von der Dichte d der Beschichtung (27) abhängig sind und die Dichte d ein Maß für den mittleren Abstand der Partikel pro Flächeneinheit ist.

11. Anordnung nach Anspruch 10, **dadurch gekennzeichnet, daß** das Störvermögen der Beschichtung (27)

- bevorzugt mit wachsenden Abständen $x_1$, $x_2$ von zwei Schmalflächen (25.3, 25.4), in die jeweils Licht eingekoppelt wird, zunehmend stärker ausgebildet ist,
- besonders bevorzugt mit wachsendem Abstand x von der einen Schmalfläche (25.3), in die das Licht eingekoppelt wird, zunehmend stärker ausgebildet ist.

12. Anordnung nach einem der Ansprüche 10 oder 11, **dadurch gekennzeichnet, daß** als Beschichtung (27) ein Lack außen auf die zweite Großfläche (25.2) aufgebracht ist, wobei die örtliche Lackdichte ein Äquivalent für das Störvermögen an diesem Ort ist.

13. Anordnung nach Anspruch 7, **dadurch gekennzeichnet, daß** das Wellenlängenfilterarray (20) auf seiner der Bildwiedergabeeinrichtung (18) zugewandten Seite (20.1) mit spiegelnden oder streuenden Oberflächenelementen (30) versehen ist und mindestens eine Lichtquelle vorhanden ist, deren Strahlung in der ersten Betriebsart nur auf die Seite (20.1) des Wellenlängenfilterarrays (20) mit den spiegelnden oder streuenden Oberflächenelementen (30) gerichtet ist, in der zweiten Betriebsart nur auf die dem Betrachter abgewandte Seite (20.2) des Wellenlängenfilterarrays (20) gerichtet ist.

14. Anordnung nach Anspruch 13, **dadurch gekennzeichnet, daß** mindestens zwei voneinander unabhängige Lichtquellen vorgesehen sind, wobei in der ersten Betriebsart die Strahlung von einer dieser Lichtquellen lediglich auf die dem Betrachter zugewandte und mit Oberflächenelementen (30) versehene Seite (20.1) des Wellenlängenfilterarrays (20) und in der zweiten Betriebsart die Strahlung einer weiteren Lichtquelle ausschließlich auf die dem Betrachter abgewandte Seite (20.2) gerichtet ist, diese Lichtquellen mit separat ansteuerbaren Ein-/Aus-schaltern gekoppelt sind und/oder in den Beleuchtungsstrahlengängen mindestens einer der Lichtquellen separat ansteuerbare Shutter zur Unterbrechung oder Freigabe des gesamten oder nur von Anteilen des jeweiligen Beleuchtungsstrahlengangs vorgesehen sind.

15. Anordnung nach einem der Ansprüche 13 oder 14, **dadurch gekennzeichnet, daß** die Wellenlängenfilterelemente $\beta_{pq}$ des Wellenlängenfilterarrays (20) als statische Filter ausgeführt sind und die Oberflächenelemente (30) ausschließlich auf den opaken Flächenbereichen des Wellenlängenfilterarrays (20) positioniert sind.

Fig.1

| S | S | S | S | S | S | R' | S | S | S | S | S | S | S | S | B' | S | S | S | S | S | S | S | G' | S |
|---|---|---|---|---|---|----|---|---|---|---|---|---|---|---|----|---|---|---|---|---|---|---|----|---|
| S | S | S | S | S | B' | S | S | S | S | S | S | S | G' | S | S | S | S | S | S | S | R' | S | S | S |
| S | S | S | S | G' | S | S | S | S | S | S | S | R' | S | S | S | S | S | S | S | B' | S | S | S | S |
| S | S | S | R' | S | S | S | S | S | S | S | B' | S | S | S | S | S | S | S | G' | S | S | G | S | S |
| S | S | B' | S | S | S | S | S | S | S | G' | S | S | S | S | S | S | S | R' | S | S | S | S | S | S |
| S | G' | S | S | S | S | S | S | S | R' | S | S | S | S | S | S | S | B' | S | S | S | S | S | S | S |
| R' | S | S | S | S | S | S | B' | S | S | S | S | S | S | S | G' | S | S | S | S | S | S | S | S | S |
| S | S | S | S | S | S | S | G' | S | S | S | S | S | S | S | R' | S | S | S | S | S | S | S | S | B' |
| S | S | S | S | S | S | R' | S | S | S | S | S | S | S | B' | S | S | S | S | S | S | S | G' | S | S |
| S | S | S | S | S | B' | S | S | S | S | S | S | S | G' | S | S | S | S | S | S | S | R' | S | S | S |
| S | S | S | S | G' | S | S | S | S | S | S | S | R' | S | S | S | S | S | S | S | B' | S | S | S | S |
| S | S | S | R' | S | S | S | S | S | S | S | B' | S | S | S | S | S | S | S | G' | S | S | S | S | S |
| S | S | B' | S | S | S | S | S | S | S | G' | S | S | S | S | S | S | S | R' | S | S | S | S | S | S |
| S | G' | S | S | S | S | S | S | S | R' | S | S | S | S | S | S | S | B' | S | S | S | S | S | S | S |
| R' | S | S | S | S | S | S | B' | S | S | S | S | S | S | S | G' | S | S | S | S | S | S | S | S | S |
| S | S | S | S | S | S | S | G' | S | S | S | S | S | S | S | R' | S | S | S | S | S | S | S | S | B' |
| S | S | S | S | S | S | R' | S | S | S | S | S | S | S | B' | S | S | S | S | S | S | S | G' | S | S |
| S | S | S | S | S | B' | S | S | S | S | S | S | S | G' | S | S | S | S | S | S | S | R' | S | S | S |
| S | S | S | S | G' | S | S | S | S | S | S | S | R' | S | S | S | S | S | S | S | B' | S | S | S | S |
| S | S | S | R' | S | S | S | S | S | S | S | B' | S | S | S | S | S | S | S | G' | S | S | S | S | S |
| S | S | B' | S | S | S | S | S | S | S | G' | S | S | S | S | S | S | S | R' | S | S | S | S | S | S |
| S | G' | S | S | S | S | S | S | S | R' | S | S | S | S | S | S | S | B' | S | S | S | S | S | S | S |
| R' | S | S | S | S | S | S | B' | S | S | S | S | S | S | S | G' | S | S | S | S | S | S | S | S | S |
| S | S | S | S | S | S | S | G' | S | S | S | S | S | S | S | R' | S | S | S | S | S | S | S | S | B' |

Y

X

Fig.2

| R | G | B | R | G | B | R | G | B | R | G | B | R | G | B | R | G | B | R | G | B | R | G | B |
|---|---|---|---|---|---|---|---|---|---|---|---|---|---|---|---|---|---|---|---|---|---|---|---|
| 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 | 1 |
| 3 | 4 | 5 | 6 | 7 | 8 | 1 | 2 | 3 | 4 | 5 | 6 | 7 | 8 | 1 | 2 | 3 | 4 | 5 | 6 | 7 | 8 | 1 | 2 |
| 4 | 5 | 6 | 7 | 8 | 1 | 2 | 3 | 4 | 5 | 6 | 7 | 8 | 1 | 2 | 3 | 4 | 5 | 6 | 7 | 8 | 1 | 2 | 3 |
| 5 | 6 | 7 | 8 | 1 | 2 | 3 | 4 | 5 | 6 | 7 | 8 | 1 | 2 | 3 | 4 | 5 | 6 | 7 | 8 | 1 | 2 | 3 | 4 |
| 6 | 7 | 8 | 1 | 2 | 3 | 4 | 5 | 6 | 7 | 8 | 1 | 2 | 3 | 4 | 5 | 6 | 7 | 8 | 1 | 2 | 3 | 4 | 5 |
| 7 | 8 | 1 | 2 | 3 | 4 | 5 | 6 | 7 | 8 | 1 | 2 | 3 | 4 | 5 | 6 | 7 | 8 | 1 | 2 | 3 | 4 | 5 | 6 |
| 8 | 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 |
| 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 | 1 |
| 3 | 4 | 5 | 6 | 7 | 8 | 1 | 2 | 3 | 4 | 5 | 6 | 7 | 8 | 1 | 2 | 3 | 4 | 5 | 6 | 7 | 8 | 1 | 2 |
| 4 | 5 | 6 | 7 | 8 | 1 | 2 | 3 | 4 | 5 | 6 | 7 | 8 | 1 | 2 | 3 | 4 | 5 | 6 | 7 | 8 | 1 | 2 | 3 |
| 5 | 6 | 7 | 8 | 1 | 2 | 3 | 4 | 5 | 6 | 7 | 8 | 1 | 2 | 3 | 4 | 5 | 6 | 7 | 8 | 1 | 2 | 3 | 4 |
| 6 | 7 | 8 | 1 | 2 | 3 | 4 | 5 | 6 | 7 | 8 | 1 | 2 | 3 | 4 | 5 | 6 | 7 | 8 | 1 | 2 | 3 | 4 | 5 |
| 7 | 8 | 1 | 2 | 3 | 4 | 5 | 6 | 7 | 8 | 1 | 2 | 3 | 4 | 5 | 6 | 7 | 8 | 1 | 2 | 3 | 4 | 5 | 6 |
| 8 | 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 |
| 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 | 1 |
| 3 | 4 | 5 | 6 | 7 | 8 | 1 | 2 | 3 | 4 | 5 | 6 | 7 | 8 | 1 | 2 | 3 | 4 | 5 | 6 | 7 | 8 | 1 | 2 |
| 4 | 5 | 6 | 7 | 8 | 1 | 2 | 3 | 4 | 5 | 6 | 7 | 8 | 1 | 2 | 3 | 4 | 5 | 6 | 7 | 8 | 1 | 2 | 3 |
| 5 | 6 | 7 | 8 | 1 | 2 | 3 | 4 | 5 | 6 | 7 | 8 | 1 | 2 | 3 | 4 | 5 | 6 | 7 | 8 | 1 | 2 | 3 | 4 |
| 6 | 7 | 8 | 1 | 2 | 3 | 4 | 5 | 6 | 7 | 8 | 1 | 2 | 3 | 4 | 5 | 6 | 7 | 8 | 1 | 2 | 3 | 4 | 5 |
| 7 | 8 | 1 | 2 | 3 | 4 | 5 | 6 | 7 | 8 | 1 | 2 | 3 | 4 | 5 | 6 | 7 | 8 | 1 | 2 | 3 | 4 | 5 | 6 |
| 8 | 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 |
| 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |

Fig.3

Fig.4

Fig.5

Fig.6

Fig.7

Fig.8

Fig. 9

Fig.10

Fig. 11

| T | S | S | S |
|---|---|---|---|

Fig. 12

| R | G | B |
|---|---|---|

Fig. 13

Fig.14

Fig.15

Fig.16

Fig.17

|    |    | G' | G' | G' | B' | B' | B' |
|----|----|----|----|----|----|----|----|
| G' | B' | G' | R' | R' | R' | G' | G' | G' |
| R' | B' | R' | B' | R' | B' | R' | R' | R' |

Fig.18

|    |    | R' | R' | R' | T | T | T |
|----|----|----|----|----|----|----|----|
| B' | R' | B' | G' | B' | G' | T | T | T |
| G' | G' | G' | R' | B' | R' | T | T | T |

Fig.19

| G' | G' | G' | R' | B' | R' | B' | R' | B' | R' | R' | R' | G' | G' | G' | B' | B' | B' | G' | B' | G' | R' | R' | R' |
|----|----|----|----|----|----|----|----|----|----|----|----|----|----|----|----|----|----|----|----|----|----|----|----|
| R' | R' | R' | G' | G' | G' | B' | B' | B' | G' | B' | G' | R' | R' | R' | G' | G' | G' | R' | B' | R' | B' | R' | B' |
| G' | B' | G' | R' | R' | R' | G' | G' | G' | R' | B' | R' | B' | R' | B' | R' | R' | R' | G' | G' | G' | B' | B' | B' |
| R' | B' | R' | B' | R' | B' | R' | R' | R' | G' | G' | G' | B' | B' | B' | G' | B' | G' | R' | R' | R' | G' | G' | G' |
| G' | G' | G' | B' | B' | B' | G' | B' | G' | R' | R' | R' | G' | G' | G' | R' | B' | R' | B' | R' | B' | R' | R' | R' |
| R' | R' | R' | G' | G' | G' | R' | B' | R' | B' | R' | B' | R' | R' | R' | G' | G' | G' | B' | B' | B' | G' | B' | G' |
| B' | R' | B' | R' | R' | R' | G' | G' | G' | B' | B' | B' | G' | B' | G' | R' | R' | R' | G' | G' | G' | R' | B' | R' |
| B' | B' | B' | G' | B' | G' | R' | R' | R' | G' | G' | G' | R' | B' | R' | B' | R' | B' | R' | R' | R' | G' | G' | G' |
| G' | G' | G' | R' | B' | R' | B' | R' | B' | R' | R' | R' | G' | G' | G' | B' | B' | B' | G' | B' | G' | R' | R' | R' |
| R' | R' | R' | G' | G' | G' | B' | B' | B' | G' | B' | G' | R' | R' | R' | G' | G' | G' | R' | B' | R' | B' | R' | B' |
| G' | B' | G' | R' | R' | R' | G' | G' | G' | R' | B' | R' | B' | R' | B' | R' | R' | R' | G' | G' | G' | B' | B' | B' |
| R' | B' | R' | B' | R' | B' | R' | R' | R' | G' | G' | G' | B' | B' | B' | G' | B' | G' | R' | R' | R' | G' | G' | G' |
| G' | G' | G' | B' | B' | B' | G' | B' | G' | R' | R' | R' | G' | G' | G' | R' | B' | R' | B' | R' | B' | R' | R' | R' |
| R' | R' | R' | G' | G' | G' | R' | B' | R' | B' | R' | B' | R' | R' | R' | G' | G' | G' | B' | B' | B' | G' | B' | G' |
| B' | R' | B' | R' | R' | R' | G' | G' | G' | B' | B' | B' | G' | B' | G' | R' | R' | R' | G' | G' | G' | R' | B' | R' |
| B' | B' | B' | G' | B' | G' | R' | R' | R' | G' | G' | G' | R' | B' | R' | B' | R' | B' | R' | R' | R' | G' | G' | G' |
| G' | G' | G' | R' | B' | R' | B' | R' | B' | R' | R' | R' | G' | G' | G' | B' | B' | B' | G' | B' | G' | R' | R' | R' |
| R' | R' | R' | G' | G' | G' | B' | B' | B' | G' | B' | G' | R' | R' | R' | G' | G' | G' | R' | B' | R' | B' | R' | B' |
| G' | B' | G' | R' | R' | R' | G' | G' | G' | R' | B' | R' | B' | R' | B' | R' | R' | R' | G' | G' | G' | B' | B' | B' |
| R' | B' | R' | B' | R' | B' | R' | R' | R' | G' | G' | G' | B' | B' | B' | G' | B' | G' | R' | R' | R' | G' | G' | G' |
| G' | G' | G' | B' | B' | B' | G' | B' | G' | R' | R' | R' | G' | G' | G' | R' | B' | R' | B' | R' | B' | R' | R' | R' |
| R' | R' | R' | G' | G' | G' | R' | B' | R' | B' | R' | B' | R' | R' | R' | G' | G' | G' | B' | B' | B' | G' | B' | G' |
| B' | R' | B' | R' | R' | R' | G' | G' | G' | B' | B' | B' | G' | B' | G' | R' | R' | R' | G' | G' | G' | R' | B' | R' |
| B' | B' | B' | G' | B' | G' | R' | R' | R' | G' | G' | G' | R' | B' | R' | B' | R' | B' | R' | R' | R' | G' | G' | G' |

Fig.20

| T | T | T | G' | G' | G' | R' | B' | R' | T | T | T | R' | R' | R' | T | T | T | B' | R' | B' | G' | B' | G' |
|---|---|---|----|----|----|----|----|----|---|---|---|----|----|----|---|---|---|----|----|----|----|----|----|
| T | T | T | R' | R' | R' | T | T | T | B' | R' | B' | G' | B' | G' | T | T | T | G' | G' | G' | R' | B' | R' |
| B' | R' | B' | G' | B' | G' | T | T | T | G' | G' | G' | R' | B' | R' | T | T | T | R' | R' | R' | T | T | T |
| G' | G' | G' | R' | B' | R' | T | T | T | R' | R' | R' | T | T | T | B' | R' | B' | G' | B' | G' | T | T | T |
| R' | R' | R' | T | T | T | B' | R' | B' | G' | B' | G' | T | T | T | G' | G' | G' | R' | B' | R' | T | T | T |
| G' | B' | G' | T | T | T | G' | G' | G' | R' | B' | R' | T | T | T | R' | R' | R' | T | T | T | B' | R' | B' |
| R' | B' | R' | T | T | T | R' | R' | R' | T | T | T | B' | R' | B' | G' | B' | G' | T | T | T | G' | G' | G' |
| T | T | T | B' | R' | B' | G' | B' | G' | T | T | T | G' | G' | G' | R' | B' | R' | T | T | T | R' | R' | R' |
| T | T | T | G' | G' | G' | R' | B' | R' | T | T | T | R' | R' | R' | T | T | T | B' | R' | B' | G' | B' | G' |
| T | T | T | R' | R' | R' | T | T | T | B' | R' | B' | G' | B' | G' | T | T | T | G' | G' | G' | R' | B' | R' |
| B' | R' | B' | G' | B' | G' | T | T | T | G' | G' | G' | R' | B' | R' | T | T | T | R' | R' | R' | T | T | T |
| G' | G' | G' | R' | B' | R' | T | T | T | R' | R' | R' | T | T | T | B' | R' | B' | G' | B' | G' | T | T | T |
| R' | R' | R' | T | T | T | B' | R' | B' | G' | B' | G' | T | T | T | G' | G' | G' | R' | B' | R' | T | T | T |
| G' | B' | G' | T | T | T | G' | G' | G' | R' | B' | R' | T | T | T | R' | R' | R' | T | T | T | B' | R' | B' |
| R' | B' | R' | T | T | T | R' | R' | R' | T | T | T | B' | R' | B' | G' | B' | G' | T | T | T | G' | G' | G' |
| T | T | T | B' | R' | B' | G' | B' | G' | T | T | T | G' | G' | G' | R' | B' | R' | T | T | T | R' | R' | R' |
| T | T | T | G' | G' | G' | R' | B' | R' | T | T | T | R' | R' | R' | T | T | T | B' | R' | B' | G' | B' | G' |
| T | T | T | R' | R' | R' | T | T | T | B' | R' | B' | G' | B' | G' | T | T | T | G' | G' | G' | R' | B' | R' |
| B' | R' | B' | G' | B' | G' | T | T | T | G' | G' | G' | R' | B' | R' | T | T | T | R' | R' | R' | T | T | T |
| G' | G' | G' | R' | B' | R' | T | T | T | R' | R' | R' | T | T | T | B' | R' | B' | G' | B' | G' | T | T | T |
| R' | R' | R' | T | T | T | B' | R' | B' | G' | B' | G' | T | T | T | G' | G' | G' | R' | B' | R' | T | T | T |
| G' | B' | G' | T | T | T | G' | G' | G' | R' | B' | R' | T | T | T | R' | R' | R' | T | T | T | B' | R' | B' |
| R' | B' | R' | T | T | T | R' | R' | R' | T | T | T | B' | R' | B' | G' | B' | G' | T | T | T | G' | G' | G' |
| T | T | T | B' | R' | B' | G' | B' | G' | T | T | T | G' | G' | G' | R' | B' | R' | T | T | T | R' | R' | R' |

Fig.21

Fig.22

| G' | G' | G' | R' | B' | R' | B' | R' | B' | R' | R' | R' | G' | G' | G' | B' | S | B' | G' | B' | G' | R' | R' | R' |
|----|----|----|----|----|----|----|----|----|----|----|----|----|----|----|----|----|----|----|----|----|----|----|----|
| R' | R' | R' | G' | G' | G' | B' | S | B' | G' | B' | G' | R' | R' | R' | G' | G' | G' | R' | B' | R' | B' | R' | B' |
| G' | B' | G' | R' | R' | R' | G' | G' | G' | R' | B' | R' | B' | R' | B' | R' | R' | R' | G' | G' | G' | B' | S | B' |
| R' | B' | R' | B' | R' | B' | R' | R' | R' | G' | G' | G' | B' | S | B' | G' | B' | G' | R' | R' | R' | G' | G' | G' |
| G' | G' | G' | B' | S | B' | G' | B' | G' | R' | R' | R' | G' | G' | G' | R' | B' | R' | B' | R' | B' | R' | R' | R' |
| R' | R' | R' | G' | G' | G' | R' | B' | R' | B' | R' | B' | R' | R' | R' | G' | G' | G' | B' | S | B' | G' | B' | G' |
| B' | R' | B' | R' | R' | R' | G' | G' | G' | B' | S | B' | G' | B' | G' | R' | R' | R' | G' | G' | G' | R' | B' | R' |
| B' | S | B' | G' | B' | G' | R' | R' | R' | G' | G' | G' | R' | B' | R' | B' | R' | B' | R' | R' | R' | G' | G' | G' |
| G' | G' | G' | R' | B' | R' | B' | R' | B' | R' | R' | R' | G' | G' | G' | B' | S | B' | G' | B' | G' | R' | R' | R' |
| R' | R' | R' | G' | G' | G' | B' | S | B' | G' | B' | G' | R' | R' | R' | G' | G' | G' | R' | B' | R' | B' | R' | B' |
| G' | B' | G' | R' | R' | R' | G' | G' | G' | R' | B' | R' | B' | R' | B' | R' | R' | R' | G' | G' | G' | B' | S | B' |
| R' | B' | R' | B' | R' | B' | R' | R' | R' | G' | G' | G' | B' | S | B' | G' | B' | G' | R' | R' | R' | G' | G' | G' |
| G' | G' | G' | B' | S | B' | G' | B' | G' | R' | R' | R' | G' | G' | G' | R' | B' | R' | B' | R' | B' | R' | R' | R' |
| R' | R' | R' | G' | G' | G' | R' | B' | R' | B' | R' | B' | R' | R' | R' | G' | G' | G' | B' | S | B' | G' | B' | G' |
| B' | R' | B' | R' | R' | R' | G' | G' | G' | B' | S | B' | G' | B' | G' | R' | R' | R' | G' | G' | G' | R' | B' | R' |
| B' | S | B' | G' | B' | G' | R' | R' | R' | G' | G' | G' | R' | B' | R' | B' | R' | B' | R' | R' | R' | G' | G' | G' |
| G' | G' | G' | R' | B' | R' | B' | R' | B' | R' | R' | R' | G' | G' | G' | B' | S | B' | G' | B' | G' | R' | R' | R' |
| R' | R' | R' | G' | G' | G' | B' | S | B' | G' | B' | G' | R' | R' | R' | G' | G' | G' | R' | B' | R' | B' | R' | B' |
| G' | B' | G' | R' | R' | R' | G' | G' | G' | R' | B' | R' | B' | R' | B' | R' | R' | R' | G' | G' | G' | B' | S | B' |
| R' | B' | R' | B' | R' | B' | R' | R' | R' | G' | G' | G' | B' | S | B' | G' | B' | G' | R' | R' | R' | G' | G' | G' |
| G' | G' | G' | B' | S | B' | G' | B' | G' | R' | R' | R' | G' | G' | G' | R' | B' | R' | B' | R' | B' | R' | R' | R' |
| R' | R' | R' | G' | G' | G' | R' | B' | R' | B' | R' | B' | R' | R' | R' | G' | G' | G' | B' | S | B' | G' | B' | G' |
| B' | R' | B' | R' | R' | R' | G' | G' | G' | B' | S | B' | G' | B' | G' | R' | R' | R' | G' | G' | G' | R' | B' | R' |
| B' | S | B' | G' | B' | G' | R' | R' | R' | G' | G' | G' | R' | B' | R' | B' | R' | B' | R' | R' | R' | G' | G' | G' |

Fig.23

Fig.24

Fig.25

B

| 18 |
| 19 |
| 20 |
| 21 |

| 22 |

Fig.26

| 18 |
| 19 |
| 20 |
| 23 |
| 21 |

| 22 |

Fig.27

Fig.28

Ansicht in Richtung B

Fig.29

Fig.30

Ansicht in Richtung B

Fig.31

Zum Parametersatz $a_3$=-1,5   $a_2$=2   $a_1$=0,5   $a_0$=0

Fig.32

Zum Parametersatz $a_2$=1

Fig.33

Zum Parametersatz $a_3=1$   $a_2=-0,5$   $a_1=0,5$   $a_0=0$

Fig.34

Zum Parametersatz $a_3=0$   $a_2=-4$   $a_1=4$   $a_0=0$

Fig.35

Fig.36

EP 1 689 162 A2

Fig.37

Fig.38

p →

| q | 1 | 2 | 3 | 4 | 5 | 6 | 7 | 8 | 9 | 10 | 11 | 12 | 13 | 14 | 15 | 16 |
|---|---|---|---|---|---|---|---|---|---|----|----|----|----|----|----|----|
| 1 | L2 | L0 | L0 | L0 | L0 | L0 | L2 | L4 | L2 | L0 | L0 | L0 | L0 | L0 | L2 | L4 |
| 2 | L0 | L0 | L0 | L0 | L0 | L2 | L4 | L2 | L0 | L0 | L0 | L0 | L0 | L2 | L4 | L2 |
| 3 | L0 | L0 | L0 | L0 | L2 | L4 | L2 | L0 | L0 | L0 | L0 | L0 | L2 | L4 | L2 | L0 |
| 4 | L0 | L0 | L0 | L2 | L4 | L2 | L0 | L0 | L0 | L0 | L0 | L2 | L4 | L2 | L0 | L0 |
| 5 | L0 | L0 | L2 | L4 | L2 | L0 | L0 | L0 | L0 | L0 | L2 | L4 | L2 | L0 | L0 | L0 |
| 6 | L0 | L2 | L4 | L2 | L0 | L0 | L0 | L0 | L0 | L2 | L4 | L2 | L0 | L0 | L0 | L0 |
| 7 | L2 | L4 | L2 | L0 | L0 | L0 | L0 | L0 | L2 | L4 | L2 | L0 | L0 | L0 | L0 | L0 |
| 8 | L4 | L2 | L0 | L0 | L0 | L0 | L0 | L2 | L4 | L2 | L0 | L0 | L0 | L0 | L0 | L2 |
| 9 | L2 | L0 | L0 | L0 | L0 | L0 | L2 | L4 | L2 | L0 | L0 | L0 | L0 | L0 | L2 | L4 |
| 10 | L0 | L0 | L0 | L0 | L0 | L2 | L4 | L2 | L0 | L0 | L0 | L0 | L0 | L2 | L4 | L2 |
| 11 | L0 | L0 | L0 | L0 | L2 | L4 | L2 | L0 | L0 | L0 | L0 | L0 | L2 | L4 | L2 | L0 |
| 12 | L0 | L0 | L0 | L2 | L4 | L2 | L0 | L0 | L0 | L0 | L0 | L2 | L4 | L2 | L0 | L0 |
| 13 | L0 | L0 | L2 | L4 | L2 | L0 | L0 | L0 | L0 | L0 | L2 | L4 | L2 | L0 | L0 | L0 |
| 14 | L0 | L2 | L4 | L2 | L0 | L0 | L0 | L0 | L0 | L2 | L4 | L2 | L0 | L0 | L0 | L0 |
| 15 | L2 | L4 | L2 | L0 | L0 | L0 | L0 | L0 | L2 | L4 | L2 | L0 | L0 | L0 | L0 | L0 |
| 16 | L4 | L2 | L0 | L0 | L0 | L0 | L0 | L2 | L4 | L2 | L0 | L0 | L0 | L0 | L0 | L2 |

Fig.39

p →

| q | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 1 | L2 | L0 | L0 | L0 | L0 | L0 | L2 | G' | L2 | L0 | L0 | L0 | L0 | L0 | L2 | R' |
| 2 | L0 | L0 | L0 | L0 | L0 | L2 | R' | L2 | L0 | L0 | L0 | L0 | L0 | L2 | B' | L2 |
| 3 | L0 | L0 | L0 | L0 | L2 | B' | L2 | L0 | L0 | L0 | L0 | L0 | L2 | G' | L2 | L0 |
| 4 | L0 | L0 | L0 | L2 | G' | L2 | L0 | L0 | L0 | L0 | L0 | L2 | R' | L2 | L0 | L0 |
| 5 | L0 | L0 | L2 | R' | L2 | L0 | L0 | L0 | L0 | L0 | L2 | B' | L2 | L0 | L0 | L0 |
| 6 | L0 | L2 | B' | L2 | L0 | L0 | L0 | L0 | L0 | L2 | G' | L2 | L0 | L0 | L0 | L0 |
| 7 | L2 | G' | L2 | L0 | L0 | L0 | L0 | L0 | L2 | R' | L2 | L0 | L0 | L0 | L0 | L0 |
| 8 | R' | L2 | L0 | L0 | L0 | L0 | L0 | L2 | B' | L2 | L0 | L0 | L0 | L0 | L0 | L2 |
| 9 | L2 | L0 | L0 | L0 | L0 | L0 | L2 | G' | L2 | L0 | L0 | L0 | L0 | L0 | L2 | R' |
| 10 | L0 | L0 | L0 | L0 | L0 | L2 | R' | L2 | L0 | L0 | L0 | L0 | L0 | L2 | B' | L2 |
| 11 | L0 | L0 | L0 | L0 | L2 | B' | L2 | L0 | L0 | L0 | L0 | L0 | L2 | G' | L2 | L0 |
| 12 | L0 | L0 | L0 | L2 | G' | L2 | L0 | L0 | L0 | L0 | L0 | L2 | R' | L2 | L0 | L0 |
| 13 | L0 | L0 | L2 | R' | L2 | L0 | L0 | L0 | L0 | L0 | L2 | B' | L2 | L0 | L0 | L0 |
| 14 | L0 | L2 | B' | L2 | L0 | L0 | L0 | L0 | L0 | L2 | G' | L2 | L0 | L0 | L0 | L0 |
| 15 | L2 | G' | L2 | L0 | L0 | L0 | L0 | L0 | L2 | R' | L2 | L0 | L0 | L0 | L0 | L0 |
| 16 | R' | L2 | L0 | L0 | L0 | L0 | L0 | L2 | B' | L2 | L0 | L0 | L0 | L0 | L0 | L2 |

Fig.40

72

| | R | G | B | R | G | B | R | G | B | R | G | B | R | G |
|---|---|---|---|---|---|---|---|---|---|---|---|---|---|---|
| i→ | 1 | 2 | 3 | 4 | 5 | 6 | 7 | 8 | 9 | 10 | 11 | 12 | 13 | 14 |
| j 1 | 7 | 11 | 15 | 19 | 23 | 27 | 31 | 35 | 39 | 3 | 7 | 11 | 15 | 19 |
| 2 | 10 | 14 | 18 | 22 | 26 | 30 | 34 | 38 | 2 | 6 | 10 | 14 | 18 | 22 |
| 3 | 13 | 17 | 21 | 25 | 29 | 33 | 37 | 1 | 5 | 9 | 13 | 17 | 21 | 25 |
| 4 | 16 | 20 | 24 | 28 | 32 | 36 | 40 | 4 | 8 | 12 | 16 | 20 | 24 | 28 |
| 5 | 19 | 23 | 27 | 31 | 35 | 39 | 3 | 7 | 11 | 15 | 19 | 23 | 27 | 31 |
| 6 | 22 | 26 | 30 | 34 | 38 | 2 | 6 | 10 | 14 | 18 | 22 | 26 | 30 | 34 |
| 7 | 25 | 29 | 33 | 37 | 1 | 5 | 9 | 13 | 17 | 21 | 25 | 29 | 33 | 37 |
| 8 | 28 | 32 | 36 | 40 | 4 | 8 | 12 | 16 | 20 | 24 | 28 | 32 | 36 | 40 |
| 9 | 31 | 35 | 39 | 3 | 7 | 11 | 15 | 19 | 23 | 27 | 31 | 35 | 39 | 3 |
| 10 | 34 | 38 | 2 | 6 | 10 | 14 | 18 | 22 | 26 | 30 | 34 | 38 | 2 | 6 |
| 11 | 37 | 1 | 5 | 9 | 13 | 17 | 21 | 25 | 29 | 33 | 37 | 1 | 5 | 9 |
| 12 | 40 | 4 | 8 | 12 | 16 | 20 | 24 | 28 | 32 | 36 | 40 | 4 | 8 | 12 |
| 13 | 3 | 7 | 11 | 15 | 19 | 23 | 27 | 31 | 35 | 39 | 3 | 7 | 11 | 15 |
| 14 | 6 | 10 | 14 | 18 | 22 | 26 | 30 | 34 | 38 | 2 | 6 | 10 | 14 | 18 |
| 15 | 9 | 13 | 17 | 21 | 25 | 29 | 33 | 37 | 1 | 5 | 9 | 13 | 17 | 21 |
| 16 | 12 | 16 | 20 | 24 | 28 | 32 | 36 | 40 | 4 | 8 | 12 | 16 | 20 | 24 |
| 17 | 15 | 19 | 23 | 27 | 31 | 35 | 39 | 3 | 7 | 11 | 15 | 19 | 23 | 27 |
| 18 | 18 | 22 | 26 | 30 | 34 | 38 | 2 | 6 | 10 | 14 | 18 | 22 | 26 | 30 |
| 19 | 21 | 25 | 29 | 33 | 37 | 1 | 5 | 9 | 13 | 17 | 21 | 25 | 29 | 33 |
| 20 | 24 | 28 | 32 | 36 | 40 | 4 | 8 | 12 | 16 | 20 | 24 | 28 | 32 | 36 |
| 21 | 27 | 31 | 35 | 39 | 3 | 7 | 11 | 15 | 19 | 23 | 27 | 31 | 35 | 39 |
| 22 | 30 | 34 | 38 | 2 | 6 | 10 | 14 | 18 | 22 | 26 | 30 | 34 | 38 | 2 |
| 23 | 33 | 37 | 1 | 5 | 9 | 13 | 17 | 21 | 25 | 29 | 33 | 37 | 1 | 5 |
| 24 | 36 | 40 | 4 | 8 | 12 | 16 | 20 | 24 | 28 | 32 | 36 | 40 | 4 | 8 |
| 25 | 39 | 3 | 7 | 11 | 15 | 19 | 23 | 27 | 31 | 35 | 39 | 3 | 7 | 11 |
| 26 | 2 | 6 | 10 | 14 | 18 | 22 | 26 | 30 | 34 | 38 | 2 | 6 | 10 | 14 |
| 27 | 5 | 9 | 13 | 17 | 21 | 25 | 29 | 33 | 37 | 1 | 5 | 9 | 13 | 17 |
| 28 | 8 | 12 | 16 | 20 | 24 | 28 | 32 | 36 | 40 | 4 | 8 | 12 | 16 | 20 |

Fig.41

Fig.42

|    | R  | G  | B  | R  | G  | B  | R  | G  | B  | R  | G  | B  | R  | G  |
|----|----|----|----|----|----|----|----|----|----|----|----|----|----|----|
| 16 | 29 | 34 | 39 | 4  | 9  | 14 | 19 | 24 | 29 | 34 | 39 | 4  | 9  | 14 |
| 15 | 25 | 30 | 35 | 40 | 5  | 10 | 15 | 20 | 25 | 30 | 35 | 40 | 5  | 10 |
| 14 | 21 | 26 | 31 | 36 | 1  | 6  | 11 | 16 | 21 | 26 | 31 | 36 | 1  | 6  |
| 13 | 17 | 22 | 27 | 32 | 37 | 2  | 7  | 12 | 17 | 22 | 27 | 32 | 37 | 2  |
| 12 | 13 | 18 | 23 | 28 | 33 | 38 | 3  | 8  | 13 | 18 | 23 | 28 | 33 | 38 |
| 11 | 9  | 14 | 19 | 24 | 29 | 34 | 39 | 4  | 9  | 14 | 19 | 24 | 29 | 34 |
| 10 | 5  | 10 | 15 | 20 | 25 | 30 | 35 | 40 | 5  | 10 | 15 | 20 | 25 | 30 |
| 9  | 1  | 6  | 11 | 16 | 21 | 26 | 31 | 36 | 1  | 6  | 11 | 16 | 21 | 26 |
| 8  | 37 | 2  | 7  | 12 | 17 | 22 | 27 | 32 | 37 | 2  | 7  | 12 | 17 | 22 |
| 7  | 33 | 38 | 3  | 8  | 13 | 18 | 23 | 28 | 33 | 38 | 3  | 8  | 13 | 18 |
| 6  | 29 | 34 | 39 | 4  | 9  | 14 | 19 | 24 | 29 | 34 | 39 | 4  | 9  | 14 |
| 5  | 25 | 30 | 35 | 40 | 5  | 10 | 15 | 20 | 25 | 30 | 35 | 40 | 5  | 10 |
| 4  | 21 | 26 | 31 | 36 | 1  | 6  | 11 | 16 | 21 | 26 | 31 | 36 | 1  | 6  |
| 3  | 17 | 22 | 27 | 32 | 37 | 2  | 7  | 12 | 17 | 22 | 27 | 32 | 37 | 2  |
| 2  | 13 | 18 | 23 | 28 | 33 | 38 | 3  | 8  | 13 | 18 | 23 | 28 | 33 | 38 |
| 1  | 9  | 14 | 19 | 24 | 29 | 34 | 39 | 4  | 9  | 14 | 19 | 24 | 29 | 34 |

j

i → 1  2  3  4  5  6  7  8  9  10  11  12  13  14

Fig. 43

Fig. 44

Fig. 45

| 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|
| T | T | T | T | T | G' | G' | G' | G' | G' | S | S | S | S | S |
| B' | B' | B' | B' | T | T | T | T | T | B' | B' | B' | B' | B' | S |
| S | S | S | R' | R' | R' | R' | R' | T | T | T | T | T | R' | R' |
| S | S | S | S | S | S | S | G' | G' | G' | G' | G' | T | T | T |
| S | S | S | S | S | S | S | S | S | S | S | B' | B' | B' | B' |
| S | S | S | S | S | S | S | S | S | S | S | S | S | S | S |
| S | S | S | S | S | S | S | S | S | S | S | S | S | S | S |
| S | S | S | S | S | S | S | S | S | S | S | S | S | S | S |
| S | S | S | S | S | S | S | S | S | S | S | S | S | S | S |
| S | S | S | S | S | S | S | S | S | S | S | S | S | S | S |
| S | S | S | S | S | S | S | S | S | S | S | S | S | S | S |

Fig.46 (Folge 1)

| 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|
| S | S | S | S | S | S | S | S | S | S | S | S | S | S | S |
| S | S | S | S | S | S | S | S | S | S | S | S | S | S | S |
| R' | R' | R' | S | S | S | S | S | S | S | S | S | S | S | S |
| T | T | G' | G' | G' | G' | G' | S | S | S | S | S | S | S | S |
| B' | T | T | T | T | T | B' | B' | B' | B' | B' | S | S | S | S |
| B' | B' | B' | B' | B' | T | T | T | T | T | B' | B' | B' | B' | B' |
| S | S | S | S | R' | R' | R' | R' | R' | T | T | T | T | T | R' |
| S | S | S | S | S | S | S | S | G' | G' | G' | G' | G' | T | T |
| S | S | S | S | S | S | S | S | S | S | S | S | B' | B' | B' |
| S | S | S | S | S | S | S | S | S | S | S | S | S | S | S |
| S | S | S | S | S | S | S | S | S | S | S | S | S | S | S |
| S | S | S | S | S | S | S | S | S | S | S | S | S | S | S |

Fig.46 (Folge 2)

| 31 | 32 | 33 | 34 | 35 | 36 | 37 | 38 | 39 | 40 | 41 | 42 | 43 | 44 | 45 |
|---|---|---|---|---|---|---|---|---|---|---|---|---|---|---|
| S | S | S | S | S | R' | R' | R' | R' | R' | T | T | T | T | T |
| S | S | S | S | S | S | S | S | S | G' | G' | G' | G' | G' | T |
| S | S | S | S | S | S | S | S | S | S | S | S | S | B' | B' |
| S | S | S | S | S | S | S | S | S | S | S | S | S | S | S |
| S | S | S | S | S | S | S | S | S | S | S | S | S | S | S |
| S | S | S | S | S | S | S | S | S | S | S | S | S | S | S |
| R' | R' | R' | R' | S | S | S | S | S | S | S | S | S | S | S |
| T | T | T | G' | G' | G' | G' | G' | S | S | S | S | S | S | S |
| B' | B' | T | T | T | T | T | B' | B' | B' | B' | B' | S | S | S |
| S | R' | R' | R' | R' | R' | T | T | T | T | T | R' | R' | R' | R' |
| S | S | S | S | S | R' | R' | R' | R' | R' | T | T | T | T | T |
| S | S | S | S | S | S | S | S | S | G' | G' | G' | G' | G' | T |

Fig.46 (Folge 3)

| 46 | 47 | 48 | 49 | 50 | 51 | 52 | 53 | 54 | 55 | 56 | 57 | 58 | 59 | 60 |
|---|---|---|---|---|---|---|---|---|---|---|---|---|---|---|
| R' | R' | R' | R' | R' | S | S | S | S | S | S | S | S | S | S |
| T | T | T | T | G' | G' | G' | G' | G' | S | S | S | S | S | S |
| B' | B' | B' | T | T | T | T | T | B' | B' | B' | B' | B' | S | S |
| S | S | R' | R' | R' | R' | R' | T | T | T | T | T | R' | R' | R' |
| S | S | S | S | S | S | G' | G' | G' | G' | G' | T | T | T | T |
| S | S | S | S | S | S | S | S | S | S | G' | G' | G' | G' | G' |
| S | S | S | S | S | S | S | S | S | S | S | S | S | S | B' |
| S | S | S | S | S | S | S | S | S | S | S | S | S | S | S |
| R' | S | S | S | S | S | S | S | S | S | S | S | S | S | S |
| R' | R' | R' | R' | R' | S | S | S | S | S | S | S | S | S | S |
| T | T | T | T | G' | G' | G' | G' | G' | S | S | S | S | S | S |

Fig.46 (Folge 4)

| 61 | 62 | 63 | 64 | 65 | 66 | 67 | 68 | 69 | 70 | 71 | 72 | 73 | 74 | 75 |
|----|----|----|----|----|----|----|----|----|----|----|----|----|----|----|
| S  | S  | S  | S  | S  | S  | S  | S  | S  | S  | S  | S  | S  | S  | S  |
| S  | S  | S  | S  | S  | S  | S  | S  | S  | S  | S  | S  | S  | S  | S  |
| S  | S  | S  | S  | S  | S  | S  | S  | S  | S  | S  | S  | S  | S  | S  |
| R' | R' | S  | S  | S  | S  | S  | S  | S  | S  | S  | S  | S  | S  | S  |
| T  | G' | G' | G' | G' | G' | S  | S  | S  | S  | S  | S  | S  | S  | S  |
| T  | T  | T  | T  | T  | G' | G' | G' | G' | G' | S  | S  | S  | S  | S  |
| B' | B' | B' | B' | T  | T  | T  | T  | T  | B' | B' | B' | B' | B' | S  |
| S  | S  | S  | R' | R' | R' | R' | R' | T  | T  | T  | T  | T  | R' | R' |
| S  | S  | S  | S  | S  | S  | S  | G' | G' | G' | G' | G' | T  | T  | T  |
| S  | S  | S  | S  | S  | S  | S  | S  | S  | S  | S  | B' | B' | B' | B' |
| S  | S  | S  | S  | S  | S  | S  | S  | S  | S  | S  | S  | S  | S  | S  |
| S  | S  | S  | S  | S  | S  | S  | S  | S  | S  | S  | S  | S  | S  | S  |

Fig.46 (Folge 5)

| 76 | 77 | 78 | 79 | 80 | 81 | 82 | 83 | 84 | 85 | 86 | 87 | 88 | 89 | 90 |
|----|----|----|----|----|----|----|----|----|----|----|----|----|----|----|
| B' | B' | B' | B' | B' | T  | T  | T  | T  | T  | B' | B' | B' | B' | B' |
| S  | S  | S  | S  | R' | R' | R' | R' | R' | T  | T  | T  | T  | T  | R' |
| S  | S  | S  | S  | S  | S  | S  | S  | G' | G' | G' | G' | G' | T  | T  |
| S  | S  | S  | S  | S  | S  | S  | S  | S  | S  | S  | S  | B' | B' | B' |
| S  | S  | S  | S  | S  | S  | S  | S  | S  | S  | S  | S  | S  | S  | S  |
| S  | S  | S  | S  | S  | S  | S  | S  | S  | S  | S  | S  | S  | S  | S  |
| S  | S  | S  | S  | S  | S  | S  | S  | S  | S  | S  | S  | S  | S  | S  |
| R' | R' | R' | S  | S  | S  | S  | S  | S  | S  | S  | S  | S  | S  | S  |
| T  | T  | G' | G' | G' | G' | G' | S  | S  | S  | S  | S  | S  | S  | S  |
| B' | T  | T  | T  | T  | T  | B' | B' | B' | B' | B' | S  | S  | S  | S  |
| B' | B' | B' | B' | B' | T  | T  | T  | T  | T  | B' | B' | B' | B' | B' |
| S  | S  | S  | S  | R' | R' | R' | R' | R' | T  | T  | T  | T  | T  | R' |

Fig.46 (Folge 6)

| 91 | 92 | 93 | 94 | 95 | 96 | 97 | 98 | 99 | 100 | 101 | 102 | 103 | 104 | 105 |
|----|----|----|----|----|----|----|----|----|-----|-----|-----|-----|-----|-----|
| S | S | S | S | S | S | S | S | S | S | S | S | S | S | S |
| R' | R' | R' | R' | S | S | S | S | S | S | S | S | S | S | S |
| T | T | T | G' | G' | G' | G' | G' | S | S | S | S | S | S | S |
| B' | B' | T | T | T | T | T | B' | B' | B' | B' | B' | S | S | S |
| S | R' | R' | R' | R' | R' | T | T | T | T | T | R' | R' | R' | R' |
| S | S | S | S | S | R' | R' | R' | R' | R' | T | T | T | T | T |
| S | S | S | S | S | S | S | S | S | G' | G' | G' | G' | G' | T |
| S | S | S | S | S | S | S | S | S | S | S | S | S | B' | 0 |
| S | S | S | S | S | S | S | S | S | S | S | S | S | S | S |
| S | S | S | S | S | S | S | S | S | S | S | S | S | S | S |
| S | S | S | S | S | S | S | S | S | S | S | S | S | S | S |
| R' | R' | R' | R' | S | S | S | S | S | S | S | S | S | S | S |

Fig.46 (Folge 7)

| 106 | 107 | 108 | 109 | 110 | 111 | 112 | 113 | 114 | 115 | 116 | 117 | 118 | 119 | 120 |
|-----|-----|-----|-----|-----|-----|-----|-----|-----|-----|-----|-----|-----|-----|-----|
| S | S | S | S | S | S | S | S | S | S | G' | G' | G' | G' | G' |
| S | S | S | S | S | S | S | S | S | S | S | S | S | S | B' |
| S | S | S | S | S | S | S | S | S | S | S | S | S | S | S |
| S | S | S | S | S | S | S | S | S | S | S | S | S | S | S |
| R' | S | S | S | S | S | S | S | S | S | S | S | S | S | S |
| R' | R' | R' | R' | R' | S | S | S | S | S | S | S | S | S | S |
| T | T | T | T | G' | G' | G' | G' | G' | S | S | S | S | S | S |
| B' | B' | B' | T | T | T | T | T | B' | B' | B' | B' | B' | S | S |
| S | S | R' | R' | R' | R' | R' | T | T | T | T | T | R' | R' | R' |
| S | S | S | S | S | S | G' | G' | G' | G' | G' | T | T | T | T |
| S | S | S | S | S | S | S | S | S | S | B' | B' | B' | B' | B' |
| S | S | S | S | S | S | S | S | S | S | S | S | S | S | B' |

Fig.46 (Folge 8)

| i \ j | 1 (R) | 2 (G) | 3 (B) | 4 (R) | 5 (G) | 6 (B) | 7 (R) | 8 (G) | 9 (B) | 10 (R) | 11 (G) | 12 (B) | 13 (R) | 14 (G) | 15 (B) | 16 (R) | 17 (G) | 18 (B) | 19 (R) | 20 (G) | 21 (B) |
|---|---|---|---|---|---|---|---|---|---|---|---|---|---|---|---|---|---|---|---|---|---|
| 1 | 1 | 1 | 2 | 3 | 3 | 4 | 5 | 5 | 6 | 7 | 7 | 8 | 1 | 1 | 2 | 3 | 3 | 4 | 5 | 5 | 6 |
| 2 | 1 | 2 | 3 | 3 | 4 | 5 | 5 | 6 | 7 | 7 | 8 | 1 | 1 | 2 | 3 | 3 | 4 | 5 | 5 | 6 | 7 |
| 3 | 2 | 3 | 3 | 4 | 5 | 5 | 6 | 7 | 7 | 8 | 1 | 1 | 2 | 3 | 3 | 4 | 5 | 5 | 6 | 7 | 7 |
| 4 | 3 | 3 | 4 | 5 | 5 | 6 | 7 | 7 | 8 | 1 | 1 | 2 | 3 | 3 | 4 | 5 | 5 | 6 | 7 | 7 | 8 |
| 5 | 3 | 4 | 5 | 5 | 6 | 7 | 7 | 8 | 1 | 1 | 2 | 3 | 3 | 4 | 5 | 5 | 6 | 7 | 7 | 8 | 1 |
| 6 | 4 | 5 | 5 | 6 | 7 | 7 | 8 | 1 | 1 | 2 | 3 | 3 | 4 | 5 | 5 | 6 | 7 | 7 | 8 | 1 | 1 |
| 7 | 5 | 5 | 6 | 7 | 7 | 8 | 1 | 1 | 2 | 3 | 3 | 4 | 5 | 5 | 6 | 7 | 7 | 8 | 1 | 1 | 2 |
| 8 | 5 | 6 | 7 | 7 | 8 | 1 | 1 | 2 | 3 | 3 | 4 | 5 | 5 | 6 | 7 | 7 | 8 | 1 | 1 | 2 | 3 |
| 9 | 6 | 7 | 7 | 8 | 1 | 1 | 2 | 3 | 3 | 4 | 5 | 5 | 6 | 7 | 7 | 8 | 1 | 1 | 2 | 3 | 3 |
| 10 | 7 | 7 | 8 | 1 | 1 | 2 | 3 | 3 | 4 | 5 | 5 | 6 | 7 | 7 | 8 | 1 | 1 | 2 | 3 | 3 | 4 |
| 11 | 7 | 8 | 1 | 1 | 2 | 3 | 3 | 4 | 5 | 5 | 6 | 7 | 7 | 8 | 1 | 1 | 2 | 3 | 3 | 4 | 5 |
| 12 | 8 | 1 | 1 | 2 | 3 | 3 | 4 | 5 | 5 | 6 | 7 | 7 | 8 | 1 | 1 | 2 | 3 | 3 | 4 | 5 | 5 |
| 13 | 1 | 1 | 2 | 3 | 3 | 4 | 5 | 5 | 6 | 7 | 7 | 8 | 1 | 1 | 2 | 3 | 3 | 4 | 5 | 5 | 6 |
| 14 | 1 | 2 | 3 | 3 | 4 | 5 | 5 | 6 | 7 | 7 | 8 | 1 | 1 | 2 | 3 | 3 | 4 | 5 | 5 | 6 | 7 |
| 15 | 2 | 3 | 3 | 4 | 5 | 5 | 6 | 7 | 7 | 8 | 1 | 1 | 2 | 3 | 3 | 4 | 5 | 5 | 6 | 7 | 7 |
| 16 | 3 | 3 | 4 | 5 | 5 | 6 | 7 | 7 | 8 | 1 | 1 | 2 | 3 | 3 | 4 | 5 | 5 | 6 | 7 | 7 | 8 |

Fig. 47

| p→ | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| q 1 | R' | T | S | S | S | S | S | S | S | S | S | S | R' | T | S | S | S | S | S | S | S |
| 2 | T | S | S | S | S | S | S | S | S | S | S | B' | T | S | S | S | S | S | S | S | S |
| 3 | S | S | S | S | S | S | S | S | S | S | G' | T | S | S | S | S | S | S | S | S | S |
| 4 | S | S | S | S | S | S | S | S | S | R' | T | S | S | S | S | S | S | S | S | S | S |
| 5 | S | S | S | S | S | S | S | S | B' | T | S | S | S | S | S | S | S | S | S | S | B' |
| 6 | S | S | S | S | S | S | S | G' | T | S | S | S | S | S | S | S | S | S | S | G' | T |
| 7 | S | S | S | S | S | S | R' | T | S | S | S | S | S | S | S | S | S | S | R' | T | S |
| 8 | S | S | S | S | S | B' | T | S | S | S | S | S | S | S | S | S | S | B' | T | S | S |
| 9 | S | S | S | S | G' | T | S | S | S | S | S | S | S | S | S | S | G' | T | S | S | S |
| 10 | S | S | S | R' | T | S | S | S | S | S | S | S | S | S | S | R' | T | S | S | S | S |
| 11 | S | S | B' | T | S | S | S | S | S | S | S | S | S | S | B' | T | S | S | S | S | S |
| 12 | S | G' | T | S | S | S | S | S | S | S | S | S | S | G' | T | S | S | S | S | S | S |
| 13 | R' | T | S | S | S | S | S | S | S | S | S | S | R' | T | S | S | S | S | S | S | S |
| 14 | T | S | S | S | S | S | S | S | S | S | S | B' | T | S | S | S | S | S | S | S | S |
| 15 | S | S | S | S | S | S | S | S | S | G' | T | S | S | S | S | S | S | S | S | S | S |
| 16 | S | S | S | S | S | S | S | S | S | R' | T | S | S | S | S | S | S | S | S | S | S |

Fig. 48

EP 1 689 162 A2

Fig. 49a          Fig. 49b          Fig. 49c

Fig.50

35

36

37

38

39

Fig.51

Fig.52